(19) Europäisches Patentamt
European Patent Office
Office européen des brevets

(11) EP 2 862 023 B1

# (12) EUROPEAN PATENT SPECIFICATION

(45) Date of publication and mention of the grant of the patent:
**28.09.2016 Bulletin 2016/39**

(21) Application number: **13804762.6**

(22) Date of filing: **13.06.2013**

(51) Int Cl.:
***G02F 1/09*** (2006.01) ***G02F 1/167*** (2006.01)
***G03G 17/04*** (2006.01) ***B41J 3/407*** (2006.01)

(86) International application number:
**PCT/JP2013/066900**

(87) International publication number:
**WO 2013/187531 (19.12.2013 Gazette 2013/51)**

## (54) RECORDING MEDIUM, IMAGE RECORDING DEVICE, AND IMAGE RECORDING SET

AUFZEICHNUNGSMEDIUM, BILDAUFZEICHNUNGSVORRICHTUNG UND BILDAUFZEICHNUNGSSATZ

SUPPORT D'ENREGISTREMENT, DISPOSITIF D'ENREGISTREMENT D'IMAGES, ET ENSEMBLE ENREGISTREMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2012 JP 2012136262**
**12.04.2013 JP 2013084406**

(43) Date of publication of application:
**22.04.2015 Bulletin 2015/17**

(73) Proprietor: **Ricoh Company, Ltd.**
**Tokyo 143-8555 (JP)**

(72) Inventors:
- **TAMOTO, Nozomu**
**Ohta-ku, Tokyo, 143-8555 (JP)**
- **YAMASHITA, Daiki**
**Ohta-ku, Tokyo, 143-8555 (JP)**

(74) Representative: **Lamb, Martin John Carstairs**
**Marks & Clerk LLP**
**90 Long Acre**
**London WC2E 9RA (GB)**

(56) References cited:
**EP-A2- 1 236 785** **JP-A- 2002 296 624**
**JP-A- 2007 011 342** **JP-A- 2007 187 789**
**JP-A- 2007 254 526** **JP-A- 2007 256 890**
**JP-A- 2010 085 966** **JP-A- 2011 099 948**
**JP-A- 2012 215 835** **JP-A- 2013 015 560**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 862 023 B1

Printed by Jouve, 75001 PARIS (FR)

## Description

Technical Field

The present invention relates to a recording medium to which recording is performed by an image recording device that externally drives the recording medium, and relates to an image recording device, and an image recording set.

Background Art

In recent years, electronic paper that has visibility and portability close to that of a printed material, does not require a backlight, and is low in power consumption, thin, and lightweight, has been put into practical use and gained attention. Electronic paper is classified into internally-driven paper-like display (hereinafter referred to as PLD) that includes a drive element inside and can display images by itself, and externally-driven rewritable paper using a recording medium on which writing is performed by a printer. The rewritable paper includes all recording media such as paper and sheets on which rewriting can be repeatedly performed, and is synonymous with a rewritable recording medium included in the present invention.

Various systems of electronic paper have been proposed, and among them, as a PLD, an electrophoretic system, that performs display by changing an optical reflectance by causing white and/or colored particles charged in a liquid to migrate to the surface side or the opposite direction of a display medium by an electric field is known as a most practical system. As a example of the electronic paper of such system, disclosed are a display or recording device, in which an electric field is applied to a mixed multi particle dispersion containing particles that migrate in opposite directions depending on the electric field, to optically shield certain particles, to thereby change optical reflection characteristics of the dispersion system (see PTL 1), and an electrophoretic display device, in which a large number of microcapsules each encapsulating a dispersion system obtained by dispersing electrophoretic particles in a colored dispersion medium is provided between a pair of counter electrode plates (see PTL 2). Furthermore, known is an ink, in which an electric field is applied to microcapsules each containing first particles and second particles having reverse polarity to that of the first particles to thereby migrate either the first or second particles to the surface (see PTL 3). As described above, the electrophoretic system, particularly a microcapsule electrophoretic system, has been already been put into practical use as electronic paper, and has gained much attention.

Meanwhile, a method, in which appropriately regulated cells, so-called micro cups, are provided on a film, and a dispersion system containing electrophoretic particles is encapsulated in each cell (see PTL 4) is a method containing forming a layer of a precursor of a thermoplastic material or thermoset material, performing an emboss process with embossing, and then curing. Since the production can be carried out with a roll- to-roll process in this method, this is an excellent method in view of low cost production.

These electrophoretic electronic papers can retain displayed content without requiring electric power after displaying the content once, and this is recognized as one of the advantages, however, there are problems in image retentiveness because if an image is left without application of an electric field after it is displayed, the image density changes with time, and if the image is influenced by static electricity and pressure, from the outside, the image quality is deteriorated.

To solve these problems, for example, a method for controlling a solubility parameter in a dispersion medium by making walls of microcapsules from a graft copolymer (see PTL 5) and a method for dissolving or dispersing a polymer that does not increase viscosity in a suspending fluid (PTL 6), are disclosed.

These technologies are effective for improving the image retentiveness required for PLD. However, these are not sufficient for realizing image retentiveness required for rewritable paper. The reason for this is differences in structure and purpose of use between the PLD and the rewritable paper.

In case of the PLD, bases each having an electric conductive layer are respectively provided, as electrodes, at the bottom and top of a display layer that is a region where electrophoretic particles move, and the PLD has a structure covered by a housing. Therefore, it is hardly influenced from the outside, and a voltage can be applied thereto as appropriate, and accordingly, the PLD can retain an image.

However, the rewritable paper is not covered by a housing and is easily influenced from the outside, and in addition, a recording medium does not include an element or power source for applying a voltage, so that it is impossible to retain an image for a long period of time from the outside. Although the influence from the outside can be reduced by a covering by a protective layer, in some cases, this is not sufficient as an effect of enhancing image retentiveness, and the advantages such as flexibility and low cost required as a rewritable paper are lost.

Rewriting frequency of the PLD is high in use, so that the extent of demand for image retentiveness is not so high, however, the rewritable paper is highly demanded to retain records for a long period of time like paper, so that semipermanent image retentiveness must be realized.

As a technology for significantly enhancing image retentiveness, a number of methods for fixing colored particles

have been disclosed in which the viscosity of a dispersion medium in which electrophoretic particles are dispersed is controlled by temperature, and after recording is performed by reducing the viscosity by heating, cooling is applied to fix colored particles.

For example, disclosed are a method using a resin, rubber, wax, or synthetic wax that are solids at normal temperatures and are softened by applying heat or a solvent (see PTL 1), a method in which two phases of liquid and solid coexist in a dispersion liquid containing electrophoretic particles, a dispersion medium, a dye, and a dispersant when the dispersion medium is at a normal temperature, and when the electrophoretic particles electrophoretically migrate, the solid phase is dissolved and the two phases are converted into a uniform liquid phase (see PTL 7), a method in which a heat-meltable substance that is solid when it is not heated and becomes liquid when it is heated, specifically, waxes, saturated fatty acid, higher alcohols, and electrophoretic fine particles are encapsulated into microcapsules (see PTL 8), a method using a mixture that has fluidity at an electrophoretic operating temperature, and becomes an optically opaque solid at a temperature lower than the electrophoretic operating temperature, specifically, a mixture of a substance selected among long-chain alcohols, phenols, aromatic ketones, decanes, and dodecanes, and a substance selected among paraffin, solders, waxes, and saturated hydrocarbons (see PTL 9), a method using higher paraffin hydrocarbons, solders, waxes, or aromatic hydrocarbons as a dispersion medium that is solid at normal temperatures and becomes liquid by heating (see PTL 10), and a method in which a dispersion medium is composed mostly of rice wax and contains a surfactant (see PTL 11).

Thus, a dispersion medium that is solid at normal temperatures and becomes liquid when being heated is very effective for improvement in image retentiveness because electrophoretic particles are fixed by cooling after recording.

However, in these technologies, waxes, solders, and saturated fatty acid, are added to the dispersion medium, so that the temperature responsiveness in transition between the solid state and the liquid state is low, the rewriting speed decreases, and the viscosity of the dispersion medium is not sufficiently lowered even by heating, the contrast deteriorates, and image quality deteriorates due to repeated rewriting, so that satisfactory performance is not obtained. Further, there are various problems that dispersibility of the electrophoretic particles is low compared to the case where the solvent is used as the dispersion medium, electrophoretic properties may be impaired, or image quality is deteriorated due to aggregation of particles.

A method using a dispersion medium that turns into a gel in a PLD is disclosed. For example, a thermal writing system is disclosed which includes a dispersion medium that turns into a gel and a sol (liquid) reversibly according to temperature and electrophoretic particles, and locally causes the electrophoretic particles to migrate by locally converting the dispersion medium into a sol (see (PTL 12).

However, with this technology, as a dispersion medium that turns into a gel and a liquid, specifically, a high-molecular substance whose solvent becomes a poor solvent is used, however, the high-molecular substance is dissolved when the temperature of the solvent is high, and the high-molecular substance becomes insoluble and turns into a gel when the temperature is low, so that the high-molecular substance itself does not have thermal reversibility. Therefore, the temperature responsiveness in transition between a gel and a liquid is low, and liquefaction is local, so that the display speed and image quality are not satisfactory.

In addition, a display gel for electrophoretic display including a dispersion medium, white particles, colored particles, and a gelling agent has been disclosed (see PTL 13).

However, in this technology, although a gelling agent is contained in the dispersion medium, thermal reversibility is not described, and it is described that, due to gelatinization, the dispersion medium is substantially equally divided into continuous and/or discontinuous minute regions and turns into a gel, and the particles electrophoretically migrate by the action of an electric field in the dispersion medium in a gel state. Therefore, the problems in the rewriting speed and contrast are not solved, and a solution to the problems is still not attained.

On the other hand, a display medium for electrophoretic display containing a liquid system, a set of a thermoreversible gelling agent and colored particles in the PLD has been disclosed (see PTL 14). With this technology, by containing the thermoreversible gelling agent, the display medium turns into non-gel and is reduced in viscosity at temperature close to or higher than a melting point of the gelling agent, so that images can be formed in a display device. When the display device is cooled after an image is formed, the medium turns into a gel, so that even without applying an electric field, the image is stably maintained. In the method using a thermoreversible gelling agent, the gelling agent itself causes gelatinization, so that the temperature responsiveness is higher and more stable than in the conventional technologies in which waxes and solders are added or gelatinization is controlled by solubility of a high-molecular substance in a solvent, so that this method is very excellent for enhancing image retentiveness.

However, as long as the thermoreversible gelling agent is also controlled by temperature, the influence of reduction in rewriting speed on use with frequent image rewriting increases. As described above, this technology using a thermoreversible gelling agent is premised on that it is used for a display device having two parallel transparent conductor electrode panels, that is, a PLD, so that the disadvantage of deterioration in display responsiveness becomes greater than the advantage of semipermanent image retentiveness by using a thermoreversible gelling agent. In addition, a heating unit and a cooling unit must be provided inside the device, so that the thickness and weight of the PLD increase,

and this is also a big disadvantage.

Therefore, the effect of use of the thermoreversible gelling agent has not been sufficiently utilized, and has not been applied to a PLD in actuality.

The PLD mainly used as a conventional display has currently been largely developed and significantly advanced, however, the advancement of the rewritable paper mainly used as a conventional paper has been slightly delayed as compared with the PLD.

However, there is a need for paper different from that for a display, and the spread of rewritable paper that can be handled in the same manner as paper has been expected.

Problems of rewritable paper exist in image retentiveness, image quality, cost, safety, flexibility, and fastness properties (thinning, reduction in weight).

It is considered that the need for image retentiveness required for rewritable paper is higher than that for PLD as described above. In order to perform rewriting, the PLD is configured as a device, so that the rewriting frequency is naturally high. Therefore, it does not necessarily require semipermanent image retentiveness. On the other hand, the rewritable paper is rewritable, however, on the assumption that it is used instead of paper, high image retentiveness is required. In addition, rewritable paper that is not covered by a housing is more easily influenced by static electricity and pressures from the outside than the PLD covered by a housing, so that this is a big problem in enhancing image retentiveness.

Therefore, image retentiveness is a very important issue for rewritable paper rather than for PLD.

The cost required for the rewritable paper is one of the biggest issues that hinder its spread. The PLD is mainly used as a conventional display, so that an increase in cost is allowed to some extent, however, rewritable paper is mainly used as conventional paper, so that high cost is a fatal issue. It is assumed that due to the rewritability, the unit cost per one rewritable paper becomes higher than the unit cost per one paper, however, a value of the rewritable paper, different from the value of a display, can be found in its capability of mass-recording and capability of being distributed like paper, so that if the unit cost excessively increases, the value of the rewritable paper becomes lower.

An important point in safety required for rewritable paper is prevention of leakage of organic solvents. Organic solvents are used in electrophoretic type and/or magnetophoretic type electronic paper. The risk of leakage and contact of organic solvents with humans is low even when the electronic paper is broken and if it is covered by a housing like PLD, however, in the case of rewritable paper, the risk of leakage and contact of organic solvents with humans is high when the rewritable paper is broken because it is not covered by a housing. Therefore, in order to realize electrophoretic type and/or magnetophoretic type rewritable paper, a safety measure for preventing humans from coming into contact with organic solvents and inhaling the organic solvents is essential.

Concerning flexibility required for the rewritable paper, the PLD has also been developed to be made flexible, and for rewritable paper that has been demanded as a replacement for paper, flexibility is a particularly necessary characteristic. To make the rewritable paper flexible, the recording medium itself must be a lightweight thin film, and flexibility is also important for enhancing fastness. To spread the rewritable paper as a replacement for paper, it is very important to add a value different from the value of PLD by making the rewritable paper thinner or lighter in weight like paper and increasing flexibility and fastness.

As described above, there are needs for a recording medium that is an externally driven rewritable recording medium on which writing is performed by a printer, and provides desirable image quality, rewritability, image retentiveness, low cost, safety, flexibility, and fastness properties (thin film, and light weight), and also needs for an image recording device capable of repeatedly recording an image on the recording medium, and an image recording set containing the recording medium and the image recording device.

Citation List

Patent Literature

PTL1: Japanese Patent Publication Application (JP-B) No. 50-15115
PTL 2: Japanese Patent (JP-B) No. 2551783
PTL 3: JP-B No. 4410135
PTL 4: JP-B No. 3680996
PTL 5: Japanese Patent Application Laid-Open (JP-A) No. 2007-286124
PTL 6: JP-A No. 2010-002933
PTL 7: JP-B No. 4168556
PTL 8: JP-A No. 2001-301325
PTL 9: JP-B No. 4114374

PTL10: JP-A No. 2003-91022
PTL11: JP-A No. 2007-140367
PTL12: JP-A No. 02-196227
PTL13: JP-A No. 2003-149691
PTL14: JP-A No. 2007-11342

Summary of Invention

Technical Problem

The present invention aims to provide an externally-driven recording medium, which provides high image quality, is rewritable, has image retentiveness, is low cost, safe, flexible, and fastness properties (thin film, and light weight).

Note that, the recording medium according to the present invention is preferably a recording medium capable of repeatedly carrying out recording and erasing of an image, but the recording medium according to the present invention includes a recording medium having the same structure to that of the present invention, and a recording medium, with which a rewritable function is restricted by adding another additional structure.

Solution to Problem

As means for solving the aforementioned problems, the recording medium of the present invention contains a first base, a second base, and an image recording layer provided between the first base and the second base, wherein the image recording layer has insulating properties, and the image recording layer contains a plurality of microcapsules or cells, each of which encapsulates: electrophoretic particles, or magnetophoretic particles, or a combination thereof; a dispersion medium having a boiling point of 50°C or higher; and a thermoreversible gelling agent containing an amide bond (-NHCO-) in a molecule thereof, wherein the thermoreversible gelling agent contains a C8-C20 alkyl group in a molecule thereof.

Advantageous Effects of Invention

The present invention can provide an externally-driven recording medium, which provides high image quality, is rewritable, has image retentiveness, is low cost, safe, flexible, and fastness properties (thin film, and light weight).

Brief Description of Drawings

FIGs. 1A to 1C are each a schematic diagram illustrating one example of a shape of a cell used in an image recording layer of the recording medium of the present invention using cells.
FIG. 2 is a schematic diagram illustrating one example of the recording medium of the present invention using cells.
FIG. 3 is a schematic diagram illustrating another example of the recording medium of the present invention using cells.
FIG. 4 is a schematic diagram illustrating one example of the recording medium using microcapsules.
FIG. 5 is a schematic diagram illustrating another example of the recording medium using microcapsules.
FIG. 6 is a schematic diagram illustrating an example where a cross-sectional shape of the image recording layer is a substantially circle.
FIG. 7 is a schematic diagram illustrating an example where a cross-sectional shape of the image recording layer is a polygon.
FIG. 8 is a schematic diagram illustrating an example of the recording medium in which an electric conductive layer is formed between the image recording layer and the base.
FIG. 9 is a schematic diagram illustrating another example of the recording medium in which an electric conductive layer is formed between the image recording layer and the base.
FIG. 10 is a schematic diagram illustrating one example of the recording medium, in which an electric conductive base is used as a base.
FIG. 11 is a schematic diagram illustrating another example of the recording medium, in which an electric conductive layer is formed between the image recording layer and the base.
FIG. 12 is a schematic diagram illustrating another example of the recording medium, in which an electric conductive layer is formed between the image recording layer and the base.
FIG. 13 is a schematic diagram illustrating one example of the recording medium, in which an electric conductive

layer is formed between the image recording layer and the base, and which uses an electric conductive base.

FIG. 14 is a schematic diagram illustrating an example of a heating unit of an image recording device in the image recording set of the present invention.

FIG. 15 is a schematic diagram illustrating another example of a heating unit of an image recording device in the image recording set of the present invention.

FIG. 16 is a schematic diagram illustrating an example of an electric field applying unit of an image recording device in the image recording set of the present invention.

FIG. 17 is a schematic diagram illustrating another example of an electric field applying unit of an image recording device in the image recording set of the present invention.

FIG. 18 is a schematic diagram illustrating an example of an image recording device in the image recording set of the present invention.

FIG. 19 is a schematic diagram illustrating another example of an image recording device in the image recording set of the present invention.

FIG. 20 is a schematic diagram illustrating another example of an image recording device in the image recording set of the present invention.

FIG. 21 is a schematic diagram illustrating another example of an image recording device in the image recording set of the present invention.

FIG. 22 is a schematic diagram illustrating another example of an image recording device in the image recording set of the present invention.

FIG. 23 is a schematic diagram illustrating another example of an image recording device in the image recording set of the present invention.

FIG. 24 is a diagram illustrating an example of an image recording set where a recording medium and an image recording device are integrated together.

FIG. 25 is a diagram illustrating another example of an image recording set where a recording medium and an image recording device are integrated together.

FIG. 26 is a diagram illustrating a photograph of the image obtained in Example 23.

Description of Embodiments

(Recording Medium)

The recording medium of the present invention contains a first base, a second base, and an image recording layer provided between the first base and the second base, and may further contain other members, if necessary.

The recording medium is different from an internally driven paper like display (PLD), which contains a driving element therein and is capable of displaying an image by itself. The recording medium is an externally driven recording medium capable of repeatedly carrying out recording and erasing of an image by an externally set image recording device, and is synonymous with rewritable paper. Specifically, recording and erasing of an image on the recording medium is carried out by an image recording device, which is not present in the recording medium and is externally set. Accordingly, the recording medium does not necessarily require a driving element, or a power source, which is required for displaying an image to PLD.

The image recording layer contains microcapsules or cells each encapsulating: electrophoretic particles and/or magnetophoretic particles; a dispersion medium; and a thermoreversible gelling agent. The electrophoretic particles and/or magnetophoretic particles are particles which migrate (move) in the dispersion medium as an electric field and/or magnetic field is externally applied.

The dispersion medium is a dispersion medium, in which the electrophoretic particles and/or magnetophoretic particles are dispersed.

The thermoreversible gelling agent is a material, which turns the dispersion medium into a sol (liquidizes the dispersion medium) as the temperature thereof exceed certain temperature, turns the dispersion medium into a gel (solidifies the dispersion medium) as the temperature thereof becomes certain temperature or lower, and can reversibly induces sol-gel transition depending on temperature.

The recording medium of the present invention contains, in the image recording layer, a thermoreversible gelling agent, which turns the dispersion medium into a gel during displaying an image or being stored at room temperature, and turns the dispersion medium into liquid when an image is recorded (written) at temperature higher than room temperature. Use of the thermoreversible gelling agent enables to turn the dispersion medium into a gel during displaying an image and storing the recording medium, and therefore movements of the electrophoretic particles and/or magnetophoretic particles are suppressed in the image recording layer, which prevents a change in image quality during storage over a long period. Even in a case where the recording medium is externally influenced by electrostatics or pressure, moreover, high image retentiveness can be attained. Moreover, the dispersion medium is liquidized as it is heated at

the time or recording (writing). When recording is performed by an image recording device, therefore, the electrophoretic particles and/or magnetophoretic particles can freely move in the image recording layer, hence enabling to repeatedly record an image.

In the case where the thermoreversible gelling agent is used in PLD, which requires a high writing speed as a display device, such PLD has not had sufficient display speed. In the case of a rewritable recording medium, which is required to be used like paper, it is sufficiently applicable with recording (writing) speed as obtained when the thermoreversible gelling agent is used in the recording medium.

In the case where the image recording layer containing the thermoreversible gelling agent is used as an internally driven PLD having a driving element therein and capable of displaying an image itself as a conventional technique, it is necessary to house, in the display, a heating device or a cooling device as well as a display driving device configured to apply an electrode, and thus a size and weight of the display increase. In addition, it is necessary to increase and decrease the temperature every time the display is rewritten, and therefore there are problems that display speed is slow, and it is difficult to attain a sufficient display contrast ratio.

However, the recording medium of the present invention is not PLD, and is a recording medium to which recording of an image is performed by an external image recording device. Therefore, it is not necessary to provide devices for heating and cooling to the recording medium itself, and these devices can be provided in an image recording device, which is separate from the recording medium. Accordingly, the problems caused with PLD, increase in the size and weight of the recording medium, low display speed, and insufficient display contrast ratio, can be solved. Specifically, the recording medium can be formed into the shape or state similar to paper.

Not only solving a problem of low display speed caused by using a thermoreversible gelling agent, which has been a disadvantage of PLD, the recording medium of the present invention can attain a large advantage that semipermanent image retentiveness can be realized by using the thermoreversible gelling agent.

The recording medium of the present invention contains a plurality or microcapsules or cells provided in the image recording layer at certain intervals. The recording medium of the present invention can be easily produced by aligning microcapsules or cells on a base, and providing another base or a protective layer thereon. Since the recording medium can be produced by such simple method, productivity of the recording medium is improved, and the production of the recording medium is effective in cost saving.

Moreover, the dispersion medium is in the state of a gel when an image is browsed or stored, namely in the normal temperature environment where the recording medium is used. Therefore, the recording medium is safe to use without a risk of spreading the dispersion medium out, even if the recording medium is damaged.

As described, the recording medium of the present invention is very effective for realizing high image quality, low cost, high safety, and flexibility.

The image recording layer needs to have insulating properties. As the image recording layer has insulating properties, electrophoresis of particles in the image recording layer is caused, when an electric field is applied between electric conductive layers (the definition of the electric conductive layer includes an electric conductive base) formed above and below the image recording layer. The insulating image recording layer can be formed, for example, by adding an insulating binder resin to the microcapsules and forming a film. It is preferred that the image recording layer is insulated only with the added binder resin. However, in the case where insulating properties are not sufficient, the image recording layer is further insulated by further applying an insulating resin thereon to form an image recording layer, which may be an effective method in maintaining insulating properties of the image recording layer. When a thickness of the insulating resin is significantly greater than the thickness of the microcapsules layer, however, it is necessary to increase bias voltage to be applied. Therefore the thickness of the insulating resin is preferably not significantly greater than the thickness of the microcapsules layer.

<Base>

A material of the base is appropriately selected depending on the intended purpose without any limitation, and examples thereof include: plastic, such as a synthetic resin, and a natural resin; paper; synthetic paper; thin glass; and wood board. Among them, a synthetic resin is preferable, as flexibility and transparency can be attained.

The synthetic resin is appropriately selected depending on the intended purpose without any limitation, and examples thereof include polyethylene, chlorinated polyethylene, ethylene-vinyl acetate copolymer, ethylene-ethyl acrylate copolymer, polypropylene, polybutadiene, an AS resin, an ABS resin, a methyl methacrylate resin, a vinyl chloride resin, vinyl chloride-vinyl acetate copolymer, vinyl chloride-vinylidene chloride copolymer, vinyl chloride-acrylic ester copolymer, vinyl chloride-methacrylic acid copolymer, vinyl chloride-acrylonitrile copolymer, ethylene-vinyl alcohol-vinyl chloride copolymer, propylene-vinyl chloride copolymer, a vinylidene chloride resin, a vinyl acetate resin, methacrylic acid-styrene copolymer, a polybutyrene resin, methyl methacrylate-butadiene-styrene copolymer, polyvinyl alcohol, polyvinyl formal, a cellulose-based resin, a polyamide-based resin, a polyacetal resin, a polycarbonate resin, a urethane-based resin, a polyester resin (e.g., a polyethylene terephthalate resin, and a polybutyrene terephthalate resin), a

polyphenylene oxide resin, a polysulfone resin, a polyamideimide resin, a polyamino bismaleimide resin, a polyether sulfone resin, a polyphenylene sulfone resin, a polyacrylate resin, a grafted polyphenylene ether resin, a polyether ether ketone resin, a polyether imide resin, a fluorine-based resin (e.g., a polytetrafluoroethylene resin, a polyfluoroethylene propylene resin, tetrafluoroethylene-perfluoroalkoxy ethylene copolymer, ethylene-tetrafluoroethylene copolymer, polyvinylidene fluoride, polychlorotrifluoroethylene, and fluoro rubber), and a silicone-based resin (e.g., a silicone resin, and silicone rubber). These may be used alone, or in combination.

For the purpose of enhancing scratch resistance and wear resistance of the recording medium of the present invention, the base may be a resin that is cured by light, heat, and electron beam. Examples of such resin include a photocurable resin, and a thermoset resin.

As for the base, particularly preferred are polyethylene terephthalate, polyethylene naphthalate, polyamide (nylon), and polyimide, as they have high transparency and flexibility, and excellent heat resistance and film forming properties for practical use.

Moreover, it is also possible and effective to give the base itself electric conductivity. When the electric conductive base is used, reduction in voltage caused by the base can be inhibited, and the electric field strength of the image recording layer can be enhanced, and therefore an image with high contrast can be attained with low driving voltage. Note that, the electric conductivity means characteristics for passing through electricity, and is indicated with electric conductivity or specific resistance (inverse number of electric conductivity). When the measurement is performed by means of a resistivity meter, surface resistivity or volume resistivity can be determined. Examples of a commercial product of a measuring device of the resistivity include Hiresta or Loresta manufactured by Mitsubishi Chemical Analytech Co., Ltd.

The electric conductive base is roughly classified into a base a surface of which has been made electric conductive, and a base which itself is electric conductive. The base a surface of which has been made electric conductive can be obtained by providing an electric conductive film on an insulating base formed of the aforementioned plastic films or glass. Examples of the electric conductive film include metal (e.g., indium-tin oxide (ITO), zinc oxide, gold, silver, copper, aluminum, chromium, tin, and nickel), metal foil, metal plate, metal deposit, silver nanowire, graphene, carbon nanotube, and electric conductive polymer. As the electric conductive film, any of these materials may be formed into a film on the base.

The surface resistivity of the electric conductive film is preferably $10^7$ Ω·cm or less, more preferably $10^3$ Ω·cm or less, and even more preferably $10^1$ Ω·cm or less. The base provided to the side from which the recording medium is viewed is preferably transparent. In this case, a transparent base on a surface of which a transparent electric conductive film has been provided is preferably used.

Moreover, the base which itself is electric conductive is preferably used. Such base may be effective, as it is not necessary to separately provide an electrode, as long as the base itself is electric conductive. However, most of the bases, which are electric conductive, are not transparent. In this case, the base which itself is electric conductive is preferably used as a base provided at an opposite side to the side from which the recording medium is viewed. The base, which is electric conductive, is appropriately selected depending on the intended purpose without any limitation, provided that the base itself is electric conductive, and examples thereof include: a metal plate, metal sheet, or metal foil formed of gold, silver, copper, aluminum, chromium, tin, nickel, or iron; a carbon sheet or carbon paper formed of carbon or graphite; a film or sheet for shielding electromagnetic waves; electric conductive paper; electric conductive cloth; electric conductive glass; and electric conductive plate. In the case where the electric conductive base is provided, it is not necessary to separately provide an electrode, but low volume resistivity as well as low surface resistivity is required. The volume resistivity of the electric conductive base is preferably $10^7$ Ω·cm or less, more preferably $10^3$ Ω·cm or less, and even more preferably $10^1$ Ω·cm or less.

Regardless of types of electric conductive bases, an electric conductive base formed by providing electric conductivity to a surface of a base, or an electric conductive base in which the base itself has electric conductivity, these electric conductive bases are preferably formed so that they are electrically connected to the image recording layer, and at the same time, these electric conductive bases are formed in a manner that these bases are electrically connected with an external part of the recording medium. Owing to the aforementioned configuration, an electric field can be directly applied to the image recording layer from an image recording device. In the case where the electric conductive base an electric conductive layer on a surface of the base, the following method can be used. Specifically, an electrode is provided on an external part of the recording medium to electrically connect the electrode with the electric conductive layer.

Moreover, the electric conductive base for use in the recording medium may be formed as either a first base or a second base, or both the first base and the second base are respectively formed with the electric conductive base. Use of the electric conductive base enables to provide a high contrast image at lower driving voltage. In the case where an image recording system where an entire surface of the recording medium is heated to liquidize the dispersion medium present in all of the microcapsules or cells, an electric field is applied to the area in which an image is recorded to migrate the particles present in this area is used, an image may not be recorded, or image deletion may be caused, if an electric conductive base is used for the base provided at the position where the electric field is applied to perform image recording.

Accordingly, the electric conductive base is preferably used only for the base provided at the opposite side to the side at which an electric field is applied. On the other hand, in the case where a system where an area of the recording medium to which an image is recorded is heated, while applying an electric field to an entire surface of the recording medium, to migrate the particles in the area to record an image is used, there is not the above-described restriction, and therefore it is preferred that the electric conductive base is used for both the first base and the second base.

A configuration that the electronic conductive base is used for both the first base and the second base is more effective for achieving high contrast, low driving voltage, and high duration of the recording medium than a configuration where the electronic conductive base is used for either the first base or the second base. Accordingly, the recording medium of the former configuration is particularly preferable in the present invention.

The recording medium of the present invention contains an image recording layer between a first base and a second base, but materials of the first base and the second base may be the same or different.

Shapes of the first base and the second base are appropriately selected depending on the intended purpose without any limitation, and examples thereof include a sheet shape.

As the base, at least the base provided at the side from which the recording medium is viewed is preferably transparent. On the other hand, the base provided on the opposite side to the side from which the recording medium is viewed may be transparent, translucent, or opaque. There is a case where a high contrast ratio can be attained and visibility can be enhanced by providing an opaque (e.g., white, black, and monocolor) base at the opposite side to the side from which the recording medium is viewed. In this case, the recording medium can be produced by using a transparent for the first base, which is provided at the side from which the recording medium is viewed, and using a translucent or opaque base for the second base, which is provided an the opposite side to the side from which the recording medium is viewed. Moreover, it is possible and effective to use paper as the opaque base.

The average thickness of the base is appropriately selected depending on the intended purpose without any limitation, but it is preferably 10 $\mu$m to 1,000 $\mu$m, more preferably 20 $\mu$m to 500 $\mu$m, and even more preferably 30 $\mu$m to 200 $\mu$m. In the case where the base is composed of the first base and the second base, the average thickness of each of the first base and the second base is preferably 5 $\mu$m to 500 $\mu$m, more preferably 10 $\mu$m to 250 $\mu$m, and even more preferably 15 $\mu$m to 100 $\mu$m. In this case, the average thickness of the first base and the average thickness of the second base may be the same or different.

When the average thickness of the base is less than 10 $\mu$m, wrinkles and bends may be formed, and image defects may be caused in the case where the wrinkles and bends are formed. On the other hand, when the average thickness of the base is greater than 1,000 $\mu$m, flexibility and portability (thin film, light weight) may be insufficient, or it may be necessary to apply high voltage or magnetic field at the time of recording (writing).

<Image Recording Layer>

The image recording layer contains a plurality of microcapsules or cells each encapsulating a dispersion liquid containing at least electrophoretic particles and/or magnetophoretic particles, a dispersion medium, and a thermoreversible gelling agent. The microcapsules or cells may further encapsulate other components, if necessary.

A method for producing a plurality of microcapsules or cells each encapsulating a dispersion liquid containing at least electrophoretic particles and/or magnetophoretic particles, a dispersion medium, and a thermoreversible gelling agent is appropriately selected depending on the intended purpose without any limitation, provided that the method provides a structure where the dispersion liquid is encapsulated in a plurality of microcapsules or cells provided at certain intervals.

In the case where the recording medium containing cells, examples of a method for forming the cells include: a method containing applying a thermoplastic resin or a curable resin onto a base, pressing a mold for providing cells against the applied resin to perform a microembossing process to the resin, to thereby form a plurality of cells provided at certain intervals; and a method containing applying a material for forming cells onto a template, in which recesses are regularly formed, so as to cover the recesses with the material, and then reducing the pressure of the surrounding air to relatively expand air bubbles present in the recesses at the same time, to thereby form cells.

The recording medium of the present invention can be produced by providing, on a base, a plurality of cells provided at certain intervals in the aforementioned manner, placing, in the cells, a dispersion liquid containing at least electrophoretic particles and/or magnetophoretic particles, a dispersion medium, and a thermoreversible gelling agent, and bonding a base thereon so as not to include any air bubbles.

The aforementioned method uses a coating process, and enables to perform continuous production, and therefore it is very effective for low cost production. Moreover, as the cells have wide openings, the recording medium produced by such method has characteristics that it easily achieves high contrast.

A shape of each cell is not particularly limited, as long as the dispersion liquid is separated by a plurality of cells provided at certain intervals. For example, cells of various shapes, such as polygons, circles, and ovals can be provided as illustrated in FIGs. 1A to 1C. Considering use thereof in the recording medium, however, preferred as shapes

of the cells are those each having an area on which a cell is formed as small as possible, and those each having a large angle so as not to collect the particles at a corner of the cell. The former is preferably a rectangular, and the latter is preferably a circle. In order to attain both characteristics, the shapes of the cells are particularly preferably a hexagonal honeycomb shape. Other than the characteristics above, the cells having the honeycomb shape can further give an effect of enhancing the strength of the image recording layer, and therefore the honey comb shape is particularly preferable.

In the case where the recording medium uses microcapsules therein, a production method of the microcapsules is appropriately selected depending on the intended purpose without any limitation, and examples thereof include conventional methods known in the art, such as a complex coacervation method, and a phase separation method. Examples of a material used in the complex coacervation include gelatine-Arabian gum.

For example, formation of the microcapsules can be carried out by adding a dispersion liquid (O) of electrophoretic particles and/or magnetophoretic particles into an aqueous solution in which a water-soluble monomer or a surfactant has been dissolved to prepare an emulsion, and allowing the monomer to carry out a polymerization reaction at the O/W interface. In the present invention, formation of microcapsules can be performed by adding a thermoreversible gelling agent to the dispersion liquid in advance, heating the aqueous solution to temperature equal to or higher than the solation temperature, adding the dispersion liquid into the aqueous solution to prepare an emulsion, and then setting the temperature to reaction temperature.

Considering the fact that the particles migrate in each microcapsule, a shape of each microcapsule is preferably spherical, i.e., a cross-sectional shape of each microcapsule is preferably a circle. In reality, however, it is preferred in view of image quality that microcapsules be closely filled without a space between the microcapsules. Therefore, a cross-sectional shape of each microcapsule may be a circle, oval, or polygon, or a mixture thereof. The shape thereof is not particularly limited.

The microcapsule layer formed on the base is preferably a single layer in view of improvement in image quality. Therefore, it is more preferred that microcapsules have uniform size.

Use of the microcapsules can prevent vaporization of the dispersion medium, and as a result, the recording medium can be stably used for a long period. Especially, the recording medium of the present invention is heated every time when recording or erasing is performed, and therefore to prevent vaporization of the dispersion medium is very important for achieving high image quality, high stability, and long service life of the recording medium. To this end, use of the microcapsules is more preferable. Moreover, slurry of the microcapsules can be applied by a coating process in the production of the recording medium, and therefore use of the microcapsules is effective in low cost production of the recording medium.

The microcapsules formed on the base need to be fixed thereon, and are preferably fixed with a binder resin. The binder resin has a function of securing insulating properties of the image recording layer, other than a purpose of fixing the microcapsules. Especially in the case where electric conductive layers or electric conductive bases are provided above and below the microcapsules, an electric field cannot be applied to the image recording layer of the image recording layer does not have insulating properties. As a result, recording cannot be performed by migrating the particles within the image recording layer.

As for the binder resin, suitably used is a resin having excellent insulating properties, and having high affinity or adhesion to a base, electronic conductive layer, or microcapsules. A type of the resin for use is not particularly limited, and examples thereof include a thermoplastic resin, and a curable resin known in the art. The resin for use is more preferably a thermo- or photo-curable resin. The microcapsule layer can be easily formed on the base by mixing any of these binder resins with the microcapsules, applying the mixture onto the base, and drying, and an insulating image recording layer can be provided.

In the case where the microcapsules are not mixed with water, various resin materials can be used. In the case of slurry in which the microcapsules are mixed with water, an aqueous resin is preferably used. Among the aqueous resin, a resin to which a hydrophilic group or hydrophilic segment has been provided, an emulsion in which a hydrophilic resin is forcibly emulsified using a surfactant, a prepolymer which is blocked with a blocking agent having an hydrophilic group, or a blocked prepolymer to which a hydrophilic segment has been provided are preferable, and an aqueous urethane resin having these functions is particularly preferable.

It is preferred that the image recording layer be insulated only with the binder resin mixed with the microcapsules. In the case where insulating properties are not sufficient, however, it is possible to further apply an insulating resin onto the microcapsule layer to form an image recording layer, and this method may be effective for maintaining insulating properties of the image recording layer. As long as the microcapsules can be formed into a film with the aqueous resin on a base, even when the microcapsules are used in the form of slurry where the microcapsules and water are mixed, a resin mixed with an organic solvent can be used as a resin formed thereon. Therefore, the insulating resin can be selected from a wide range of resins. In this case, if a thickness of the insulating resin is significantly greater than the thickness of the microcapsule layer, the image recording layer becomes thick, and thick image recording layer may lead to low contrast. Accordingly, it is desirable that the thickness of the insulating resin is not grater than the thickness of

the microcapsule layer.

-Electrophoretic Particles and Magnetophoretic Particles-

The electrophoretic particles are appropriately selected depending on the intended purpose without any limitation, provided that they are particles that can exhibit electrophoresis in a fluid dispersion medium upon application of electric field, and examples thereof include an organic pigment, and an inorganic pigment. A type of the pigment may be selected depending on a color of an image to be recorded in the recording medium of the present invention.

Examples of black electrophoretic particles include carbon black, aniline black, titanium black, furnace black, lamp black and black iron oxide.

Examples of red electrophoretic particles include rhodamine 6G lake, dimethylquinacridone, watching red, lake red C, brilliant carmine 6B, rose Bengal, rhodamine B, alizarin lake, lithol red, permanent red 4R, and benzidine red.

Examples of yellow electrophoretic particles include chrome yellow, benzidine yellow, hansa yellow, naphthol yellow, molybdenum yellow, quinoline yellow and tartrazine.

Examples of blue electrophoretic particles include phthalocyanine blue, methylene blue, cobalt blue, victoria blue, methyl violet, aniline blue, ultramarine blue, sky blue, indanthrene blue and cerulean blue.

Examples of green electrophoretic particles include phthalocyanine green, malachite green lake, naphthol green, emerald green, viridian, cobalt green and chrome oxide.

Examples of purple electrophoretic particles include fast violet, methyl violet lake, indigo, mineral violet and cobalt violet.

Examples of brown electrophoretic particles include toluidine maroon, indanthrene red violet RH, burnt umber and iron oxide.

Examples of white electrophoretic particles include: metal oxide, such as titanium oxide, zinc oxide, antimony oxide, aluminum oxide, and silicon dioxide; barium titanate; and barium sulfate.

These may be used alone, or in combination.

It is also possible to use white electrophoretic particles, which have been colored with various colorants, such as the aforementioned pigments or dyes.

The magnetophoretic particles are appropriately selected depending on the intended purpose without any limitation, provided that they are particles that can exhibits magnetophoresis in a fluid dispersion medium upon application of magnetic field, and examples thereof include: a ferromagnetic material, such as ferromagnetic metal (e.g., iron, nickel, and cobalt) and an alloy containing the ferromagnetic metal; and permanent magnet, such as ferrite magnet, and alloy magnet.

Specific examples thereof include black iron oxide, porous iron oxide, black magnetite, $\gamma$-hematite, manganese dioxide-containing iron oxide, chromium dioxide, ferrite, iron, nickel, cobalt, gadolinium and alloys thereof.

It is also possible to use magnetophoretic particles surfaces of which are colored by various coloring agents.

For the purpose of enhancing dispersibility of the electrophoretic particles and/or magnetophoretic particles in the dispersion medium, preventing aggregations thereof, and achieving stable electrophoresis, it is preferred that a surface treatment be performed on surfaces of the electrophoretic particles and/or magnetophoretic particles.

A coupling agent is mainly used for the surface treatment. Examples of the coupling agent include a chromium-based coupling agent, a silane-based coupling agent, a titanate-based coupling agent, an aluminum-based coupling agent, a zirconium-based coupling agent, a zircon-alumminate coupling agent and a fluorine-based coupling agent.

As for the surface treatment, also effective are a method for forming graft chains on surfaces of the electrophoretic particles and/or magnetophoretic particles, and a method for coating surfaces of the electrophoretic particles and/or magnetophoretic particles with polymer.

The average particle diameter of the electrophoretic particles and/or the magnetophoretic particles is appropriately selected depending on the intended purpose without any limitation, but it is preferably 0.01 $\mu$m to 20 $\mu$m, more preferably 0.03 $\mu$m to 5 $\mu$m, and particularly preferably 0.1 $\mu$m to 1 $\mu$m. When the average particle diameter thereof is greater than 20 $\mu$m, responsiveness of the particles may be low, or dissolution of an image may be low. When the average particle diameter thereof is smaller than 0.01 $\mu$m, the particles may be aggregated to each other, or image density of a resulting image may be low.

The average particle diameter means a particle diameter of an average primary particle representing the particle group, and represented as a number average particle diameter. Specifically, particles are directly taken out, or the recording medium of the present invention is cut and the section thereof is directly observed under an electron microscope. Then, primary particle diameters of the particles are determined, and the average value of these primary particle diameters (for example, the average value of 100 particles) is calculated and determined as the average particle diameter.

As for the electrophoretic particles and/or magnetophoretic particles, one type of particles may be used, or two or more types of particles may be used. In the case where one type of particles is used, an image can be formed by coloring the dispersion medium, and coloring the particles in a different color to that of the dispersion medium. In the

case where two types of particles are used, an image can be formed by using groups of particles each having different color and charge polarity. Alternatively, an image may be formed with a combination of one type of the electrophoretic particles and/or magnetophoretic particles, and one type of nonelectrophoretic particles and/or non magnetophoretic particles.

The particles, which record an image in the recording medium of the present invention, may be the electrophoretic particles or magnetophoretic particles. The electrophoretic particles and the magnetophoretic particles each can form an image upon application of electric field and magnetic field, respectively: In view of obtainable image quality and recording speed, use of the electrophoretic particles is preferable.

Note that, it is possible to use the electrophoretic particles and the magnetophoretic particles in combination. By providing an image recording device with a unit for applying electric field and magnetic field, the electrophoretic particles, and the magnetophoretic particles having different color to that of the electrophoretic particles are individually controlled. As a result, multicolor image formation can be achieved.

An amount of the electrophoretic particles and/or magnetophoretic particles in the image recording layer is appropriately selected depending on the intended purpose without any limitation.

-Dispersion Medium-

The dispersion medium is appropriately selected depending on the intended purpose without any limitation, provided that it has a boiling point of 50°C or higher and can disperse therein the electrophoretic particles and/or magnetophoretic particles, but it is preferably a dispersion medium having a boiling point of 80°C or higher, more preferably 150°C or higher. When the dispersion medium having a boiling point of lower than 50°C is used, the dispersion medium is vaporized by repeatedly heating the recording medium every time an image is recorded or erased. As a result, electrophoresis of the particles may be restricted to thereby form an abnormal image, or the dispersion medium may stay as a gel without turning into a sol when heated so that the image may not be able to be rewritten. Note that, the boiling point is temperature at which vapor pressure of a liquid and the external pressure become the same, and the liquid starts boiling. In the case where the boiling point extends to a breadth of temperature, an initial boiling point thereof is determined as the boiling point.

Examples of the dispersion medium include an organic solvent, silicone oil, and water. Among them, an organic solvent, and silicone oil are preferable in view of electrophoresis of the electrophoretic particles and/or magnetophoretic particles, responsiveness, and image retentiveness.

The sol-gel transition temperature of the dispersion medium containing the thermoreversible gelling agent largely depends on an amount of the thermoreversible gelling agent. When the dispersion medium is vaporized, the amount of the thermoreversible gelling agent contained in the dispersion medium changes, and as a result, the sol-gel transition temperature is sifted. Therefore, there is a possibility that a problem, such as deterioration in image quality, may be caused, as recording is repeatedly performed. When a concentration of the thermoreversible gelling agent becomes too high as a result of vaporization of the dispersion medium, moreover, the gelling agent is crystallized or precipitated, which may impair thermoreversibility. As a result, recording and erasing cannot be repeatedly carried out, which leads to an- end of the service life of the recording medium. As described above, it is important to prevent evaporation of a dispersion medium in the recording medium of the present invention. To this end, a dispersion medium having a boiling point (initial boiling point) of 50°C or higher is used.

Examples of the organic solvent include: an alcohol-based solvent, such as methanol, ethanol, propanol, and butanol; chalin or cyclic aliphatic hydrocarbon, such as hexane, heptane, octane, nonane, decane, dodecane, isooctane, isododecane, tetradecane, dodecylbenzene, cyclohexane, kerosene, ISOPAR (registered trade mark), naphthene, liquid paraffin, and petroleum; aromatic hydrocarbon, such as benzene, toluene, xylene, alkyl benzene, solvent naphtha, phenylxyl ethane, diisopropyl naphthalene; and halogenated hydrocarbon, such as trichloroethylene, and tetrachloroethylene.

Among them, a non-polar solvent is preferable, and aliphatic hydrocarbon is more preferable.

Examples of the silicone oil include: various silicone oil, such as dialkyl silicone oil (e.g., dimethyl silicone oil), cyclic dialkyl silicone oil, alkylphenyl silicone oil, cyclic alkylphenyl silicone oil, and polyalkylaralkyl siloxane.

Examples of the alkylphenyl silicone oil include methyl phenyl silicone oil, ethyl phenyl silicone oil, propyl phenyl silicone oil, butyl phenyl silicone oil, hexyl phenyl silicone oil, octyl phenyl silicone oil, lauryl phenyl silicone oil, and stearyl phenyl silicone oil.

Examples of the cyclic alkylphenyl silicone oil include cyclic polymethylphenyl siloxane, cyclic polyethylphenyl siloxane, cyclic polybutylphenyl siloxane, cyclic polyhexylphenyl siloxane, cyclic polymethylchlorophenyl siloxane, and cyclic polymethylbromophenyl siloxane.

Examples of the polyalkylaralkyl siloxane include benzyl-modified silicone oil, and methylstyryl-modified silicone oil.

Examples of a commercial product of the silicone oil include: KF™96 series, KF™50 series, KF™54, KF™56

manufactured by Shin-Etsu Chemical Co., Ltd.; AK series, AS series, AR series, AP series, and PDM series, manufactured by Wacker Asahikasei Silicone Co., Ltd.; TSF451 series, TSF456 series, TSF405, TSF4427, TSF431, TSF433, TSF437, and TSF456 series, manufactured by GE Toshiba Silicone Co., Ltd.; and SH200 series, SH510, SH550, SH556, SH702, SH704, and SH705 manufactured by Dow Corning Toray Co., Ltd.

As for the dispersion medium, one type thereof may be used alone, or two or more types thereof may be used in combination.

An amount of the dispersion medium in the image recording layer is appropriately selected depending on the intended purpose without any limitation.

The dispersion medium may be tinted by dissolving, in the dispersion medium, a dye having the same or different color to that of the electrophoretic particles and/or magnetophoretic particles. The dye is appropriately selected depending on the intended purpose without any limitation, and for example, an oil-soluble dye is suitably used.

Examples of the oil-soluble dye include spirit black (SB, SSBB, AB), nigrosine base (SA, SAP, SAPL, EE, EEL, EX, EXBP, EB), oil yellow (105, 107, 129, 3G, GGS), oil orange (201, PS, PR), fast orange, oil red (5B, RR, OG), oil scarlet, oil pink 312, oil violet #730, Macrolex blue RR, Sumiplast green G, oil brown (GR, 416), Sudan black X60, oil green (502, BG), oil blue (613, 2N, BOS), oil black (HBB, 860, BS), Valifast yellow (1101, 1105, 3108, 4120), Valifast orange (3209, 3210), Valifast red (1306, 1355, 2303, 3304, 3306, 3320), Valifast pink 2310N, Valifast brown (2402, 3405), Valifast blue (3405, 1501, 1603, 1605, 1607, 2606, 2610), Valifast violet (1701, 1702), and Valifast black (1802, 1807, 3804, 3810, 3820, 3830). These may be used alone, or in combination.

-Thermoreversible Gelling Agent-

The thermoreversible gelling agent needs to be a thermoreversible gelling agent capable of converting the dispersion medium into a gel at the time of image browsing and image saving, and converting the dispersion medium into a liquid at the time of image recording at a temperature higher than the temperature for the image browsing and image saving. Further, as the thermoreversible gelling agent, a thermoreversible gelling agent having higher temperature responsiveness is preferable, and a thermoreversible gelling agent that converts the dispersion medium into a sol at once when the temperature becomes higher than a certain temperature, and converts the dispersion medium into a gel at once when the temperature becomes the certain temperature or lower, is more suitable.

Here, image browsing means a state where a person views image information recorded on the rewritable recording medium, and image saving means a state where image information is saved on the rewritable recording medium. In other words, the time of image browsing and image saving means a situation at a normal temperature, and for example, a state at temperature of 10°C or higher but lower than 40°C.

In the present invention, a state of a gel means a state where the dispersion liquid has lost its fluidity, to thereby inhibit the movements and to fix the electrophoretic particles and/or magnetophoretic particles dispersed in the dispersion liquid. In the present invention, a state of a gel is preferably a state with elasticity for providing the recording medium with flexibility. On the other hand, a state of a liquid means a state where the dispersion medium has fluidity, to thereby allow the electrophoretic particles and/or magnetophoretic particles dispersed in the dispersion liquid to move freely. In the present invention, a state of a liquid preferably has a sufficiently low viscosity so as not to suppress the movements of the electrophoretic particles and/or magnetophoretic particles.

The thermoreversible gelling agent forms a network structure by hydrogen bonding, the van der Waals' force, hydrophobic interaction, electrostatic interaction, and $\pi$-$\pi$ interaction. By incorporating the dispersion medium into the network structure, the dispersion medium is converted into a gel. On the other hand, the three-dimensional network structure is easily cut by heating, so that it is considered that the dispersion medium is returned to a liquid by heating. The three-dimensional network structure is formed in such a manner that, for example, the thermoreversible gelling agent molecules self-aggregate due to hydrogen bonding to form fibrous aggregates by intermolecular interaction, and further, the fibrous aggregates grow due to the van der Waals' force and hydrophobic or electrostatic interaction, and fibrous aggregates intertwine with each other. By incorporating the dispersion medium molecules into the three-dimensional network structure, gelatinization of the dispersion medium progresses.

Examples of the thermoreversible gelling agent include organogel, and hydrogel. The organogel is a thermoreversible gelling agent that can turn an organic solvent or silicone oil serving as the dispersion medium into a gel.

The thermoreversible gelling agent effectively used in the present invention is a thermoreversible gelling agent having an amide bond (-NHCO-) in a molecule thereof. The energy source for the thermoreversible gelling agent to convert the dispersion medium into a gel is formation of hydrogen bonding between N-H and C=O of the amide bond. Formation of a gel with high temperature responsiveness depends on reactivity of the hydrogen bonding, and therefore the thermoreversible gelling agent having an amide bond in a molecule thereof is used as a thermogelling agent in the present invention.

In the present invention, more preferred is the thermoreversible gelling agent having a urethane bond (-NHCOO-) in a molecule thereof. The thermoreversible gelling agent having the urethane bond has high temperature responsiveness

to sol-gel transition compared to the thermoreversible gelling agent having an amide bond. Therefore the thermoreversible gelling agent having a urethane bond is very effective in the present invention.

Moreover, a polymer or oligomers thermoreversible gelling agent has been known. A low molecular weight thermoreversible gelling agent may be turned into a crystal depending on a structure thereof, as it is left for a long period, which may lower stability. On the other hand, the polymer or oligomers thermoreversible gelling agent may be effective, as it does not crystallized owing to molecular weight distribution thereof or movements of a flexuous chain thereof. The polymer or oligomers thermoreversible gelling agent can be obtained, for example, by introducing a gelling component that induces gelation to a polymer component that prevents crystallization.

Even one amide bond or urethane bond in a molecular of the thermoreversible gelling agent is effective. To enhance temperature responsiveness to sol-gel transition, the thermoreversible gelling agent preferably has a plurality of amide bonds or urethane bonds in a molecule thereof. The larger the number of the amide bonds or urethane bonds contained in the molecule thereof is more preferable. By having more amide bonds or urethane bonds, gelation capability is enhanced and temperature responsiveness to gelation becomes higher. Therefore, it is effective in the present invention.

In the present invention, moreover, the thermoreversible gelling agent is more preferably a thermoreversible gelling agent having a siloxane bond in a molecule thereof. The siloxane bond is a structure in which silicon (Si) and oxygen (O) are alternately bonded. Examples thereof are as follows:

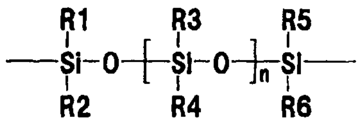 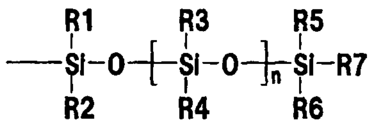 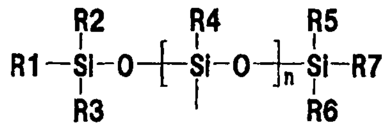

In the formulae above, R1 to R7 are each a C8-C20 alkyl group, and R1 to R7 may be the same or different to each other, and n is an integer of 0 to 80.

The thermoreversible gelling agent having the siloxane bond hardly crystallizes, and can enhance the stability of a gel. In addition, the gel tends to be softened, and this is effective for enhancing flexibility of the recording medium of the present invention. As the siloxane bond in the thermoreversible gelling agent becomes longer, the gel becomes softer, and the sol-gel transition temperatures of the dispersion medium tend to become lower. However, if the gel of the dispersion medium becomes excessively soft, the function of fixing the electrophoretic particles or the magnetophoretic particles may deteriorate and the safety may deteriorate. It is preferable that the length of the siloxane bond is properly controlled with respect to the sol-gel transition temperatures and flexibility of the dispersion medium set for the recording medium.

A preferable length of the siloxane bond in the thermoreversible gelling agent is defined as follows. That is, it is preferable that the number of silicon atoms A of the siloxane bond in the molecule of the thermoreversible gelling agent and the total number B of the amide bonds (-NHCO-) and urethane bonds (-NHCOO-) in the molecule satisfy the following equation:

$$0.5 \leq A/B \leq 4.0$$

When the ratio A/B is less than 0.5, the sol-gel transition temperatures of the dispersion medium may be excessively higher than sol-gel transition temperatures suitable for the rewritable recording medium, there is a possibility that the gel becomes unstable, or the gel becomes excessively hard and the flexibility becomes smaller. When the ratio A/B is greater than 4.0, on the other hand, there is a possibility that the sol-to-gel transition temperature becomes excessively lower than a sol-to-gel transition temperature suitable for the rewritable recording medium, or the gel becomes excessively soft, and the dispersion medium does not turn into a gel even at a normal temperature and the image retentiveness deteriorates.

Moreover, the thermoreversible gelling agent has an alkyl group having 8 or more carbon atoms in a molecular thereof. In order to grow aggregates formed by hydrogen bonding of the amide bond or urethane bond of the thermoreversible gelling agent into fibrous form and further form a three-dimensional network structure, a structure for causing aggregates to easily interact with each other is necessary. It is considered that long-chain alkyl group and long-chain alkylene group promote intermolecular interaction and contribute to the formation of the fibrous aggregates and three-dimensional network structure.

The number of carbon atoms of the alkyl group is 8 to 20.

As described above, any thermoreversible gelling agents cannot be used for the recording medium of the present invention.

It is important that the thermoreversible gelling agent for use in the recording medium of the present invention can be used with a high insulating dispersion medium, sol-gel transition temperature thereof is suitable for the environment in which the recording medium is used, the thermoreversible gelling agent has high temperature responsiveness to sol-gel transition (promptly turn the dispersion medium into a liquid as heated, and immediately turns the dispersion medium into a gel, as the temperature is returned to room temperature), and the thermoreversible gelling agent stably functions without being crystallized and collapsing a gel, even after sol-gel transition thereof is repeated.

Examples of the particularly preferable gelling agents for use as the thermoreversible gelling agent in the recording medium of the present invention are as follows. These are examples, and the thermoreversible gelling agent for use in the present invention is not limited to these examples.

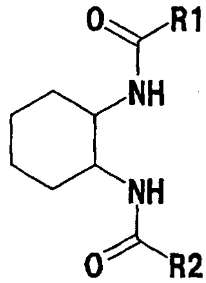

In the formula above, R1 and R2 are each a C8-C20 alkyl group, and R1 and R2 may be identical or different.

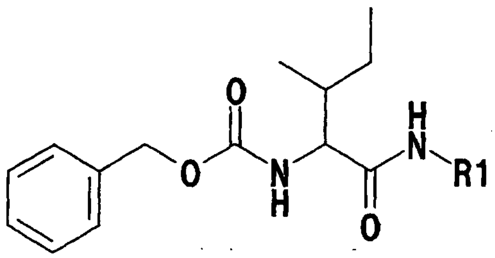

In the formula above, R1 is a C8-C20 alkyl group.

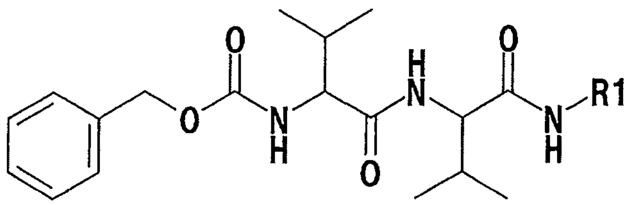

In the formula above, R1 is a C8-C20 alkyl group.

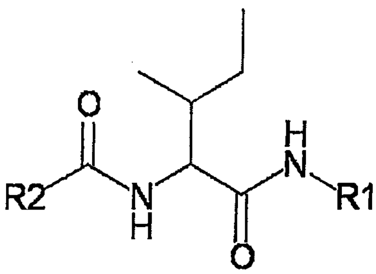

In the formula above, R1 and R2 are each independently an alkyl group, where at least one alkyl group is a C8-C20 alkyl group.

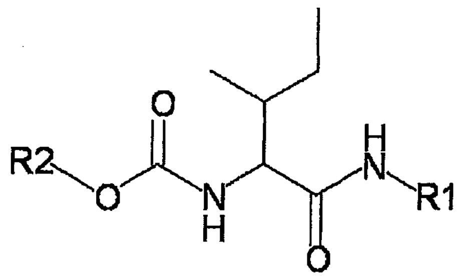

In the formula above, R1 and R2 are each independently an alkyl group, where at least one alkyl group is a C8-C20 alkyl group.

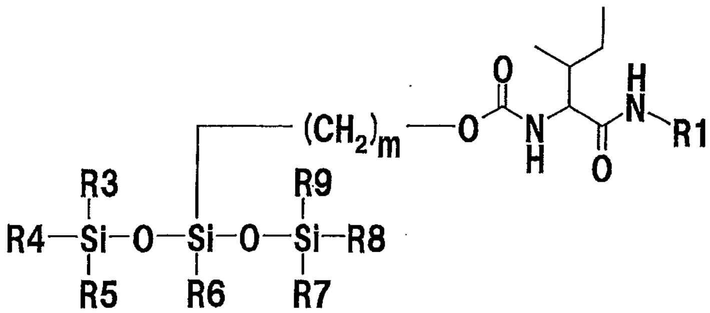

In the formula above, R1 is a C8-C20 alkyl group; R3 to R9 are each a hydrogen atom, a C1-C12 alkyl group, a C1-C12 alkoxy group, or an aryl group that may have a substituent, where R3 to R9 are identical or different; and m is an integer of 1 to 20.

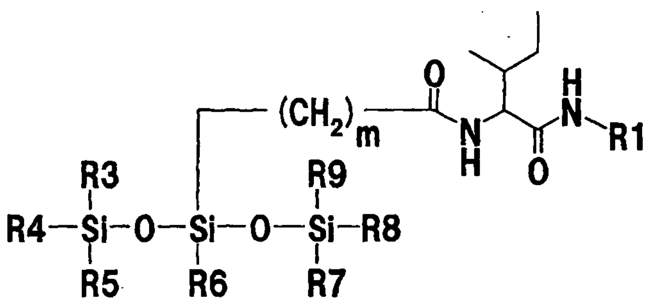

In the formula above, R1 is a C8-C20 alkyl group; R3 to R9 are each a hydrogen atom, a C1-C12 alkyl group, a C1-C12 alkoxy group, or an aryl group that may have a substituent, where R3 to R9 are identical or different; and m is an integer of 1 to 20.

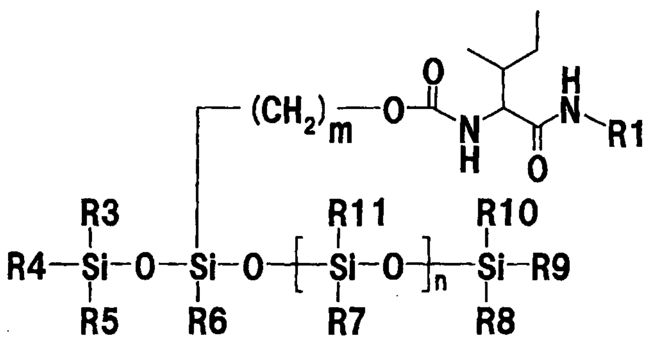

In the formula above, R1 is a C8-C20 alkyl group; R3 to R11 are each a hydrogen atom, a C1-C12 alkyl group, a C1-C12 alkoxy group, or an aryl group that may have a substituent, where R3 to R11 are identical or different; m is an integer of 1 to 20; and n is an integer of 1 to 80.

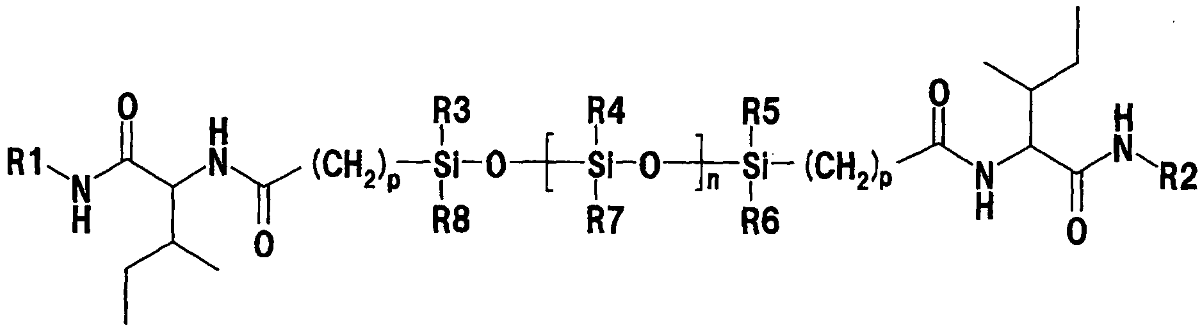

In the formula above, R1 and R2 are each a C8-C20 alkyl group; R3 to R8 are each a hydrogen atom, a C1-C12 alkyl group, a C1-C12 alkoxy group, or an aryl group that may have a substituent, where R3 to R8 are identical or different; n is an integer of 0 to 80; and p is an integer of 1 to 20.

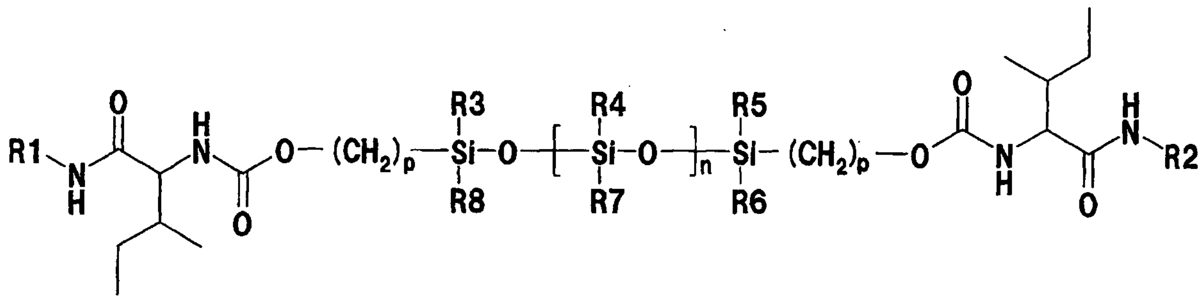

In the formula above, R1 and R2 are each a C8-C20 alkyl group; R3 to R8 are each a hydrogen atom, a C1-C12 alkyl group, a C1-C12 alkoxy group, or an aryl group that may have a substituent, where R3 to R8 are identical or different; n is an integer of 0 to 80; and p is an integer of 1 to 20.

An amount of the thermoreversible gelling agent in the image recording layer can be determined so that the dispersion medium is in the state of a gel during displaying an image and storing (for example, at room temperature), and the dispersion medium is in the state of a liquid when an image is recorded (written) (for example, at temperature higher than the temperature during displaying an image and storing). The amount of the thermoreversible gelling agent in the image recording layer is preferably 0.05% by mass to 50% by mass, more preferably 0.1% by mass to 20% by mass, and even more preferably 0.5% by mass to 10% by mass, relative to the dispersion medium. When the amount thereof is less than 0.05% by mass, the gelation of the dispersion medium is insufficient, which may impair image retentiveness. When the amount thereof is greater than 50% by mass, the viscosity of the dispersion medium may not be sufficiently reduced, or insoluble matter may be remained, when the recording medium is heated. As a result of this, movements of the electrophoretic particles and/or magnetophoretic particles may be inhibited to cause deterioration in image quality.

The gelation temperature and solation temperature of the dispersion medium in the image recording layer are appropriately selected depending on the intended purpose without any limitation, but they are preferably 20°C to 120°C, more preferably 30°C to 100°C, and even more preferably 40°C to 80°C.

The gelation temperature and solation temperature can be adjusted by appropriately selecting a type and an amount of the dispersion medium and a type and an amount of the thermoreversible gelling agent, or mixing different thermoreversible gelling agents at an appropriate ratio. When the gelation temperature and solation temperature are lower than 20°C, they pose no problem in a normal environment, however, the image retentiveness may deteriorate, as the recording medium is used outdoors where it is exposed to direct sunlight or in a sun-heated car. In particular, unlike a PLD, it is assumed that the recording medium of the present invention is expected to be used in various environments including outdoors, so that high image retentiveness is also required in these environments. When the gelation temperature and solation temperature are higher than 120°C, the time taken to reach the temperatures becomes longer, and thus the recording speed and image quality may be deteriorated.

Note that, the gelation temperature and the solation temperature are not necessarily the same, and there may be hysteresis between the gelation temperature and the solation temperature. When the solation temperature is higher than the gelation temperature, high image retentiveness can be maintained, and such dispersion medium can be effectively used. In the case where the solation temperature is 80°C whereas the gelation temperature is lower than 20°C, for example, the dispersion medium is once turned into a gel by cooling after recording an image, temperature of 80°C

is required to turn the dispersion medium into a sol again. In such case, it is possible to maintain image retentiveness in any environment in which use of the recording medium is expected.

Here, the gel-sol transition temperature means temperature at which the dispersion medium is turned from a sol (liquid) into a gel, or from a gel into a sol (liquid) by a function of the thermoreversible gelling agent.

A method for determining the gelation temperature and solation temperature of the dispersion medium containing the thermoreversible gelling agent is not particularly limited, as long as it is a method capable of determining temperature at which transition from a sol to a gel, or transition from a gel to a sol occurs. For example, the following methods can be used.

One of the methods is a method using differential scanning calorimetry (DSC). As for a device, a commercially available DSC analysis device is used. When a sample containing the thermoreversible gelling agent is set and a measurement of DSC is performed, an endothermic peak is observed during a heating process, and an exothermic peak is observed during a cooling process. The temperature of the endothermic peak in the heating process can be regarded as solation temperature, and the temperature of the exothermic peak in the cooling process can be regarded as gelation temperature. If the heating rate and the cooling rate are too fast, a performance to track the heat becomes low, leading to a large error in the value. Therefore, the heating rate and the cooling rate are preferably slow, e.g., 5 °C/min or less, more preferably 2 °C/min or less.

Moreover, examples of the aforementioned method include a method using dynamic mechanical analysis (DMA). As for a device, a device, which is generally called as a viscoelasticity measuring device, or rheometer, can be used for the measurement. When a sample containing the thermoreversible gelling agent is set and DMA is performed, a region where the storage elastic modulus (G') exceeds the loss elastic modulus (G"), and a region where the storage elastic modulus (G') and the loss elastic modulus (G") are crossed and then the loss elastic modulus (G") exceeds the storage elastic modulus (G') are observed. Typically, the sample is regarded as the state of a gel in the region where G' is larger than G" (G' > G"), and is regarded as the state of a sol in the region where G' is smaller than G" (G' < G"). The point at which G' and G" are crossed in a heating process can be regarded as the solation temperature, and the point at which G' and G" are crossed in a cooling process can be regarded as the gelation temperature. If the heating rate and the cooling rate are too fast, a performance to track the heat becomes low, leading to a large error in the value. Therefore, the heating rate and the cooling rate are preferably slow, e.g., 5 °C/min or less, more preferably 3 °C/min or less. Moreover, in order to prevent vaporization of the dispersion medium in the state of a sol, a surrounding area of the plate to which the sample is set can be sealed with oil, and this method is effective in some cases.

As other examples, various methods known in the art can be used for the measurement of the solation temperature and gelation temperature, and such methods include: a method using a tuning-fork vibration viscometer, in which an oscillator is vibrated in a liquid at a constant frequency, to measure the value of electric current with which the viscous resistance of the oscillator becomes exciting-force, to thereby measure a viscosity; a method using a rigid pendulum rheometer, in which a measuring part, which is a supporting point of a pendulum, on a sample, and a damping factor of the vibrations of the pendulum is measured; a method containing placing a colored liquid or object on a gel sample, and visually observing a change caused by heating.

-Other Components-

Examples of other components contained in the image recording layer include a dispersing agent, and a surfactant. However, the aforementioned other components are not limited to these examples, and may further contain other components.

--Dispersing Agent--

The dispersing agent is appropriately selected depending on the intended purpose without any limitation, provided that it is a dispersing agent capable of enhancing dispersibility of the electrophoretic particles and/or magnetophoretic particles in the dispersion medium, preventing aggregation of electrophoretic particles and/or magnetophoretic particles, and making the electrophoretic particles and/or magnetophoretic particles stably migrate.

The dispersing agent is preferably selected from those soluble to the dispersion medium, and having a function of preventing the electrophoretic particles and/or magnetophoretic particles from being aggregated to each other by electrostatic repulsion or steric hindrance by being adsorbed to the surfaces of the electrophoretic particles and/or magnetophoretic particles.

The dispersing agent is appropriately selected depending on the intended purpose without any limitation, but it is preferably a dispersing agent soluble in a nonpolar solvent, more preferably a polymer dispersing agent. This is because the dispersion stability of particles in a nonpolar organic solvent system greatly depends on the steric effect of a polymer compound.

The polymer dispersing agent is preferably a polymer dispersing agent having a basic group and a polymer

dispersing agent having an acid group, and the former dispersing agent is more preferable. The reason for this is because it is considered that, for example, in the case where a pigment, such as carbon black, is used as electrophoretic particles, a basic polymer dispersing agent is adsorbed to the surface of the pigment and acts as a positive charge-controlling agent, and exerts an effect of positively charging the pigment surface.

Examples of the polymer dispersing agent having a basic group include a polymer prepared from at least one monomer having a basic group (e.g., N-methylaminoethyl(meth)acrylate, N-ethylaminoethyl(meth)acrylate, N,N-dimethylaminoethyl(meth)acrylate, N,N-diethylaminoethyl(meth)acrylate, N,N-dibutylaminoethyl acrylate, N,N-di-tert-butylaminoethyl acrylate, N-phenylaminoethyl methacrylate, N,N-diphenylaminoethyl methacrylate, amino styrene, dimethylaminostyrene, N-methylaminoethylstyrene, dimethylaminoethoxystyrene, diphenylaminoethylstyrene, N-phenylaminoethylstyrene, 2-N-piperidylethyl(meth)acrylate, 2-vinylpyridine, 4-vinylpyridine, and 2-vinyl-6-methylpyridine) and at least one selected from the group consisting of alkyl ester of (meth)acrylic acid, and aryl ester of (meth)acrylic acid.

As for the polymer dispersing agent having a basic group, a commercial product can be used. As for the commercial product thereof, preferred are SOLSPERSE™ 17000 (single polyester, anchoring site: basic group), SOLSPERSE™ 16000 (single polyester, anchoring site: basic group), SOLSPERSE™ 41000 (single polyester, anchoring site: acid), and SOLSPERSE™ 3000 (single polyester, anchoring site: acid), all manufactured by The Lubrizol Corporation. As another example, Disperbyk-2050, 2150, 160, 161, 162, 163, 164, 166, 167, and 182 (all manufactured by BYK Japan KK) can also be preferably used.

--Surfactant--

The surfactant is added for the purpose of improving of the dispersion stability of the electrophoretic particles and/or magnetophoretic particles, obtaining a sufficient migration speed, and enhancing image retentiveness.

The surfactant is appropriately selected depending on the intended purpose without any limitation, but it is preferably a nonionic surfactant. If a surfactant other than nonionic surfactants is used, for example, an ionic surfactant is used, the ionic surfactant is adsorbed to the surfaces of the electrophoretic particles and magnetophoretic particles and the behavior of the electrophoretic particles and/or magnetophoretic particles may become unstable.

Examples of the nonionic surfactant include polyoxyethylene alkyl ether, polyoxyethylene alkyl allyl ether, polyoxyethylene alkylphenyl ether, polyoxyethylene glycol ester, polyoxyethylene fatty acid amide, polyoxyethylene fatty acid ester, polyoxyethylene polyoxypropylene glycol, glycerin ester, sorbitan ester, sucrose ester, polyoxyethylene ether of glycerin ester, polyoxyethylene ether of sorbitan ester, polyoxyethylene ether of sorbitol ester, fatty acid alkanol amide, amine oxide, polyoxyethylene alkyl amine, glycerin fatty acid ester, sorbitan fatty acid ester, polyoxyethylene sorbitan fatty acid ester, polyoxyethylene sorbitol fatty acid ester, and alkyl(poly)glycoxyde.

Among them, preferred are sorbitan trioleate, sorbitan laurate, sorbitan palmitate, sorbitan stearate, sorbitan tristearate, sorbitan oleate, sorbitan tribehenate, and sorbitan caprylate.

<Structural Example of Recording Medium>

One example of the recording medium of the present invention using cells is explained with reference to FIG. 2.

The recording medium illustrated in FIG. 2 contains a first base 1, a second base 2, and an image recording layer 7 sandwiched with these bases (namely, enclosed with these bases). The image recording layer 7 contains cells 8 provided at constant intervals, and a colored dispersion medium 3 containing white electrophoretic particles 4, and a thermoreversible gelling agent, which is encapsulated in the cells 8. As for the electrophoretic particles 4, particles of any color can be used other than white. Moreover, it is possible to provide a sealant 9 at the perimeter of the recording medium for the purpose of bonding the first base 1 with the second base 2 and sealing the image recording layer.

The recording medium illustrated in FIG. 3 contains a first base 1, a second base 2, and an image recording layer 7 sandwiched with these bases (namely enclosed with these bases). The image recording layer 7 contains cells 8 provided certain intervals, and a transparent dispersion medium 3 containing white electrophoretic particles 4, and black electrophoretic particles 5, which is encapsulated in each cell. As for the electrophoretic particles 4 and 5, particles of any color can be used other than white or black. Moreover, it is possible to provide a sealant 9 at the perimeter of the recording medium for the purpose of bonding the first base 1 with the second base 2 and sealing the image recording layer.

One example of the recording medium of the present invention using microcapsules is explained with reference to FIG. 4.

The recording medium illustrated in FIG. 4 contains a first base 1, a second base 2, and an image recording layer 7 sandwiched with these bases (namely enclosed with these bases). The image recording layer 7 contains a plurality of microcapsules 6, which are aligned, and each contain a colored dispersion medium 3 containing white electrophoretic particles 4, and a thermoreversible gelling agent. As for the electrophoretic particles 4, particles of any color can be used other than white.

The recording medium illustrated in FIG. 5 contains a first base 1, a second base 2, and an image recording

layer 7 sandwiched with these bases (namely enclosed with these bases). The image recording layer 7 contains a plurality of microcapsules 6, which are aligned, and each contain a transparent dispersion medium 3 containing white electrophoretic particles 4, black electrophoretic particles 5, and a thermoreversible gelling agent. As for the electrophoretic particles 4 and 5, particles of any color can be used other than white or black.

A thickness of the image recording layer is appropriately selected depending on the intended purpose without any limitation, but it is preferably 5 μm to 200 μm, more preferably 10 μm to 100 μm, and even more preferably 20 μm to 80 μm. When the thickness of the image recording layer is less than 5 μm, a contrast ratio may be low. When the thickness thereof is greater than 200 μm, recording speed or resolution may reduce, or it may be necessary to increase driving voltage. Note that, the thickness of the image recording layer indicates a thickness of the thickest part of the image recording layer. For example, as illustrated in FIGs. 6 and 7, in the case where a cross-sectional shape of the image recording layer is a shape other than a true circle, such as a substantially circle and a polygon, the length of the longest part of the image recording layer along the thickness direction is a thickness of the image recording layer.

The average thickness of the recording medium of the present invention is appropriately selected depending on the intended purpose without any limitation, but it is preferably 15 μm to 1,200 μm, more preferably 30 μm to 600 μm, and even more preferably 50 μm to 260 μm.

Moreover, it is possible and effective that the recording medium of the present invention has a structure where an electric conductive layer between the image recording layer and the base, and the electric conductive layer is electrically connected with an electrode formed on an external part of the recording medium. For example, FIG. 8 illustrates an example of a recording medium having an electroconductive layer provided between one of bases and an image recording layer, in which a first electric conductive layer 11 is provided between the first base 1 and the image recording layer 7 of the recording medium of FIG. 5.

The recording medium illustrated in FIG. 8 contains a first base 1, a second base 2, and an image recording layer 7 provided between these bases. In the image recording layer 7, a plurality of microcapsules 6 each containing a transparent dispersion medium 3 containing white electrophoretic particles 4, black electrophoretic particles 5, and a thermoreversible gelling agent are aligned, and fixed and insulated with a binder resin 10. A first electric conductive layer 11 is provided between the image recording layer 7 and the first base 1. Moreover, the first electric conductive layer 11 is electrically connected with a first electrode 13 formed on a surface of the recording medium. In this case, the second base 2 onto which an electric conductive layer has not been formed is preferably as thin as possible.

As another example of the recording medium different from the recording medium of FIG. 8, it is possible that a recording medium has a structure as illustrated in FIG. 9, where a second electric conductive layer 12 is provided between the second base 2 and the image recording layer 7, and the second electric conductive layer 12 and an electrode 14 are electrically connected. Further, as another example of the recording medium different from the recording medium of FIG. 9, it is possible that a recording medium has a structure as illustrated in FIG. 10, where an electric conductive base 15 is used instead of the second base 2.

In addition, FIG. 11 illustrates an example of the recording medium containing electric conductive layers between one base and the image recording layer and between the other base and the image recording layer, in which a first electric conductive layer 11 is provided between the first base 1 and the image recording layer 7 of the recording medium of FIG. 5, and a second electric conductive layer 12 is provided between the second base 2 and the image recording layer 7 thereof.

The recording medium illustrated in FIG. 11 contains a first base 1, a second base 2, and an image recording layer 7 provided between the first base 1 and the second base 2. In the image recording layer 7, a plurality of microcapsules 6 each containing a transparent dispersion medium 3 containing white electrophoretic particles 4, black electrophoretic particles 5, and a thermoreversible gelling agent are aligned, and fixed as insulated with a binder resin 10. A first electric conductive layer 11 is provided the image recording layer 7 and the first base 1, and a second electric conductive layer 12 is provided between the image recording layer 7 and the second base 2. Moreover, the first electric conductive layer 11 is electrically connected with a first electrode 13 formed on a surface of the recording medium, and the second electric conductive layer 12 is electrically connected with a second electrode 14 formed on an opposite surface of the recording medium.

Moreover, as another example of the recording medium different from the recording medium of FIG. 11, the first electrode 13 and the second electrode 14 can be provided on the same surface, as illustrated in FIG. 12.

Note that, the "external part of the recording medium" can be any area of the recording medium, at which it can be electrically connected to an electric field applying unit equipped with an image recording device. For example, the external surface of the recording medium indicates a surface, a back surface, and a side surface of the recording medium. Moreover, a case where the electric conductive layer and the electrode are integratedly mounted is depicted in FIGs. 8 to 12, but the electric conductive layer and the electrode can be provided as separate units.

As another example of the recording medium different from the recording medium of FIG. 11, the recording medium may have a structure illustrated in FIG. 13.

The recording medium of FIG. 13 contains a first base 1, a second base 15, and an image recording layer 7

provided between the first base 1 and the second base 15. In the image recording layer 7, a plurality of microcapsules 6 each containing a transparent dispersion medium 3 containing white electrophoretic particles 4, black electrophoretic particles 5, and a thermoreversible gelling agent are aligned, and fixed and insulated with a binder resin 10. A first electric conductive layer 11 is provided between the image recording layer 7 and the first base 1, and the first electric conductive layer 11 is electrically connected to a first electrode 13 formed in an external part of the recording medium. As for the base (second base) provided an opposite side of the recording medium, an electric conductive base 15 is used and provided to be electrically connected to the image recording layer 7.

(Image Recording Device, Image Recording Method, and Image Recording Set)

The image recording device used in the present invention is an image recording device used for recording an image on the recording medium of the present invention, and contains at least a heating unit, an electric field applying unit and/or a magnetic field applying unit. The image recording device of the present invention preferably further contains an image erasing unit, and may further contain other units, if necessary.

In accordance to the image recording method, an area of the image recording medium of the rewritable recording medium heated by the image recording device is smaller than, or larger than, or the same to an area of the image recording layer of the recording medium to which an electric field and/or magnetic field is applied. In the case where the heated area of the image recording layer of the rewritable recording medium is smaller than the area of the image recording layer of the recording medium to which an electric field or magnetic field is applied, for example, used is a system where an electric field and/or magnetic field is applied an entire area of the recording medium, and an image pattern is recorded by applying heat. In the case where the heated area of the image recording layer of the rewritable recording medium is larger than the area of the image recording layer of the recording medium to which an electric field or magnetic field is applied, for example, used is a system where an entire area of the recording medium is heated to turn the dispersion medium therein into a state of a sol, and an image pattern is recorded by applying an electric field and/or magnetic field. In the case where the heated area of the image recording layer of the rewritable recording medium is the same to the area of the image recording layer of the recording medium to which an electric field or magnetic field is applied, for example, used is a system where heat, and electric field and/or magnetic field are applied to an area of the recording medium to which an image is recorded.

The image recording set of the present invention contains at least the recording medium of the present invention, and an image recording device, and may further contain other members, if necessary.

<Image Recording Device >

The image recording device used in the present invention is an image recording device used for recording an image on the recording medium of the present invention, and contains at least a heating unit, an electric field applying unit and/or a magnetic field applying unit. The image recording device of the present invention preferably further contains an image erasing unit, and may further contain other units, if necessary. The heating unit, the electric field applying unit and/or the magnetic field applying unit, and the image erasing unit are not necessarily provided in this order in the image recording device, and they can be arbitrarily provided.

The image recording method contains at least a heating step, and an electric field applying step or magnetic field applying step, preferably further contains an image erasing step, and may further contain other steps, if necessary.

The image recording method can be suitably carried out by the image recording device. The heating step can be carried out by the heating unit. The electric field applying step or magnetic field applying step can be carried out by the electric field applying unit or magnetic field applying unit. The image erasing step can be carried out by the image erasing unit. The heating step, the electric field applying step and/or magnetic field applying step, and the image erasing step do not need to be performed in this order, and the order thereof can be appropriately set.

The image recording device is not integrated with the recording medium of the present invention, and is a so-called external driving-type image recording device. However, an embodiment that a recording medium and an image recording device are used as a set and are integrated together is also included in the scope of the present invention.

-Heating Unit and Heating Step-

The heating unit is appropriately selected depending on the intended purpose without any limitation, provided that it is a unit capable of heating the recording medium to temperature equal to or higher than gelation (liquidization) temperature of the dispersion medium in the image recording layer of the recording medium.

The heating unit is used differently in the case where an entire area of the image recording layer of the recording medium of the present invention is heated, and in the case where a part of the image recording layer is heated, depending on the image recording method. For example, the former is a case where an entire area of the image recording layer is

heated to turn into a state of a sol, followed by applying an electric field and/or magnetic field to a part of the image recording layer to record an image, and the latter is a case where, after (or white) an electric field and/or magnetic field is applied to an entire area of the image recording layer, a part of the image recording layer is heated and turned into a state of a sol, to thereby record an image. Of course, the order for preforming the heating step, and the electronic and/or magnetic field applying step may be opposite, or these steps may be performed at the same time.

In the case where the entire area of the image recording layer is heated, for example, a fixing device used for electrophotographic copiers or printers can be suitably used as the heating unit. Specifically, examples thereof include a heat roller. The heating step is appropriately selected depending on the intended purpose without any limitation, provided that the recording medium of the present invention can be heated, and for example, the heating step can be carried out by the heating unit.

FIG. 14 illustrates one example of the heating unit using a heat roller. The heating unit of FIG. 14 contains a heat roller 32 inside of which a heat source 31 is provided, a pressure roller 33, a high speed response thermistor 34, and a thermostat 35 for preventing over heating. Examples of the heat source 31 include a halogen heater, and a ceramic heater.

The heating roller 32 preferably has a configuration in which Si rubber is covered on a core metal with high rigidity such as iron and SUS.

As the pressure roller 33, a coating with a thickness of approximately 100 $\mu$m of Si rubber, fluorine-contained rubber or fluorine resin is coated on a core metal for smoothly feeding and preventing twining of a transfer material. In addition, it is preferable that a pressurizing arm is provided on an end portion of the pressurizing roller 33, and spring suspension is provided to allow a load to be applied between the pressurizing roller and the heating roller 32. A method is also possible that the pressurizing roller 33 is a heat roller enclosing a heater so as to heat the recording medium from both of the recording surface side and the back surface side, and this is effective for increasing the recording speed of the rewritable recording medium 30.

As illustrated in FIG. 15, moreover, a unit containing a belt-shaped film roll 39 disposed in contact with the recording medium 30 of the present invention, and a heat source 31 fixed on the inner side of the film so as to face the recording medium 30 can be used. This has advantages such as shortening the warm-up time and reducing the power consumption. In this heating unit, the belt-shaped film roll 39 is rotated by a roller 37 and a roller 38. Moreover, the recording medium 30 is pressurized by the pressure roller 33. Furthermore, the temperature of the heat source 31 is controlled by a temperature sensor 36.

The heating unit is, for example, an IH (Electromagnetic Induction Heater) type device. In the IH system, when a high-frequency power source (inverter) is connected to an exciting coil and a high-frequency current is supplied to the exciting coil, a high-frequency magnetic field is generated around an IH coil, and due to this magnetic field, an eddy current flows to a magnetic metal member and Joule heat is generated, whereby performing heating.

On the other hand, for recording an image on the recording medium to which an electric field and/or a magnetic field is applied by heating a part of the image recording layer, a thermal head can be used.

The thermal head is a device that performs recording on a recording medium by heating aligned heat resisting elements by selectively applying a potential according to image data to be recorded.

The thermal head can be appropriately selected from conventional thermal heads used for a thermosensitive printer, such as a direct thermal printer, and a thermal transfer printer, provided that it can heat the recording medium to temperature equal to or higher than the solation temperature. The thermal head is light in weight and small in size, requires low consumption power, and is capable of straight pass, hence is very suitable as an image forming unit used for the recording medium of the present invention.

The recording medium of the present invention uses the thermoreversible gelling agent, and therefore temperature responsiveness of the recording medium to sol-gel transition is high, and sol-gel transition of the dispersion medium can be sufficiently induced by the thermal head. Moreover, because of the points as mentioned, image formation can be performed not only by an electric field, but also by heat, it is very effective and useful.

As another method, moreover, a method using laser light can be applied. In this method, heating is performed using thermal energy of laser light, which is a non-contact heating system different from recording by a thermal head. With this method, recording can be performed from a position distant from the recording medium.

-Electric Field or Magnetic Field Applying Unit and Electric Field or Magnetic Field Applying Step-

The electric field applying unit or magnetic field applying unit is appropriately selected depending on the intended purpose without any limitation, provided that it is a unit configured to apply an electric field, or a magnetic field, or a combination thereof to the recording medium of the present invention.

The electric field applying step or magnetic field applying step is appropriately selected depending on the intended purpose without any limitation, provided that it is a step containing applying an electric field and/or a magnetic field to the recording medium of the present invention. For example, the electric field applying step or magnetic field

applying step can be performed by the electric field applying unit or magnetic field applying unit.

--Electric Field Applying Unit--

The electric field applying unit is used differently in the case where an electric field is applied to an entire area of the image recording layer of the recording medium of the present invention, and in the case where an electric field is applied to a part of the image recording layer, depending on the image recording method. The former is a case where, after (or during) an electric field is applied to an entire area of the image recording layer, an image is formed by the heating unit, and the latter is a case where, after an entire area of the image recording layer is heated by the heating unit, an electric field is applied to a part of the image recording layer to record an image.

As for a unit configured to apply an electric field to an entire area of the image recording layer of the recording medium, various chargers or dischargers are used, but such unit is particularly limited as long as it is capable of applying an electric field. Examples thereof include a corona charger, a roller charger, a brush charger, a blade charger, and a solid discharger.

The corona charger is a member that charges the rewritable recording medium by applying a high voltage to a wire, ionizing the air around the wire, and moving the ions to the surface of the rewritable recording medium, and has advantages of non-contact, high-speed followability, and high charge uniformity. The corona charger is formed by laying discharge wires such as tungsten wires and stainless steel wires with a diameter of 40 μm to 100 μm in 1 to 3 rows in a shield case provided with corrosion resistance, and gold-plated discharge wires are used for reducing discharge unevenness in many cases. As the corona charger, there are a corotron type without a grid and a scorotron type using metal thin wires or punching metal as a grid (control grid or suppressor grid). The discharge state is different between the case where a positive voltage is applied to the discharge wire and the case where a negative voltage is applied to the discharge wire, and when a positive voltage is applied, discharge occurs uniformly along the wire, and on the other hand, when a negative voltage is applied, discharge becomes point-like. Therefore, when a positive voltage is applied, charging becomes substantially uniform even without a grid, and on the other hand, when a negative voltage is applied, charge unevenness assuming linear shading occurs without a grid, so that a scorotron type provided with a grip is preferable for uniform charging.

The roller charger is electrically connected to or provided adjacent to the recording medium of the present invention, and can charge an entire surface of the recording medium while rolling with respect to the movement of the recording medium. The roller charger is typically composed of two layers of an elastic layer and a top layer provided on a core metal. Particularly for the elastic layer, for example, hydrin rubber or urethane rubber is used. In such rubber, a resistance control material such as carbon, graphite, activated carbon fiber, and an ionic conductor is dispersed to control the volume resistivity to $10^5$ Ω·cm to $10^8$ Ω·cm. The roller charger produces less ozone and NOx and allows setting of a low applied voltage, so that it is effective for reducing power consumption.

Moreover, it is also possible to use an electric field applying unit, other than a charger utilizing discharge. Such electric field applying unit is particularly suitably used for a recording medium, in which an electric conductive layer is provided between a base and an image recording layer, or an electric conductive base is used as a base. Use of these recording mediums is particularly preferable, as driving voltage can be significantly reduced, and it does not require a charger utilizing discharge.

In the case of the recording medium in which an electric conductive layers or electric conductive bases are provided on the both surfaces of the image recording layer, an electric field can be applied thereto by giving a difference between the voltage applied to the electric conductive layer or electric conductive base provided at the side from which the recording medium is viewed, and the voltage applied to the electric conductive layer or electric conductive base provided at the opposite side to the side from which the recording medium is viewed. For example, an electric field of 100V can be applied to the image recording layer by applying voltage of 100V to the electric conductive layer provided at the side from which viewed, through an electrode of the recording medium electrically connected with the electric conductive layer, and electrically connecting the electrode, which is electrically connected with the electrically conductive layer provided at the opposite side to the side from which viewed, with earth. The reverse connection thereof can apply an electric field of - 100V to the image recording layer.

In this case, as for the electric field applying unit, any unit can be used, as long as it is electrically connected to an electrode or electric conductive base, and is capable of applying an electric field to the image recording medium. For example, a brush-shaped or roller-shaped member having electric conductivity is preferably used. Specifically, a brush formed of electric conductive fibers or metal plating, or a rubber formed of electric conductive rubber or metal can be used.

The unit configured to apply a part of the image recording layer of the recording medium of the present invention to form an image is appropriately selected depending on the intended purpose without any limitation, provided that it is capable of forming a latent electrostatic image, and can form an image by applying an electric field to the recording medium. As for a system for forming the latent electrostatic image, an electrophotographic system, and an ion irradiating

system have been known, and these systems can be particularly effectively used in the present invention. In order to apply an electric field, a counter electrode is provided at the position opposite to the image forming unit via the recording medium.

---Electrophotographic Image Forming Unit---

The electrophotographic electric field applying unit is appropriately selected depending on the intended purpose without any limitation, and examples thereof include a unit configured to charge an image bearing member, and then exposing light corresponded to an image pattern to the image bearing member to form a latent electrostatic image on a surface of the image bearing member.
The recording medium of the present invention can be recorded by bringing the recording medium into contact with a surface of the image bearing member to which a latent electrostatic image has been formed.
The electrophotographic image forming unit contains at least an image bearing member, a charger, and an exposing unit, and may further contain other members, such as a diselectrification unit, if necessary. In order to apply an electric field to the recording medium of the present invention, a counter electrode is provided at the position opposite to the image bearing member serving as the image forming unit via the recording medium of the present invention.

----Image Bearing Member----

The image bearing member is appropriately selected depending on the intended purpose without any limitation, provided that it is capable of forming a latent electrostatic image. For example, the image bearing member may be a single-layer image bearing member containing a single-layer photosensitive layer, in which a charge generating material and a charge transporting material are mixed, provided on an electric conductive support formed of an aluminum or nickel element tube, or a belt, or may be a laminate image bearing member, in which a charge generating layer and a charge transporting layer are laminated. Further, the image bearing member may be a high resistant image bearing member, in which a protective layer is provided at a top surface thereof.
The image bearing member can be used both by positively charged and by negatively charged. As there are more variations of hole transporting materials than those of electron transporting materials, a negative charging system (in this case, black electrophoretic particles are positively charged) is more preferable in view of electrostatic properties. However, a positive charging system may be used in case of the single-layer image bearing member, as electron transportation and hole transportation are possible.

----Charger----

The charger is appropriately selected depending on the intended purpose without any limitation, provided that it is capable of charging the image bearing member. Examples of the charger include a corona charger, a roller charger, a solid discharger, and a brush charger. Among them preferred are a corona charger, and a roller charger.

----Exposing Unit----

The exposing unit is appropriately selected depending on the intended purpose without any limitation, provided that it is capable of forming a latent electrostatic image on a surface of the image bearing member, and examples thereof include a semiconductor laser (LD), a light emitting diode (LED), and an electroluminescence (EL). Among these, a semiconductor laser (LD) and a light emitting diode (LED) are preferable.

----Diselectrification Unit----

The diselectrification unit is appropriately selected depending on the intended purpose without any limitation, provided that it is capable of totally erasing the latent electrostatic image formed on the surface of the image bearing member, and examples thereof include a semiconductor laser (LD), a light emitting diode (LED), an electroluminescence (EL), a fluorescent light, a tungsten lamp, and a halogen lamp. Among these, a light emitting diode (LED) is preferable.

----Other Units----

Examples of the aforementioned other units include a cleaning unit, and a lubricating substance applying unit.
The cleaning unit is used for the purpose of removing foreign matter and discharge product deposited on the surface of the image bearing member. The cleaning unit is appropriately selected depending on the intended purpose without any limitation, and examples thereof include a blade, and a brush. The cleaning unit is preferably disposed to

be in contact with the image bearing member.

The lubricating substance applying unit is used for the purpose of enhancing lubricity of the surface of the image bearing member or removing a discharge product in combination with the cleaning unit.

The lubricating substance applying unit is appropriately selected depending on the intended purpose without any limitation, and examples thereof include a brush. The lubricating substance applying unit is preferably disposed to be in contact with the image bearing member and a solid lubricating substance. In the case where the lubricating substance applying unit is a brush, the lubricating substance is applied to the surface of the image bearing member by rotating the brush.

Examples of the lubricating substance include wax, a fluorine-containing resin, a silicone resin, a polyolefin-based resin, and fatty acid metal salt. Among them, fatty acid metal salt is preferable, and zinc stearate is more preferable.

----Counter Electrode----

The counter electrode is provided at the position opposite to the image bearing member to place the recording medium of the present invention between the counter electrode and the image bearing member. A material of the counter electrode is appropriately selected depending on the intended purpose without any limitation, provided that it conducts electricity, and examples thereof include platinum, gold, silver, copper, aluminum, zinc, nickel, titanium, and bismuth, alloys of these metals and carbon.

The counter electrode needs to be increased-in adhesion to the rewritable recording medium, so that, for example, a conductive roll member with elasticity is effectively used as the counter electrode.

FIG. 16 illustrates an example of an image forming unit using an image bearing member in the image recording device.

At the recording side of the recording medium 30 of the present invention, an image bearing member 40 is provided to be in contact with the recording medium 30. At the back surface side of the recording medium 30, a counter electrode 44 is provided to at the position opposite to the image bearing member 40 to place the recording medium 30 between the counter electrode 44 and the image bearing member 40. In the surrounding area of the image bearing member 40, provided are at least a charger 41 configured to charge the image bearing member 40, an exposing unit 42 configured to form a latent electrostatic image on a surface of the image bearing member 40, and a diselectrification unit 43 configured to erase the latent electrostatic image on the surface of the image bearing member 40.

--- Ion Irradiation Type Electric Field Applying Unit ---

The ion irradiation type electric field applying unit includes, for example, an ion flow generating section generally made of a discharge body, an electrode that controls a generated ion flow, and an opening for releasing an ion flow. The flow volume of ions generated in the ion flow generating section is controlled by an electric field.

With the ion irradiation type, under an atmosphere in which ion generation is possible such as in the atmosphere, a latent electrostatic image can be directly formed by irradiation of ions generated by discharge from a discharge electrode, so that an image can be directly recorded on the recording medium of the present invention.

As the ion irradiation type, for example, a heating discharge type is known (JP-B No. 3725092) in which discharge is generated by selectively heating discharge electrodes in a state where a voltage (discharge control voltage) that does not generate discharge only by being applied to the discharge electrodes but generates discharge by heating is applied. This type includes discharge electrodes and heating elements disposed corresponding to the respective discharge electrodes, and discharge is not generated only by applying a voltage to the discharge electrodes, and discharge is generated by heating. Therefore, ion generation can be controlled by the presence/absence of heating elements, and lower-voltage driving, cost reduction, and downsizing of the device are realized.

Specific example of the ion irradiation type electric field applying unit include an ion irradiation head having the aforementioned mechanism. The ion irradiation head contains a discharge body, and optionally a heating member and other members. Moreover, a counter electrode is provided at the position opposite to the ion irradiation head via the recording medium of the present invention.

Since image recording to the recording medium of the present invention is realized by heating and liquidizing the dispersion medium of the image recording layer, the aforementioned system, in which heating is performed during image recording, is very suitable for the present invention. In the image recording device, it is also possible that this one ion irradiation device (ion irradiation head) is used to serve as both of the heating unit and the electric field applying unit, and this is effective for cost reduction, reduction in power consumption, and downsizing of the device, however, the recording speed and the image quality may deteriorate, so that it must be used depending on the intended use.

FIG. 17 illustrates one example of the ion irradiation type image forming unit. In FIG. 17, at the position opposite to the ion irradiation head 45, a counter electrode 44 is provided to as to be in contact with the back surface of the recording medium 30. The ion irradiation head 45 is provided in contact with or adjacent to the recording surface of the

recording medium 30. Inside the ion irradiation head 45, a discharger (not illustrated), and optionally a heating member are provided. In the case of heating discharge system, a voltage is applied to a region in which discharge is generated by heating, and ion irradiation is carried out by temperature control by using the heating member.

Ions that passed through the opening of the ion irradiation head 45 are adhered to the recording medium 30 according to an electric field formed between the ion irradiation head 45 and the counter electrode 44, to thereby record an image.

--Unit for Forming Image by Applying Magnetic Field--

Similarly to the electric field applying unit, the magnetic field applying unit is used differently in the case where a magnetic field is applied to an entire area of the image recording layer of the recording medium of the present invention, and in the case where a magnetic field is applied to a part of the image recording layer, depending on the image recording method. The former is the case where an image is formed by the heating unit, while applying a magnetic field to an entire area of the image recording layer, and the latter is a case where, after an entire area of the image recording layer is heated by the heating unit, a magnetic field is applied to a part of the image recording layer to record an image.

The magnetic field applying unit configured to apply a magnetic field to an entire surface of the image recording layer of the recording medium is preferably a magnet, in particular, a permanent magnet such as an alnico magnet, ferrite magnet, neodymium magnet, and samarium-cobalt magnet, or electromagnet, and particularly preferably an electromagnet. The electromagnet is formed by winding a coil around a ferromagnetic iron core with high magnetic permeability, and when a current is supplied to the coil, due to its magnetic field, the iron core is magnetized and becomes a magnet, and when the current is cut off, the iron core returns to an unmagnetized state.

On the other hand, the magnetic field applying unit configured to apply a magnetic field to a part of the image recording layer of the recording medium is appropriately selected depending on the intended purpose without any limitation, provided that it can form a latent magnetic image, and can form an image by applying a magnetic field of the recording medium. Examples thereof include a magnetic head to be used for a magnetography magnetic printer.

---Magnetic Head---

The magnetic head is enabled to form a latent magnetic image when leakage magnetic flux is generated from the magnetic pole tip end portion by supplying a current to the coil of each channel. By scanning the recording medium with the magnetic head, magnetophoretic particles of the recording medium are made migrate, and an image is recorded on the recording medium. However, as the magnetic head, there are a multi-channel type and a full-line type, and a full-line type including aligned multichannel heads enables high-speed recording without the need of scanning of the heads. The material of the head is preferably a soft magnetic material to be used for a high-permeability core. The soft magnetic material is, for example, a high-permeability material with low coercivity and high saturation flux density such as Fe-Si-B-C amorphous alloy, FeP, permalloy (NiFe alloy), FeCoP, CoP, FeB, FeBSi, and silicon steel.

The magnetic printer is capable of forming a latent magnetic image on a latent magnetic image bearing member by using a magnetic head, and in the present invention, is also capable of performing recording by bringing the recording medium according to the present invention into contact with the latent magnetic image bearing member on which a latent magnetic image is formed.

It is possible to use an electric field applying unit and a magnetic field applying unit in combination, as the image forming unit. A multi-color printing can be realized by using the electric field applying unit and the magnetic field applying unit in combination, using electrophoretic particles and magnetophoretic particles, colors of which are different, in the recording medium of the present invention.

-Image Erasing Unit and Image Erasing Step-

The image erasing unit is appropriately selected depending on the intended purpose without any limitation, provided that it is configured to apply an electric field, or a magnetic field, or a combination thereof to the recording medium of the present invention to erase the image recorded on the recording medium.

The image erasing step is appropriately selected depending on the intended purpose without any limitation, provided that it contains applying an electric field, or a magnetic field, or a combination thereof to the recording medium of the present invention to erase the image recorded on the recording medium. For example, the image erasing step can be carried out by the image erasing unit.

--Unit for Erasing Image by Applying Electric Field-

The unit for erasing an image by applying an electric field is appropriately selected depending on the intended

purpose without any limitation, and examples thereof include an image erasing unit containing a counter electrode, and any of a charger, a discharger, an electric conductive brush, or electric conductive roller. Specifically, the electric field applying unit configured to apply an electric field to an entire surface of the image recording layer of the recording medium of the present invention, such as a corona charger, a roller charger, a solid discharger, a metal brush, and an electric conductive rubber roller, is also effectively used as the image erasing unit.

Examples of the counter electrode include the counter electrode mentioned in the descriptions of the electrophotographic image forming unit.

--Unit for Erasing Image by Applying Magnetic Field-

The unit for erasing an image by applying a magnetic field is appropriately selected depending on the intended purpose without any limitation. For example, the magnetic field applying unit configured to apply a magnetic field to an entire surface of the image recording layer of the recording medium of the present invention, such as permanent magnet, and electromagnet, is also effectively used as the image erasing unit.

By scanning the rewritable recording medium or the permanent magnet in a state where the permanent magnet is brought into contact with the recording surface and/or the back surface of the recording medium, a recorded image can be totally erased.

The electromagnet is capable of controlling its magnetic force by means of turning ON/OFF of current supply, so that for example, a head including aligned electromagnets is provided, and the head is scanned with respect to the entire surface of the recording medium in a state where the current supply is turned ON, whereby totally erasing a recorded image.

-Other Units and Other Steps-

Examples of the aforementioned other units include a cooling unit.

Examples of the aforementioned other steps include a cooling step.

--Cooling Unit and Cooling Step--

The cooling unit is appropriately selected depending on the intended purpose without any limitation, provided that it is a unit capable of cooling the image recording layer of the recording medium of the present invention to temperature equal to or lower than the gelation temperature thereof. Examples of the cooling unit include a cooling fan, a cooling roller, and a cooling belt. As the cooling roller and the cooling belt, for example, a water-cooling system inside of which water is circulated can be adopted.

The cooling step is appropriately selected depending on the intended purpose without any limitation, provided that it is a step containing cooling the image recording layer of the recording medium of the present invention to temperature equal to or lower than the gelation temperature thereof. For example, the cooling step can be carried out by the cooling unit.

By the cooling unit and the cooling step, the dispersion medium is turned into a gel soon after image recording, and image defects can be prevented, so that higher image quality is realized.

Note that, the image recording device of the image recording set of the present invention contains at least a heating unit, and an electric field applying unit and/or a magnetic field applying unit, preferably further contains an image erasing unit. However, two or more units selected from the group consisting of the heating unit, the electric field applying unit and/or the magnetic field applying unit, and the image erasing unit can be combined and used as one unit, which is effective in cost saving, consumption power saving, and down sizing of the device.

Specifically, it is possible to perform image formation while heating, using the heating unit and the electric field applying unit in combination. For example, the ion irradiation head is provided with a heating member, or a drum heater is mounted on the image bearing member capable of forming a latent electrostatic image.

It is also possible that the image erasing unit and the electric field applying unit are combined so that image recording is performed subsequently to total image erasing. For example, after totally erasing the image on the recording medium of the present invention by the electric field applying unit, an image can be used by means of the same electric field applying unit.

Similarly, it is also possible to combine the heating unit, the electric field applying unit and/or magnetic field applying unit, and the image erasing unit. For example, an image on the recording medium of the present invention is erased by initially outputting a solid pattern on the entire surface of the recording medium by the image bearing member equipped with a drum heater as the heating member, followed by outputting an image pattern.

As described above, as for the image recording device of the image recording set of the present invention, the heating unit, the image erasing unit, the electric field applying unit and/or the magnetic field applying unit can be combined for use, and all combinations are included in the scope of the present invention.

Each of the heating unit, the image erasing unit, and at least one of the electric field applying unit and the magnetic field applying unit provided may be plural in number. In particular, by installing a plurality of the heating units, the image quality may be improved. For example, an image is stably formed in any temperature environment by maintaining the temperature of the recording medium of the present invention with a plurality of the heating units from the time when the recording medium is passed the first heating unit to the time when an image is recorded. In the case where an image bearing member is used as the image forming unit, especially, gelation of the dispersion medium may be started when the recording medium, which has been heated by the heating unit in advance, is in contact with the image bearing member, if the image bearing member serving as the image forming unit is cold. Therefore, it may be effective to provide a drum heater serving as the heating member to the image bearing member to maintain the temperature of the recording medium high until image recording is completed.

One example of the electrophoretic image recording method using the recording medium of the present invention is explained with reference to FIGs. 18 and 19. However, the present invention is not limited to these examples.

The image recording device depicted in FIG. 18 contains a heating unit equipped with heating rollers 32 each containing a heat source 31 respectively provided with respect to both a recording surface and back surface of the recording medium 30 of the present invention, a image erasing unit 46 configured to charge an entire recording surface of the recording medium 30 by a corona charger to erase all the recorded image, an image forming unit configured to form an image on the recording medium 30 using an ion irradiation head 45, and a counter electrode 44, which is brought into contact with back surface of the recording medium 30 when the recorded image is all erased and an image is formed. The heating unit further contains a high speed response thermistor 34 and a thermostat 35.

The image recording device depicted in FIG. 19 contains a heating unit configured to heat the recording medium 30 through a belt-shaped film roll 39 that is suspended around and provided in contact with a heat source 31, an image erasing unit 46 configured to charge an entire recording surface of the recording medium 30 by means of a corona charger to erase the recorded image, an image forming unit containing an image bearing member 40 to which a latent electrostatic image can be repeatedly formed by means of a charger 41, an exposing unit 42, and a diselectrification unit 43, and a counter electrode 44, which is brought into contact with back surface of the recording medium 30 when the recorded image is all erased and an image is formed. In the heating unit, the belt-shaped film roll 39 is rotated by a roller 37, and roller 38. Moreover, the recording medium 30 is pressed by a pressure roller 33. Furthermore, temperature of the heat source 31 is controlled by a temperature sensor 36.

As illustrated in FIGs. 18 and 19, as the recording medium 30 is heated by the heating unit, the dispersion medium contained in the recording medium is turned into a liquid by a function of the thermoreversible gelling agent contained in the dispersion medium, so that the electrophoretic particles dispersed in the dispersion medium are allowed to move. Next, uniform voltage is applied to an entire recording surface of the recording medium 30 by the image erasing unit 46 configured to erase all the recorded image on the recording medium 30, so that the electrophoretic particles, which contribute to image formation, move to the opposite side of the image recording layer to the side thereof from which it is viewed. In the case where electrophoretic particles for constituting a background of an image are contained, these electrophoretic particles are moved to the side of the image recording layer from which it is viewed. In the case where positively charged black electrophoretic particles are contained in the dispersion medium, for example, the black electrophoretic particles are moved to the opposite side to the side thereof from which it is viewed by applying positive charge by the image erasing unit 46. In the case where negatively charged white electrophoretic particles are contained as well as the black electrophoretic particles, the black electrophoretic particles are moved to the opposite side to the side thereof from which it is viewed by applying positive charge and the white electrophoretic particles are moved to the side from which it is viewed, by applying positive charge by the image erasing unit 46. Subsequently, a latent electrostatic image corresponding to an image pattern is formed on the recording medium 30, to thereby record the image pattern on the recording medium 30.

In the case where an image forming device configured to form a negatively charged latent electrostatic image in an imaging area is used, for example, the positively charged black electrophoretic particles are moved to the side to be viewed, and no movement of the particles occurs in non-imaging area, so that a black image pattern is recorded on the recording medium 30. Thereafter, once the recording medium 30 is cooled to room temperature, the dispersion medium in the recording medium 30 is turned into a state of a gel by a function of the thermoreversible gelling agent, so that the electrophoretic particles contained in the dispersion medium cannot move, and the dispersion medium turns white (e.g., turns cloudy). As a result, the imaging area in which the black electrophoretic particles have moved to the side to be viewed is displayed in black, and other area is displayed in white, to thereby form an image. Moreover, the formed image is stably maintained even when stimuli is externally applied over a long period, as the dispersion medium is converted into a gel.

Another example of an image recording method of electrophoresis using the recording medium of the present invention will be exampled through FIGs. 20 and 21. Note that the present invention is not limited this example.

The image recording device depicted in FIG. 20 contains a thermal head 47 serving as an image forming unit configured to heat a certain area of the recording medium 30 of the present invention, an electric field applying unit 48

configured to electrically connect with a first electrode 13 formed in an external part of the recording medium and to apply an electric field to the image recording layer in the recording medium, and an electric field applying unit 49 configured to externally connect to a second electrode 14 or an electric conductive base 15 (not illustrated) formed on a back surface of the recording medium, and to apply an electric field to the image recording layer in the recording medium.

FIG. 20 illustrates the state where FIG. 21 is viewed from the side, and as for the recording medium, the recording medium illustrated as one example thereof in FIG. 13 is used. Once the recording medium 30 is set in the image recording device and is transported therein, the first electrode 13 formed in the external part of the recording medium 30 and the roller-shaped electric field applying unit 48 equipped with the image recording device are electrically connected to each other. Similarly, the electrode conductive base 15 formed on the back surface of the recording medium 30 and the roller-shaped electric field applying unit 49 equipped with the image recording device are electrically connected to each other. When an electric field is applied to the electric field applying units 48 and 49, the electric field is applied to the entire image recording layer 7. Note that, the first electric conductive layer 11 and the electric conductive base 15 are not electrically connected to each other, and they are insulated with the image recording layer 7. Moreover, as for other structural examples of FIG. 21, there are structures illustrated in FIGs. 22 and 23.

At the same time as the electric field is applied to the entire image recording layer 7, the predetermined area of the image recording layer 7 is heated by the thermal head 47. The area heated by the thermal head 47 is liquidized by a function of the thermoreversible gelling agent contained in the dispersion medium in the recording medium, and the electrophoretic particles therein are allowed to move by further applying an electric field to the entire area of the image recording layer 7.

When the recorded image in the entire area of the recording medium 30 is erased, the entire area of the image recording layer 7 is heated by the thermal heat 47, while applying an electric field to the entire area of the image recording layer 7, to thereby liquidize the dispersion medium. As a result, the electrophoretic particles contributing to image formation are moved to the opposite side to the side of the image recording layer from which the image recording layer is viewed, to thereby erase the entire area of the recording medium. In the case where positively charged black electrophoretic particles are contained in the dispersion medium, for example, the black electrophoretic particles are moved to the opposite side to the side to be viewed by positively charging the side of the image recording layer 7 from which it is viewed by means of the electric field applying units 48 and 49. In the case where negatively charged white electrophoretic particles are contained as well as the black electrophoretic particles, the white electrophoretic particles are moved to the side to be viewed. As a result, the entire surface turned into white so that a state where an image is erased can be created.

When an image pattern is recorded on the recording medium 30, the predetermined area of the image recording layer 7 is heated by the thermal head 47 to liquidize only the dispersion medium present in the heated area, while an electric field is applied to the entire image recording layer 7, so that the electrophoretic particles contributing to image formation are moved to the side of the image recording layer 7 from which the image recording layer 7 is viewed. In the case where negatively charged white electrophoretic particles are contained as well as the black electrophoretic particles, the white electrophoretic particles are moved to the opposite side to the side from which it is viewed. As a result, the predetermined image pattern can be recorded. In the case where positively charged electrophoretic particles are contained in the dispersion medium, for example, from the initial state that the entire area of the image recording layer 7 is in white, the black electrophoretic particles are moved to the side from which the image recording layer 7 by negatively charging the side of the image recording layer 7 from which it is viewed by means of the electric field applying units 48 and 49. In the case where negatively charged white electrophoretic particles are contained as well as the black electrophoretic particles, moreover, the white electrophoretic particles are moved to the opposite side to the side to be viewed. As a result, the predetermined black image pattern with the white background can be recorded.

When the recording medium, to which recording or erasing has been performed in the aforementioned manner, is cooled, the dispersion medium in the recording medium 30 is turned into a state of a gel by a function of the thermoreversible gelling agent so that the electrophoretic particles contained the dispersion medium cannot move. Therefore, an image on the recording medium is stably maintained, even when the recording medium is stored over a long period, or stimuli is externally applied thereto.

The aforementioned image recording device using the thermal head 47 has a very simple structure, and therefore it is very effective in downsizing, reducing the weight thereof, cost waving, and powder saving. Moreover, the recording medium having an electrode or electric conductive base, which is used for the aforementioned image recording device, is as thin as paper, and an electric field is directly applied to the image recording layer thereof, while maintaining flexibility. Therefore, it is possible to record a high contrast image thereon with low driving voltage, and this recording medium is particularly useful in the present invention. The image recording set is very useful as a portable rewritable printer.

The image recording set of the present invention contains the aforementioned recording medium, and an image recording device equipped with a heating unit configured to heat the recording medium, and an electric field and/or magnetic field applying unit configured to apply an electric field and/or magnetic field to the recording medium. The image recording set of the present invention include, not only an embodiment where a recording medium and an image

recording device, which are separately existed, are used as a set, but also an embodiment where a recording medium and an image recording device are integrated. Examples of the integrated image recording set will be illustrated in FIGs. 24 and 25.

FIG. 24 is the image recording set of the present invention, equipped with a heating unit 47 configured to perform recording and erasing of an image on the recording medium 30, and an electric field and/or magnetic field applying unit 51, which are integratedly mounted with the recording medium 30 of the present invention. Note that, as for the electric field and/or magnetic field applying unit, the image recording set is further equipped with a electric field and/or magnetic field applying unit 52, which is not illustrated. Moreover, the image recording set contains other units, such as an image erasing unit, and a cooling unit.

In the image recording set depicted in FIG. 24, the recording medium 30 is fixed, and an image can be recorded on and erased from the recording medium 30, by moving the heating unit 47, and the electric field and/or magnetic field applying units 51 and 52 (not illustrated), which had been integrated with the recording medium 30, over an external surface of the recording medium 30.

Moreover, another example, which is different from FIG. 24, is depicted in FIG. 25. FIG. 25 illustrates the image recording set of the present invention equipped with a heating unit 47 configured to record and erase an image on the recording medium 30, and an electric field and/or magnetic field applying unit 51, which are integratedly mounted with the recording medium 30 of the present invention. Note that, as for the electric field and/or magnetic field applying unit, the image recording set is further equipped with an electric field and/or magnetic field applying unit 52, which is not illustrated. Moreover, the image recording set may further contain other units, such as an image erasing unit, and a cooling unit.

In the image recording set depicted in FIG. 25, the heating unit 47, and the electric field and/or magnetic field applying units 51 and 52 (not illustrated) are fixed, and an image can be recorded on and erased from the recording medium 30 by moving the recording medium 30 in contact with the heating unit 47, and the electric field and/or magnetic field applying units 51 and 52 (not illustrated).

These integrated image recording sets can be used for a signboard, advertising, and guide display, in which a still image is mainly displayed, and are very effective.

## Examples

The present invention will be concretely explained through Examples and Comparative Examples, hereinafter, but Examples shall not be construed as to limit a scope of the present invention. Example 14 is not an embodiment of the invention. Note that, in Examples and Comparative Examples, "part(s)" denotes "part(s) by mass." Moreover, "%" is "% by mass" other than the case of humidity (%RH).

### (Example 1)

<Production of Black Electrophoretic Particles>

In 180 parts of toluene, 14 parts of methacryloxypropyl-modified silicone (SILAPLANE™ FM-0711 manufactured by Chisso Corporation), 1 part of dimethylaminoethyl methacrylate (manufactured by Tokyo Chemical Industry Co., Ltd.), and 0.1 parts of azobis dimethylvaleronitrile serving as a polymerization initiator were dissolved, and the resulting solution was heated for 6 hours at 60°C under nitrogen atmosphere. After the reaction ended, the toluene was removed by vaporization, to thereby obtain a dispersing agent.

Next, in a reaction vessel equipped with a stirrer, a thermometer, and a reflux condenser, 1 part of the dispersing agent, 1.5 parts of carbon black, and 200 parts of silicone oil were mixed, and irradiated with ultrasonic waves for 1 hour by a homogenizer while being cooled with ice, to thereby disperse the carbon black. To the resultant, 6 parts of methyl methacrylate, 3 parts of methacryloxypropyl-modified silicone (SILAPLANE™ FM-0725, manufactured by Chisso Corporation, molecular weight: about 10,000), 0.1 parts of N,N-dimethylaminopropylacryl amide, and 0.05 pars of azobis dimethylvaleronitrile serving as a polymerization initiator were added, and the resulting mixture was allowed to react for 6 hours at 60°C. After the reaction ended, only a solid component was collected, and dried, to thereby obtain the intended black electrophoretic particles (average particle diameter: 300 nm).

<Production of White Electrophoretic Particles>

A reaction vessel equipped with a stirrer and a temperature control unit was charged with a solvent, which had been prepared by mixing 93 parts of ethanol and 7 parts of water, and the solvent was adjusted to pH 4.5 with glacial acetic acid. To this, 16 parts of 3-(trimethoxysilyl)propyl methacrylate was added and dissolved, followed by adding 100 parts of titanium oxide. The resulting mixture was stirred for 10 minutes. Subsequently, 180 parts of ethanol was added,

and stirred. A solid content collected from the mixture by centrifugal separation was left to stand for 24 hours, followed by vacuum drying for 4 hours at 70°C, to thereby obtain surface-treated titanium oxide.

Next, a reaction vessel equipped with a stirrer, a thermometer, and a reflux condenser was charged with 70 parts of toluene, and 50 parts of lauryl methacrylate, and the lauryl methacrylate was dissolved therein. To the resulting solution, 40 parts of the surface-treated titanium oxide, and 25 parts of toluene to which 0.3 parts of azobis isobutyronitrile had been dissolved were added, and the resulting mixture was heated and stirred for 7 hours at 70°C under nitrogen atmosphere. After the reaction ended, the solid component was separated and refined by repeatedly performing centrifugal separation and washing with toluene, and the resultant was finally vacuum dried for 4 hours a 70°C, to thereby obtain the intended white electrophoretic particles (average particle diameter: 400 nm).

<Preparation of Dispersion Liquid for Forming Image Recording Layer>

To 5.7 parts of an isoparaffin-based hydrocarbon solvent (Isopar™ G, manufactured by ExxonMobil Chemical, initial boiling point: 166°C) serving as a dispersion medium, 0.2 parts of the black electrophoretic particles, 4.0 parts of the white electrophoretic particles, 0.05 parts of a dispersing agent (Solsperse™ 17000, manufactured by The Lubrizol Corporation), and 0.05 parts of a surfactant (sorbitan trioleate, SPAN™85) were added, and the mixture was dispersed by applying ultrasonic waves, to thereby prepare a particle dispersion liquid. Next, to the particle dispersion liquid, 0.3 parts of the thermoreversible gelling agent represented by the following structural formula A1 was added, and the resulting mixture was heated and dissolved at the temperature higher than the solation temperature of the added thermoreversible gelling agent by 10°C with stirring, to thereby prepare a dispersion liquid for forming an image recording layer.

Note that, the sol-gel transition temperature of the thermoreversible gelling agent was measured by adding the thermoreversible gelling agent to the isoparaffin-based hydrocarbon solvent serving as a dispersion medium, heating the mixture to melt and stir, followed by cooling to obtain 5% gel, and measuring the gel by differential scanning calorimetry (DSC). The measurement of DSC was performed with a cycle containing heating at the rate of 2°C/min and cooling at the rate of 2°C/min. As a result, the endothermic peak temperature during the heating was 50.8°C, the exothermic peak temperature during the cooling was 40.8°C. In the present invention, the endothermic peak temperature obtained by the DSC measurement is determined as solation temperature, and the exothermic peak temperature obtained by the DSC measurement is determined as gelation temperature. Moreover, a measurement of dynamic viscoelasticity (DMA) was also performed. The measurement was performed with a cycle containing cooling at the rate of 1°C/min and heating at the rate of 2°C/min. It was confirmed from the result thereof that the solation temperature and the gelation temperature were substantially the same to the results of the DSC.

Moreover, in the thermoreversible gelling agent represented by the following structural formula A1, the number of silicon atoms (A) was 4, a total number of the amide bonds and urethane bonds (B) was 4, and A/B = 1.0.

<Structural Formula A1>

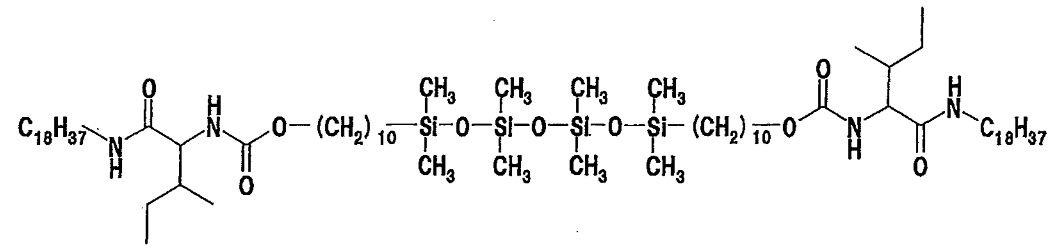

<Formation of Image Recording Layer using Microcapsules>

Gelatine was added to water, and the resulting mixture was heated to 40°C and stirred for 30 minutes, to thereby obtain 100 parts of a 2.5% gelatine aqueous solution. Next, the temperature of the gelatine aqueous solution was raised to the temperature higher than the solation temperature of the thermoreversible gelling agent added in the dispersion liquid for forming an image recording layer by 10°C. To this, 15 parts of the dispersion liquid for forming an image recording layer, which had been heated to the temperature higher than the solation temperature of the added thermoreversible gelling agent by 10°C, was gently added from a liquid surface of the gelatin aqueous solution, with stirring. Next, 25 parts of a 5% Arabian gum aqueous solution was added thereto, and a resulting mixture was continuously stirred for 30 minutes. Thereafter, to the aqueous solution, a 10% acetic acid aqueous solution was added dropwise until pH became 3.5, and the mixture was continuously stirred for 30 minutes. Next, the temperature of the resultant was set to 5°C, and the temperature was maintained the same for 60 minutes. To this, 1.2 parts of a 25% glutaraldehyde

aqueous solution was slowly added dropwise, and the mixture was continuously stirred for 30 minutes. Next, a 10% sodium hydroxide aqueous solution was slowly added dropwise until pH became 9.0, and the mixture was continuously stirred for 30 minutes. Thereafter, the temperature of the resultant was raised to 40°C, and the resultant was stirred for 120 minutes, followed by cooling to room temperature and stirred for 24 hours. Finally, the resulting capsule slurry was repeatedly washed until pH of washing water became 5.0, followed by carrying out classification using a sieve, to thereby obtain microcapsule slurry.

<Production of Rewritable Recording Medium Using Microcapsules>

To the obtained microcapsule slurry, a water-soluble urethane resin liquid was added, and the mixture was stirred. Thereafter, the resultant was applied onto a base, which was a polyamide film having a thickness of 20 μm, by blade coating, to thereby form an image recording layer having a thickness of about 50 μm. Next, the image recording layer was dried for 30 minutes at 70°C, and then a UV-curable resin liquid was applied onto the image recording layer by blade coating so that a thickness from the base to the applied UV-curable resin liquid became about 60 μm, followed by applying UV light to cure the UV-curable resin. Thereafter, the resultant was dried for 30 minutes at 80°C, to thereby produce a rewritable recording medium of Example 1 using microcapsules.

(Example 2)

A rewritable recording medium using cells was produced in the following manner using the dispersion liquid for forming an image recording layer prepared in Example 1.

<Formation of Image Recording Layer Using Cells>

Onto a base, which was a polyamide film having a thickness of 20 μm, a curable epoxy resin was applied, and turned into a semi-cured state. Thereafter, an emboss process was carried out onto the epoxy resin by pattern embossing, to thereby form a group of cells in a honey comb shape where hexagonal recesses each having a diagonal of about 200 μm at largest were aligned in a matrix shape. UV light was applied to the group of cells to cure the epoxy resin, to thereby provide the group of cells having the thickness of about 50 μm on the base.

<Production of Rewritable Recording Medium Using Cells>

A spacer, which had a thickness of 50 μm and had thermoset adhesive faces on both surfaces thereof, was bonded to the perimeter of the group of the cells in the shape of a frame. The resultant was set on a hot plate, and heated to the temperature higher than the solation temperature of the added thermoreversible gelling agent by 10°C, followed by injecting the dispersion liquid for forming an image recording layer, which had been heated to the temperature higher than the solation temperature of the added thermoreversible gelling agent by 10°C. Then, the dispersion liquid for forming an image recording layer was quickly leveled by a squeegee to fill the cells, and a base, which was a polyamide film having a thickness of 20 μm, was bonded thereon using a roller so as not to trap air bubbles therein. Thereafter, a UV curable sealant was injected between the two bases, and spread by a roller. Then the UV curable sealant was cured by applying UV light to seal, to thereby obtain a rewritable recording medium of Example 2 using cells.

<Evaluation by Image Recording Device>

An image recording device was designed to linearly transport each of the recording mediums of Examples 1 and 2, and equipped with a charging unit using a corotron, which was configured to apply an electric field to the recording medium, a heating unit using a thermal head, which was configured to heat the recording medium with a thermal head, and a cooling unit using a brass roller.

The heating unit was set so that surface temperature of each of the recording mediums of Examples 1 and 2 became equal to or higher than the solation temperature of the thermoreversible gelling agent contained in the recording medium. As for an image pattern for the thermal head, a pattern where a solid image was recorded on the entire surface of the recording medium, a pattern where characters were recorded, and a pattern where a solid image was recorded on the only left half and bottom half were input. To the charging unit, a counter electrode was provided at the position facing the charging unit via each of the recording mediums of Examples 1 and 2.

-Image Quality-

An entire surface of each of the recording mediums of Examples 1 and 2 was positively charged by the charging

unit, and heated to the temperature higher than the solation temperature of the added thermoreversible gelling agent by the heating unit to liquidize the dispersion medium to make the white particles migrate to the side of the surface (make the black particles migrate to the side of the back surface) so that a white solid image was recorded (an image was erased) on the entire surface. In this state, the recording medium was cooled to room temperature (25°C). As a result, it was confirmed that the dispersion medium was turned into the state of a gel, and the entire surface was turned in white and the image was erased. When the density was measured with a portable spectrophotometer (X-RITE™ 939 manufactured by X-Rite, Inc.), the density of the recording medium of Example 1 was 0.23 and the density of the recording medium of Example 2 was 0.20.

Thereafter, the entire surface of each of the recording mediums was negatively charged by the charging unit, and the right half of each of the recording mediums was again heated to the temperature higher than the solation temperature of the added thermoreversible gelling agent by the heating unit to liquidize the dispersion medium to make the white particles migrate to the side of the back surface (make the black particles migrate to the side of the surface) so that a black solid image was recorded. In this state, the recording medium was cooled to room temperature. As a result, it was confirmed that the dispersion medium was turned into the state of a gel, and an image, in which the right half of each recording medium was in black and the left half thereof was in which, was clearly recorded. When the density was measured with a portable spectrophotometer (X-RITE™ 939 manufactured by X-Rite, Inc.), the density in the left half was 0.23 and the density in the right half was 1.10 in Example 1, and the density in the left half was 0.20 and the density in the right half was 1.08 in Example 2. It was confirmed that high contrast was attained.

The density was measured at 5 positions with the portable spectrophotometer (X-RITE™ 939 manufactured by X-Rite, Inc.), and based on a mean value, the image density was obtained.

-Rewritability-

Characters were repeatedly recorded 30 times on each of the recording mediums of Examples 1 and 2, by the thermal head by carrying out the image erasing process and image recording process in the same manner as the above as one set. As a result, no deterioration was confirmed in any of the recording mediums during the image erasing and image recording, and it was confirmed that these recording mediums were rewritable.

-Image Retentiveness-

After recording an image on each of the recording mediums of Examples 1 and 2 in the same manner as the above, each recording medium was brought into contact with a finger, metal, and an electrostatically-charged object. As a result, no change in the image quality and image density was observed, and it was confirmed that the recording mediums had excellent image retentiveness to external factors (electrostatics). Moreover, it was confirmed that such effect could be attained without operating the cooling unit.

Moreover, the recording mediums of Examples 1 and 2, to each of which a black solid image was recorded only in a right half thereof, were left to stand for 2 months at 23°C and 55%RH. During this period, the dispersion medium was stayed in the state of a gel. The density of each of the recording mediums after being left to stand was measured by a portable spectrophotometer (X-RITE™ 939 manufactured by X-Rite, Inc.). As a result, the recording medium of Example 1 had the density of 0.24 in a left half thereof, and the density of 1.11 in a right half thereof, and the recording medium of Example 2 had the density of 0.21 in a left half thereof, and the density of 1.06 in a right half thereof, and the both recording mediums had excellent image retentiveness. Thereafter, each of the recording mediums was brought into contact with an electrostatically-charged object, but no change was observed in image quality and image density. It was confirmed that these recording mediums had excellent image retentiveness to external factors (electrostatics). Moreover, it was also confirmed that each of the recording mediums after being stored for 2 months desirably reversed colors as an image erasing process and image recording process were performed again.

-Low Cost-

The recording medium had an extremely simple structure including the base, the image recording layer, and the protective layer, did not an expensive electrode, and could be easily produced by blade coating, and therefore the recording medium could be produced at low cost. As the recording medium could be produced by a coating process, moreover, it was possible to produce a recording medium of a large area at low cost, and a size of a recording medium could be freely controlled.

-Safety-

When the recording medium was cut using a cutter, the isoparaffin-based hydrocarbon solvent serving as a

dispersion medium, which was contained in the microcapsules, was turned into a gel, and hence did not leak. Therefore, it was confirmed that a risk of being in contact with human bodies was significantly reduced, and the recording medium had excellent safety.

-Flexibility and Fastness Properties-

The recording medium had an extremely simple structure including the base, the image recording layer, and the protective layer, and did not use an electrode, which is not resistant with bending. Therefore, it was confirmed that the recording medium had high flexibility like paper. As the recording medium was thin and light, moreover, the recording medium would not be broken even when it was dropped. Therefore, it was confirmed that the recording medium also had excellent fastness properties. Further, the recording medium did not tear or wrinkled as moisture was deposited thereon, and thus it was found that the recording medium had high durability compared to conventional paper.

(Comparative Examples 1 to 2)

Rewritable recording mediums of Comparative Examples 1 and 2 were produced in the same manner as in Examples 1 and 2, respectively, provided that the thermoreversible gelling agent used in Examples 1 and 2 was not added.

-Image Quality-

In the same manner as in Examples 1 and 2, an entire surface of each of the recording mediums of Comparative Examples 1 and 2 was positively charged, followed by heated to record a white solid image (erase an image). The density was measured in each of the recording mediums by means of a portable spectrophotometer (X-RITE™ 939 manufactured by X-Rite, Inc.). As a result, the density of the recording medium of Comparative Example 1 was 0.20, and the density of the recording medium of Comparative Example 2 was 0.16.

Thereafter, in the same manner as in Examples 1 and 2, an entire surface of each of the recording mediums was negatively charged, followed by recording a black solid image on only a right half thereof. The density was measured by a portable spectrophotometer (X-RITE™ 939 manufactured by X-Rite, Inc.). As a result, the density of the recording medium of Comparative Example 1 was 1.15 in a left half thereof, and 1.15 in a right half thereof, and the density of the recording medium of Comparative Example 2 was 1.16 in a left half thereof, and was 1.17 in a right half thereof, and the image pattern could not be recorded. Moreover, it was observed that noise appeared on the image due to electrostatics when the recording medium was taken out from the image recording device.

-Rewritability-

Characters were repeatedly recorded 30 times on each of the recording mediums of Comparative Examples 1 and 2, by the thermal head by carrying out the image erasing process and image recording process in the same manner as in Examples 1 and 2. However, it was repetition of recording of a white solid image and a black solid image on the entire surface thereof, and recording of characters could not be confirmed.

-Image Retentiveness-

After recording an image on each of the recording mediums of Comparative Examples 1 and 2 in the same manner as the above, each recording medium was brought into contact with a finger, metal, and an electrostatically-charged object. As a result, a noise was appeared the image by easily reversing the color, and it was clear that the recording mediums had low image retentiveness to external factors (electrostatics).

Moreover, the recording mediums of Comparative Examples 1 and 2, each of which had been positively charged to record a white solid image on an entire surface thereof, and the recording mediums of Comparative Examples 1 and 2, each of which had been negatively charged to record a black solid image on an entire surface thereof were left to stand for 2 months at 23°C and 55%RH. Each of the recording mediums after being left to stand was subjected to the measurement of the density by means of the portable spectrophotometer (X-RITE™ 939 manufactured by X-Rite, Inc.). The white solid image on the recording medium of Comparative Example 1 had the density of 0.42, the white solid image on the recording medium of Comparative Example 2 had the density of 0.46, the black solid image on the recording medium of Comparative Example 1 had the density of 0.84, and the black solid image on the recording medium of Comparative Example 2 had the density of 0.82. Any of these images had slightly gray color. Thereafter, each of the recording mediums was brought into contact with an electrostatically-charged object. As a result, a noise appeared on the image, and it was confirmed that they did not have image retentiveness. Moreover, the recording mediums after being stored for 2 months were again subjected to the image erasing process and image recording process. As a result,

it was confirmed that the color of the image was desirably reversed.

(Examples 3 to 4)

Rewritable recording mediums of Examples 3 and 4 were produced in the same manner as in Examples 1 and 2, respectively, provided that the thermoreversible gelling agent was replaced with the thermoreversible gelling agent represented by the following structural formula A2.

The sol-gel transition temperature of the thermoreversible gelling agent represented by the following structural formula A2 was measured in the same manner as in Example 1. As a result, the endothermic peak temperature during the heating was 59.0°C, and the exothermic peak temperature during the cooling was 24.2°C.

Moreover, in the thermoreversible gelling agent represented by the following structural formula A2, the number of silicon atoms (A) was 4, a total number of the amide bonds and urethane bonds (B) was 4, and A/B = 1.0.

<Structural Formula A2>

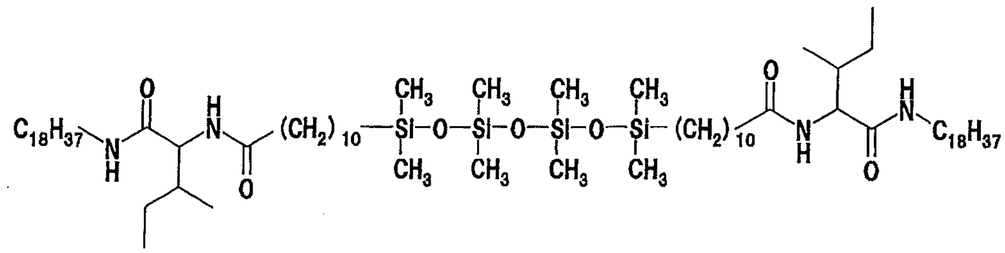

-Image Quality-

In the same manner as in Examples 1 and 2, an entire surface of each of the recording mediums of Examples 3 and 4 was positively charged, followed by heated to record a white solid image (erase an image). The density was measured in each of the recording mediums by means of a portable spectrophotometer (X-RITE™939 manufactured by X-Rite, Inc.). As a result, the density of the recording medium of Example 3 was 0.24, and the density of the recording medium of Example 4 was 0.21.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE ™939 manufactured by X-Rite, Inc.). As a result, the density of the recording medium of Example 3 was 0.23 in a left thereof, and 1.14 in a right half thereof, and the density of the recording medium of Example 4 was 0.21 in a left half thereof, and 1.15 in a right half thereof. It was confirmed that a high contrast could be attained.

-Rewritability-

In the same manner as the above, characters were repeatedly recorded 30 times on each of the recording mediums of Examples 3 and 4 by the thermal head by carrying out the image erasing process and image recording process as one set. As a result, no deterioration was observed in the image during both erasing and recording of the image, and it was confirmed that an image was repeatedly rewritable.

-Image Retentiveness-

After recording an image on each of the recording mediums of Examples 3 and 4 in the same manner as the above, each recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low and the solation temperature was high, high image retentiveness could be attained once the recording medium was cooled and the dispersion medium was turned into a gel.

Moreover, the recording mediums of Examples 3 and 4, in a right half of each of which a black solid image had been recorded, were left to stand for 2 months at 23°C and 55%RH. Each of the recording mediums after being left to stand was subjected to the measurement of the density by means of the portable spectrophotometer (X-RITE™ 939

manufactured by X-Rite, Inc.). The recording medium of Example 3 had the density of 0.28 in a left half thereof, and the density of 1.11 in a right half thereof, and the recording medium of Example 4 had the density of 0.24 in a left half thereof, and the density of 1.10 in a right half thereof, and excellent image retentiveness was attained.

Thereafter, each of the recording mediums was brought into contact with an electrostatically-charged object. As a result, no change was observed in image quality and image density, and it was confirmed that the recording mediums had excellent image retentiveness to external factors (electrostatics). Moreover, each of the recording mediums after being stored for 2 months was again subjected to the image easing process and image recording process. As a result, it was confirmed that the color of the image was desirably reversed.

(Examples 5 to 6)

Rewritable recording mediums of Examples 5 and 6 were produced in the same manner as in Examples 1 and 2, respectively, provided that the thermoreversible gelling agent was replaced with the thermoreversible gelling agent represented by the following structural formula A3.

The sol-gel transition temperature of the thermoreversible gelling agent represented by the following structural formula A3 was measured in the same manner as in Example 1. As a result, the endothermic peak temperature during the heating was 44.2°C, and the exothermic peak temperature during the cooling was 25.5°C.

Moreover, in the thermoreversible gelling agent represented by the following structural formula A3, the number of silicon atoms (A) was 3, a total number of the amide bonds and urethane bonds (B) was 2, and A/B = 1.5.

<Structural Formula A3>

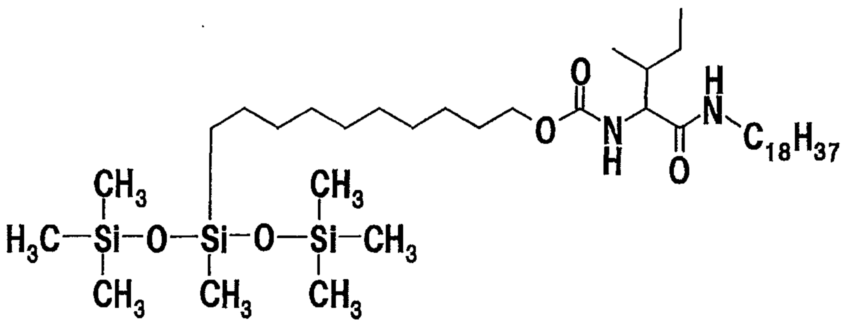

-Image Quality-

In the same manner as in Examples 1 and 2, an entire surface of each of the recording mediums of Examples 5 and 6 was positively charged, followed by heated to record a white solid image (erase an image). The density was measured in each of the recording mediums by means of a portable spectrophotometer (X-RITE™ 939 manufactured by X-Rite, Inc.). As a result, the density of the recording medium of Example 5 was 0.21, and the density of the recording medium of Example 6 was 0.19.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 5 was 0.22 in a left half thereof, and 1.05 in a right half thereof, and the density of the recording medium of Example 6 was 0.20 in a left half thereof, and 1.02 in a right half thereof. It was confirmed that a high contrast could be attained.

-Rewritability-

In the same manner as the above, characters were repeatedly recorded 30 times on each of the recording mediums of Examples 5 and 6 by the thermal head by carrying out the image erasing process and image recording process as one set. As a result, no deterioration was observed in the image during both erasing and recording of the image, and it was confirmed that an image was repeatedly rewritable.

-Image Retentiveness-

After recording an image on each of the recording mediums of Examples 5 and 6 in the same manner as the

above, each recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low and the solation temperature was high, high image retentiveness could be attained once the recording medium was cooled and the dispersion medium was turned into a gel.

Moreover, the recording mediums of Examples 5 and 6, in a right half of each of which a black solid image had been recorded, were left to stand for 2 months at 23°C and 55%RH. Each of the recording mediums after being left to stand was subjected to the measurement of the density by means of the portable spectrophotometer (X-RITE™ 939 manufactured by X-Rite, Inc.). The recording medium of Example 5 had the density of 0.22 in a left half thereof, and the density of 1.04 in a right half thereof, and the recording medium of Example 6 had the density of 0.22 in a left half thereof, and the density of 1.00 in a right half thereof, and excellent image retentiveness was attained.

Thereafter, each of the recording mediums was brought into contact with an electrostatically-charged object. As a result, no change was observed in image quality and image density, and it was confirmed that the recording mediums had excellent image retentiveness to external factors (electrostatics). Moreover, each of the recording mediums after being stored for 2 months was again subjected to the image easing process and image recording process. As a result, it was confirmed that the color of the image was desirably reversed.

(Comparative Examples 3 to 4)

Rewritable recording mediums of Comparative Examples 3 and 4 were produced in the same manner as in Examples 1 and 2, respectively, provided that the thermoreversible gelling agent was replaced with trans-t-butyl-1-phenylcyclohexanol without an amide bond, and an amount thereof was changed to 0.1 parts.

-Image Quality-

In the same manner as in Examples 1 and 2, an entire surface of each of the recording mediums of Comparative Examples 3 and 4 was positively charged, followed by heated to the temperature equal to or higher than 70°C to record a white solid image (erase an image). The density was measured in each of the recording mediums by means of a portable spectrophotometer (X-RITE™ 939 manufactured by X-Rite, Inc.). As a result, the density of the recording medium of Comparative Example 3 was 0.39, and the density of the recording medium of Comparative Example 4 was 0.36.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Comparative Example 3 was 0.46 in a left half thereof, and was 0.87 in a right half thereof, and the density of the recording medium of Comparative Example 4 was 0.44 in a left half thereof, and was 0.86 in a right half thereof. It was confirmed that the color was reversed in each of the recording mediums. However, it was found that the contrast was low, and the retentiveness of the density in the white solid image area was relatively low.

-Rewritability-

In the same manner as the above, characters were repeatedly recorded 30 times on each of the recording mediums of Comparative Examples 3 and 4 by the thermal head by carrying out the image erasing process and image recording process. As a result, the image density was lowered during both erasing and recording of an image, and area where the color was not partially reversed were observed.

-Image Retentiveness-

After recording an image on each of the recording mediums of Comparative Examples 3 and 4 in the same manner as the above, each recording medium was brought into contact with a finger, metal, and an electrostatically-charged object. As a result, a noise was slightly appeared in the image, but a fatal problem was not confirmed. When the test was performed immediately after the image formation without operating a cooling unit, however, the image was significantly disturbed. It was therefore found that sufficient image retentiveness was not attained.

Moreover, the recording mediums of Comparative Examples 3 and 4, in a right half of each of which a black solid image had been recorded, were left to stand for 2 months at 23°C and 55%RH. Each of the recording mediums after being left to stand was subjected to the measurement of the density by means of the portable spectrophotometer

(X-RITE™ 939 manufactured by X-Rite, Inc.). The density of the white solid image on the recording medium of Comparative Example 3 was 0.48 in a left half thereof, and was 0.79 in a right half thereof. The density of the white solid image on the recording medium of Comparative Example 4 was 0.47 in a left half thereof, and was 0.76 in a right half thereof. These white solid images were tinted in gray.

Thereafter, each of the recording mediums was brought into contact with an electrostatically-charged object. As a result, no change was observed in image quality and image density, and it was confirmed that the recording mediums had excellent image retentiveness to external factors (electrostatics). Moreover, each of the recording mediums after being stored for 2 months was again subjected to the image easing process and image recording process. As a result, the initial contrast could not be reproduced.

(Comparative Examples 5 to 6)

Rewritable recording mediums of Comparative Examples 5 and 6 were produced in the same manner as in Examples 1 and 2, respectively, provided that the dispersion liquid for forming an image recording layer was changed to the dispersion liquid prepared in the following manner, and the heating unit of the image recording device was set so that the surface temperature of the recording medium became 60°C.

A polyethylene bottle was charged with 100 parts of wax (product name: Nissan Elector™ WE-40, manufactured by NOF Corporation), a part of black dye (product name: OILBLACK™ HBB, manufactured by Orient Chemical Industries Co., Ltd.), 5 parts of titanium oxide(product name: JR™-603, manufactured by Tayca Corporation), and 0.5 parts of a surfactant (quaternary ammonium ethyl sulfate, product name: SAT™-60, manufactured by Nihon Junyaku Co., Ltd.), and zirconia beads (diameter: 1 mm) were placed therein. The bottle was left in a high temperature tank set to 120°C for 30 minutes. Thereafter, the bottle was quickly transferred into a stirrer to stir for 15 minutes. This operation was repeated twice, and the bottle was further left to stand for 30 minutes at 120°C. After taking the bottle from the tank, the mixture in the bottle was filtered with a mesh to thereby obtain a dispersion liquid for forming an image recording layer.

-Image Quality-

In the same manner as in Examples 1 and 2, an entire surface of each of the recording mediums of Comparative Examples 5 and 6 was positively charged, followed by heated to record a white solid image (erase an image). The density was measured in each of the recording mediums by means of a portable spectrophotometer (X-RITE™ 939 manufactured by X-Rite, Inc.). As a result, the density of the recording medium of Comparative Example 5 was 0.54, and the density of the recording medium of Comparative Example 6 was 0.56.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Comparative Example 5 was 0.58 in a left half thereof, and was 0.78 in a right half thereof, and the density of the recording medium of Comparative Example 6 was 0.61 in a left half thereof, and was 0.75 in a right half thereof. It was confirmed that the contrast was extremely low.

Thereafter, the recording mediums were each heated on a hot plate, which had been heated to 60°C in advance, for 20 minutes, and then evaluated in the same manner as the above. As a result, the density of the recording mediums of Comparative Examples 5 and 6 were improved to the level that the density of the recording medium of Comparative Example 5 was 0.45 in a left half thereof, and was 0.88 in a right half thereof, and the density of the recording medium of Comparative Example 6 was 0.48 in a left half thereof, and was 0.83 in a right half thereof.

-Rewritability-

In the same manner as the above, characters were repeatedly recorded on each of the recording mediums of Comparative Examples 5 and 6 by the thermal head by carrying out the image erasing process and image recording process. As a result, the image was recognized as the characters on any of the recording mediums, but was not clearly observed. It was found that these recording mediums had low temperature responsiveness.

-Image Retentiveness-

After recording an image on each of the recording mediums of Comparative Examples 5 and 6 in the same manner as the above, each recording medium was brought into contact with a finger, metal, and an electrostatically-charged object. As a result, a noise was slightly appeared in the image, but a fatal problem was not confirmed. When the test was performed immediately after the image formation without operating a cooling unit, however, the image was disturbed. It was therefore found that sufficient image retentiveness was not attained.

Moreover, the recording mediums of Comparative Examples 5 and 6, which had been sufficiently heated on the hot plate to reverse the color, were left to stand for 2 months at 23°C and 55%RH. Each of the recording mediums of Comparative Examples 5 and 6 after being left to stand was subjected to the measurement of the density by means of the portable spectrophotometer (X-RITE™ 939 manufactured by X-Rite, Inc.). As a result, the recording medium of Comparative Example 5 had the density of 0.59 in a left half thereof, and the density of 0.76 in a right half thereof, and the recording medium of Comparative Example 6 had the density of 0.60 in a left half thereof, and the density of 0.74 in a right half thereof, an effect of image retentiveness was confirmed.

Thereafter, each of the recording mediums was brought into contact with an electrostatically-charged object. As a result, no change was observed in image quality and image density, and it was confirmed that the recording mediums had image retentiveness to external factors (electrostatics). Moreover, each of the recording mediums after being stored for 2 months was again subjected to the image easing process and image recording process. As a result, the initial contrast could not be reproduced.

(Examples 7 to 8)

Rewritable recording mediums of Examples 7 and 8 were produced in the same manner as in Examples 1 and 2, respectively, provided that the thermoreversible gelling agent was replaced with the thermoreversible gelling agent represented by the following structural formula A4.

The sol-gel transition temperature of the thermoreversible gelling agent represented by the following structural formula A4 was measured in the same manner as in Example 1. As a result, the endothermic peak temperature during the heating was 46.0°C, and the exothermic peak temperature during the cooling was 30.1°C.

<Structural Formula A4>

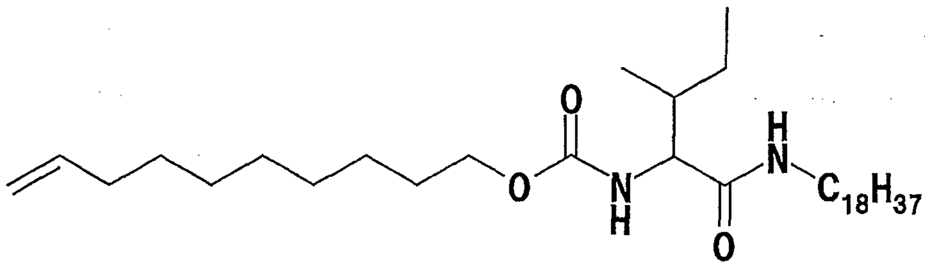

-Image Quality-

In the same manner as in Examples 1 and 2, an entire surface of each of the recording mediums of Examples 7 and 8 was positively charged, followed by heated to record a white solid image (erase an image). The density was measured in each of the recording mediums by means of a portable spectrophotometer (X-RITE™ 939 manufactured by X-Rite, Inc.). As a result, the density of the recording medium of Example 7 was 0.26, and the density of the recording medium of Example 8 was 0.22.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 7 was 0.26 in a left half thereof, and 1.17 in a right half thereof, and the density of the recording medium of Example 8 was 0.23 in a left half thereof, and 1.14 in a right half thereof. It was confirmed that a high contrast could be attained.

-Rewritability-

In the same manner as the above, characters were repeatedly recorded 30 times on each of the recording mediums of Examples 7 and 8 by the thermal head by carrying out the image erasing process and image recording process as one set. As a result, it was confirmed that the recording mediums were rewritable even through the density of black was slightly deteriorated, which was not particularly problematic. Moreover, it was confirmed that the density of the black, which had been slightly deteriorated, was recovered by leaving to stand for a few minutes.

-Image Retentiveness-

After recording an image on each of the recording mediums of Examples 7 and 8 in the same manner as the above, each recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, high image retentiveness could be attained once the recording medium was cooled and the dispersion medium was turned into a gel.

Moreover, the recording mediums of Examples 7 and 8, in a right half of each of which a black solid image had been recorded, were left to stand for 2 months at 23°C and 55%RH. Each of the recording mediums after being left to stand was subjected to the measurement of the density by means of the portable spectrophotometer (X-RITE™ 939 manufactured by X-Rite, Inc.). The recording medium of Example 7 had the density of 0.32 in a left half thereof, and the density of 1.11 in a right half thereof, and the recording medium of Example 8 had the density of 0.28 in a left half thereof, and the density of 1.07 in a right half thereof, and excellent image retentiveness was attained.

Thereafter, each of the recording mediums was brought into contact with an electrostatically-charged object. As a result, no change was observed in image quality and image density, and it was confirmed that the recording mediums had excellent image retentiveness to external factors (electrostatics). Moreover, each of the recording mediums after being stored for 2 months was again subjected to the image easing process and image recording process. As a result, it was confirmed that the color of the image was desirably reversed.

(Examples 9 to 10)

Rewritable recording mediums of Examples 9 and 10 were produced in the same manner as in Examples 1 and 2, respectively, provided that the thermoreversible gelling agent was replaced with the thermoreversible gelling agent represented by the following structural formula A5.

The sol-gel transition temperature of the thermo-reversible gelling agent represented by the following structural formula A5 was measured in the same manner as in Example 1. As a result, the endothermic peak temperature during the heating was 52.8°C, and the exothermic peak temperature during the cooling was 21.1°C.

<Structural Formula A5>

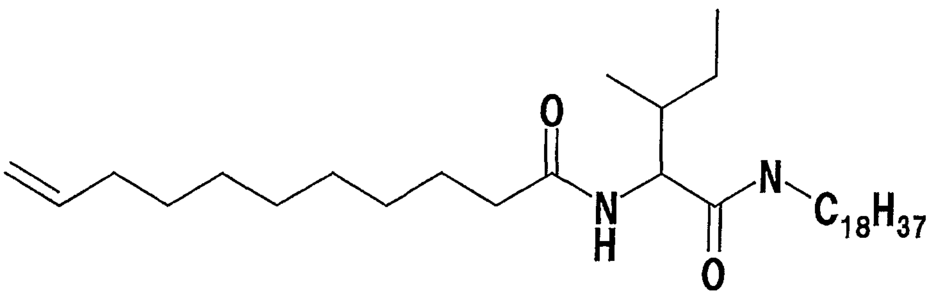

-Image Quality-

In the same manner as in Examples 1 and 2, an entire surface of each of the recording mediums of Examples 9 and 10 was positively charged, followed by heated to record a white solid image (erase an image). The density was measured in each of the recording mediums by means of a portable spectrophotometer (X-RITE™ 939 manufactured by X-Rite, Inc.). As a result, the density of the recording medium of Example 9 was 0.22, and the density of the recording medium of Example 10 was 0.19.

Thereafter, in the same manner as in Examples 1 and 2, an entire surface of each of the recording mediums was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 9 was 0.24 in a left half thereof, and 1.08 in a right half thereof, and the density of the recording medium of Example 10 was 0.22 is a left half thereof, and 1.05 in a right half thereof. It was confirmed that a high contrast could be attained.

-Rewritability-

In the same manner as the above, characters were repeatedly recorded 30 times on each of the recording mediums of Examples 9 and 10 by the thermal head by carrying out the image erasing process and image recording process as one set. As a result, it was confirmed that the recording mediums were rewritable even through the density of black was slightly deteriorated, which was not particularly problematic. Moreover, it was confirmed that the density of the black, which had been slightly deteriorated, was recovered by leaving to stand for a few minutes.

-Image Retentiveness-

After recording an image on each of the recording mediums of Examples 9 and 10 in the same manner as the above, each recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low but the solation temperature was high, high image retentiveness could be attained once the recording medium was cooled and the dispersion medium was turned into a gel.

Moreover, the recording mediums of Examples 9 and 10, in a right half of each of which a black solid image had been recorded, were left to stand for 2 months at 23°C and 55%RH. Each of the recording mediums after being left to stand was subjected to the measurement of the density by means of the portable spectrophotometer (X-RITE™ 939 manufactured by X-Rite, Inc.). The recording medium of Example 9 had the density of 0.28 in a left half thereof, and the density of 1.08 in a right half thereof, and the recording medium of Example 10 had the density of 0.25 in a left half thereof, and the density of 1.03 in a right half thereof, and excellent image retentiveness was attained.

Thereafter, each of the recording mediums was brought into contact with an electrostatically-charged object. As a result, no change was observed in image quality and image density, and it was confirmed that the recording mediums had excellent image retentiveness to external factors (electrostatics). Moreover, each of the recording mediums after being stored for 2 months was again subjected to the image easing process and image recording process. As a result, it was confirmed that the color of the image was desirably reversed.

(Example 11)

A rewritable recording medium of Example 11 was produced in the same manner as in Example 1, provided that the thermoreversible gelling agent was replaced with the thermoreversible gelling agent represented by the following structural formula A6.

The sol-gel transition temperature of the thermoreversible gelling agent represented by the following structural formula A6 was measured in the same manner as in Example 1. As a result, the endothermic peak temperature during the heating was 50.8°C, and the exothermic peak temperature during the cooling was 20.1°C.

In the thermoreversible gelling agent represented by the following structural formula A6, the number of silicon atoms (A) was 14, a total number of the amide bonds and urethane bonds (B) was 4, and A/B = 3.5.

<Structural Formula A6>

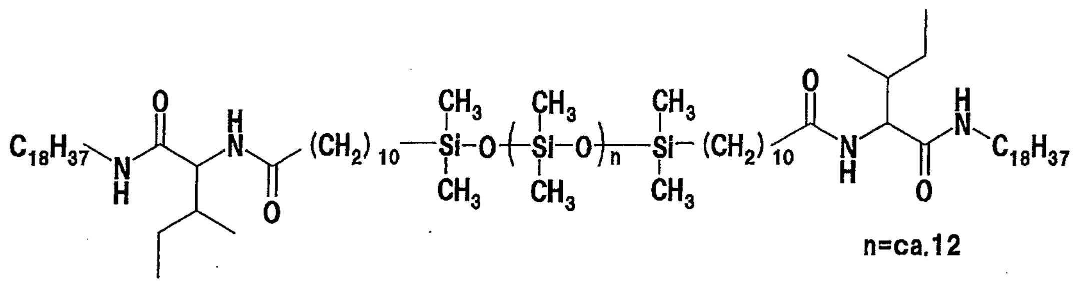

n=ca.12

-Image Quality-

In the same manner as in Example 1, an entire surface of the recording medium of Example 11 was positively charged, followed by heated to record a white solid image (erase an image). The density of the recording medium was measured by means of a portable spectrophotometer (X-RITE™ 939 manufactured by X-Rite, Inc.). As a result, the

density of the recording medium of Example 11 was 0.25.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 11 was 0.26 in a left half thereof, and 1.06 in a right half thereof. It was confirmed that a high contrast could be attained.

-Rewritability-

In the same manner as the above, characters were repeatedly recorded 30 times on the recording medium of Example 11 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 11 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low but the solation temperature was high, high image retentiveness could be attained once the recording medium was cooled and the dispersion medium was turned into a gel.

Moreover, the recording medium of Example 11, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 11 had the density of 0.29 in a left half thereof, and the density of 1.01 in a right half thereof, and excellent image retentiveness was attained.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 12)

A rewritable recording medium of Example 12 was produced in the same manner as in Example 1, provided that the thermoreversible gelling agent was replaced with the thermoreversible gelling agent represented by the following structural formula A7.

The sol-gel transition temperature of the thermoreversible gelling agent represented by the following structural formula A7 was measured in the same manner as in Example 1. As a result, the endothermic peak temperature during the heating was 48.6°C, and the exothermic peak temperature during the cooling was 13.1°C.

In the thermoreversible gelling agent represented by the following structural formula A7, the number of silicon atoms (A) was 82, a total number of the amide bonds and urethane bonds (B) was 4, and A/B = 20.5.

<Structural Formula A7>

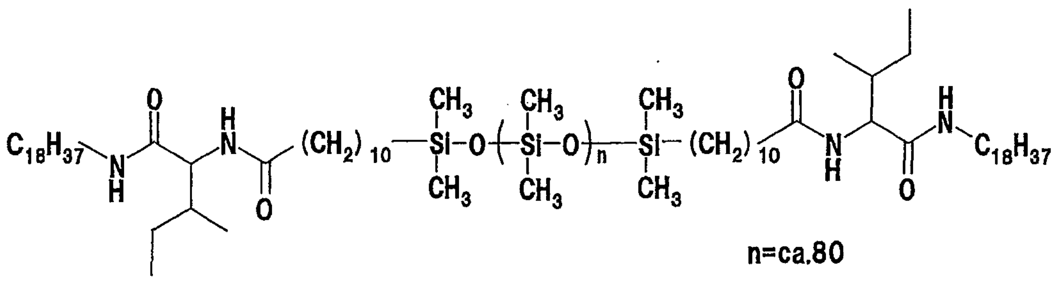

n=ca.80

-Image Quality-

In the same manner as in Example 1, an entire surface of the recording medium of Example 12 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 12 was 0.23.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 12 was 0.25 in a left half thereof, and 1.00 in a right half thereof. It was confirmed that a high contrast could be attained.

-Rewritability-

In the same manner as the above, characters were repeatedly recorded 30 times on the recording medium of Example 12 by the thermal head by carrying out the image erasing process and image recording process as one set. As a result, it was confirmed that the recording medium was rewritable even through the density of the black was slightly deteriorated, which was not particularly problematic. Moreover, it was confirmed that the density of the black, which had been slightly deteriorated, was recovered by leaving to stand for a few minutes.

-Image Retentiveness-

After recording an image on the recording medium of Example 12 in the same manner as the above, the recording medium was brought into contact with a finger, metal, and an electrostatically-charged object. As a result, a slight change was observed in image quality and image density. When the test for external factors was performed immediately after the image formation without operating a cooling unit, a noise was clearly observed in the image. Therefore, it was found that necessity of the cooling unit was high.

Moreover, the recording medium of Example 12, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 12 had the density of 0.32 in a left half thereof, and the density of 0.95 in a right half thereof, which exhibited acceptable image retentiveness.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 13)

A rewritable recording medium of Example 13 was produced in the same manner as in Example 1, provided that the thermoreversible gelling agent was replaced with the thermoreversible gelling agent represented by the following structural formula A8.

The sol-gel transition temperature of the thermoreversible gelling agent represented by the following structural formula A8 was measured in the same manner as in Example 1. As a result, the endothermic peak temperature during the heating was 42.5°C, and the exothermic peak temperature during the cooling was 23.7°C.

In the thermoreversible gelling agent represented by the following structural formula A8, the number of silicon atoms (A) was 3, the number of the amide bonds and urethane bonds (B) was 2, and A/B = 1.5.

<Structural Formula A8>

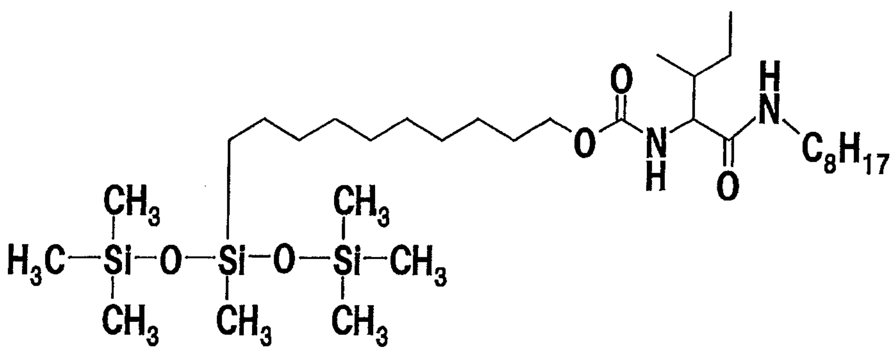

-Image Quality-

In the same manner as in Example 1, an entire surface of the recording medium of Example 13 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 13 was 0.22.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 13 was 0.24 in a left half thereof, and 1.02 in a right half thereof. It was confirmed that a high contrast could be attained.

-Rewritability-

In the same manner as the above, characters were repeatedly recorded 30 times on the recording medium of Example 13 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 13 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low but the solation temperature was high, high image retentiveness could be attained once the recording medium was cooled and the dispersion medium was turned into a gel.

Moreover, the recording medium of Example 13, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 13 had the density of 0.26 in a left half thereof, and the density of 0.99 in a right half thereof, and excellent image retentiveness was attained.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 14)

A rewritable recording medium of Example 14 was produced in the same manner as in Example 1, provided that the thermoreversible gelling agent was replaced with the thermoreversible gelling agent represented by the following

structural formula A9.

The sol-gel transition temperature of the thermoreversible gelling agent represented by the following structural formula A9 was measured in the same manner as in Example 1. As a result, the endothermic peak temperature during the heating was 50.3°C, and the exothermic peak temperature during the cooling was 17.5°C.

<Structural Formula A9>

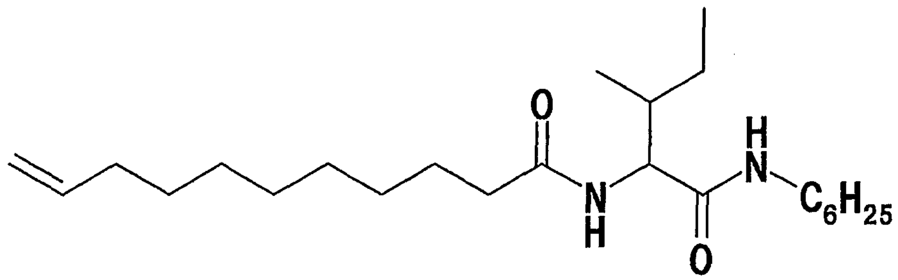

-Image Quality

In the same manner as in Example 1, an entire surface of the recording medium of Example 14 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 14 was 0.28.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 14 was 0.34 in a left half thereof, and 0.95 in a right half thereof. It was confirmed that a high contrast could be attained.

-Rewritability-

In the same manner as the above, characters were repeatedly recorded 30 times on the recording medium of Example 14 by the thermal head by carrying out the image erasing process and image recording process as one set. As a result, it was confirmed that the recording medium was rewritable even through the density of the black was slightly deteriorated, which was not particularly problematic. Moreover, it was confirmed that the density of the black, which had been slightly deteriorated, was recovered by leaving to stand for a few minutes.

-Image Retentiveness-

After recording an image on the recording medium of Example 14 in the same manner as the above, the recording medium was brought into contact with a finger, metal, and an electrostatically-charged object. As a result, a slight change was observed in image quality and image density. When the test for external factors was performed immediately after the image formation without operating a cooling unit, a noise was clearly observed in the image. Therefore, it was found that necessity of the cooling unit was high.

Moreover, the recording medium of Example 14, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 14 had the density of 0.38 in a left half thereof, and the density of 0.92 in a right half thereof, which exhibited acceptable image retentiveness.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 15)

A rewritable recording medium of Example 15 was produced in the same manner as in Example 1, provided

that the amount of the thermoreversible gelling agent was changed to 0.03 parts, and the dispersion medium for use was changed to silicone oil (KF™96, manufactured by Shin-Etsu Chemical Co., Ltd., 1 cs, boiling point: 153°C).

The sol-gel transition temperature of the thermoreversible gelling agent was measured in the same manner as in Example 1, provided that silicone oil was used as a dispersion medium. As a result, the endothermic peak temperature during the heating was 76.0°C, and the exothermic peak temperature during the cooling was 67.3°C.

-Image Quality-

In the same manner as in Example 1, an entire surface of the recording medium of Example 15 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 15 was 0.32.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 15 was 0.32 in a left half thereof, and 0.96 in a right half thereof. It was confirmed that a high contrast could be attained.

-Rewritability-

In the same manner as the above, characters were repeatedly recorded 30 times on the recording medium of Example 15 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 15 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). Moreover, it was confirmed that the effect thereof could be attained without operating a cooling unit.

Moreover, the recording medium of Example 15, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 15 had the density of 0.32 in a left half thereof, and the density of 0.96 in a right half thereof, and excellent image retentiveness was attained.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 16)

In 74 parts of an isoparaffin-based hydrocarbon solvent dispersion medium (Isopar™G, manufactured by ExxonMobil Chemical) serving as a dispersion medium, 0.5 parts of an oil-soluble black dye (Oil Black HBB, manufactured by Orient Chemical Industries Co., Ltd.), and 0.5 parts of a nonionic surfactant (sorbitan monolaurate, Span™20, reagent) were dissolved. To the resultant, 20 parts of the white electrophoretic particles were further added, and the mixture was dispersed for 120 minutes by applying ultrasonic waves. To the obtained dispersion liquid, 5 parts of the thermoreversible gelling agent represented by the structural formula A1, and the resulting mixture was heated to the temperature higher than the solation temperature of the thermoreversible gelling agent by 10°C to dissolve with stirring, to thereby obtain a dispersion liquid for forming an image recording layer.

Microcapsule slurry was obtained in the same manner as in Example 1, provided that the above-prepared dispersion liquid for forming an image recording layer. Moreover, a rewritable recording medium of Example 16 was produced in the same manner as in Example 1, provided that the above-prepared microcapsule slurry was used.

-Image Quality-

In the same manner as in Example 1, an entire surface of the recording medium of Example 16 was positively charged, followed by heating the entire surface to make the white particles migrate to the side of the surface, to thereby record a white solid image (erase an image) on the entire surface. The density of the recording medium was measured by means of a portable spectrophotometer (X-RITE™ 939 manufactured by X-Rite, Inc.). As a result, the density of the recording medium of Example 16 was 0.33.

Thereafter, in the same manner as in Example 1, an entire surface of the recording medium was negatively charged, followed by heating only a right half of the recording medium to make the white particles migrate to the side of the back surface, to thereby record a black solid image. The density was measured by a portable spectrophotometer (X-RITE™ 939 manufactured by X-Rite, Inc.). As a result, the density of the recording medium of Example 16 was 0.37 in a left half thereof, and 0.93 in a right half thereof. It was confirmed that a high contrast could be attained

-Rewritability-

In the same manner as the above, characters were repeatedly recorded 30 times on the recording medium of Example 16 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 16 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). It was confirmed that the effect thereof was obtained without operating a cooling unit.

Moreover, the recording medium of Example 16, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 16 had the density of 0.38 in a left half thereof, and the density of 0.93 in a right half thereof, and excellent image retentiveness was attained.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 17)

As for magnetophoretic particles, black ferrite particles surfaces of which had been treated with silicone oil were used. The magnetophoretic particles were mixed with an isoparaffin-based hydrocarbon solvent (Isopar™ G, manufactured by ExxonMobil Chemical), and the mixture was dispersed by applying ultrasonic waves. To the obtained dispersion liquid, nonelectrophoretic polyvinyl naphthalene particles were added as white particles, followed by stirring. Then, the resultant was dispersed by applying ultrasonic waves. Further, in the same manner as in Example 1, the thermoreversible gelling agent was added to the dispersion liquid, and the resultant was heated to the temperature equal to or higher than the solation temperature of the thermoreversible gelling agent, followed by stirring, to thereby prepare a dispersion liquid for forming an image recording layer.

Microcapsule slurry was prepared in the same manner as in Example 1, provided that the above-obtained dispersion liquid was used. Moreover, a rewritable recording medium of Example 17 was produced in the same manner as in Example 1, provided that the above-obtained microcapsule slurry was used.

As for an image recording device, the same image recording device to that in Example 1 was used, provided that as a magnetic head, an electromagnet was provided at the upstream side of the charging unit. The test was carried out in the same manner as in Example 1, provided that the charging unit was not operated.

-Image Quality-

After heating an entire surface of the recording medium of Example 17, a magnetic force of polarity, which

would give a repulsive force to the black particles, was applied to the entire surface of the recording medium by an electromagnet to migrate the black particles to the side of the back surface, to thereby record a white solid image (erase the image). The density of the recording medium was measured by means of a portable spectrophotometer (X-RITE™ 939 manufactured by X-Rite, Inc.). As a result, the density of the recording medium of Example 17 was 0.35.

Thereafter, only a right half of the recording medium was initially heated, followed by applying a magnetic field of polarity, which would give an attraction force to the black particles, to the entire surface of the recording medium, to thereby migrate the black particles present in the right half of the recording medium to the side of the surface. In this state, the recording medium was cooled down to room temperature. As a result, it was confirmed that an image having black in the right half, and having white in the left half was clearly recorded on the recording medium. The density was measured by a portable spectrophotometer (X-RITE™ 939 manufactured by X-Rite, Inc.). As a result, the density of the recording medium of Example 17 was 0.37 in a left half thereof, and 0.92 in a right half thereof. It was confirmed that a high contrast could be attained

-Rewritability-

In the same manner as the above, characters were repeatedly recorded 30 times on the recording medium of Example 17 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 17 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). Moreover, it was confirmed that the effect thereof was attained without operating a cooling unit.

Moreover, the recording medium of Example 17, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 17 had the density of 0.37 in a left half thereof, and the density of 0.91 in a right half thereof, and excellent image retentiveness was attained.

Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 18)

An oil-soluble red dye (Oil Red™PR, manufactured by Orient Chemical Industries Co., Ltd.) was dissolved in an isoparaffin-based hydrocarbon solvent (Isopar™ G, manufactured by ExxonMobil Chemical) in advance, and to this, black ferrite particles whose surfaces were treated with silicone oil were mixed as magnetophoretic particles, and were dispersed by applying ultrasonic waves. Next, to the resulting dispersion liquid, the white electrophoretic particles obtained in Example 1 were added, and dispersed by applying ultrasonic waves, and then the thermoreversible gelling agent was added in the same manner as in Example 1. After heating the resultant to temperature equal to or higher than the solation temperature of the thermoreversible gelling agent, the resultant was stirred to thereby prepare a dispersion liquid for forming an image recording layer.

Microcapsule slurry was prepared using the obtained dispersion liquid in the same manner as in Example 1, and a rewritable recording medium of Example 18 was produced in the same manner as in Example 1.

As for an image recording device, the same image recording device to that used in Example 1, provided that an electromagnet was further provided in the position downstream of the heating unit, was used to perform evaluation tests.

-Image Quality-

After positively charging an entire surface of the recording medium of Example 18, the entire surface of the recording medium was heated to migrate the white particles to the side of the surface, and a magnetic force of polarity,

which would give a repulsive force to the black particles, was applied to the entire surface of the recording medium by an electromagnet to migrate the black particles to the side of the back surface, to thereby record a white solid image (erase the image).

The density of the recording medium was measured by means of a portable spectrophotometer (X-RITE™ 939 manufactured by X-Rite, Inc.). As a result, the density of the recording medium of Example 18 was 0.27.

Then, after negatively charging the entire surface of the recording medium, only a right half of the recording medium was initially heated to migrate the white particles to the side of the back surface, and a magnetic field of polarity, which would give an attraction force to the black particles, was applied to the entire surface of the recording medium by the electromagnet, to migrate the black particles to the side of the surface, followed by cooling down to room temperature. As a result, it was confirmed that an image having black in the right half, and having white in the left half was clearly recorded on the recording medium. The density was measured by a portable spectrophotometer (X-RITE™ 939 manufactured by X-Rite, Inc.). As a result, the density of the recording medium of Example 18 was 0.29 in a left half thereof, and 0.91 in a right half thereof. It was confirmed that a high contrast could be attained.

Subsequently, after negatively charging the entire surface of the recording medium, only the left half of the recording medium was heated to migrate the white particles to the side of the back surface, and a magnetic field of polarity, which would give a repulsive force to the black particles, was applied to the entire surface of the recording medium, to migrate the black particles to the side of the back surface, followed by cooling down to room temperature. As a result, it was confirmed that an image having black in the right half, and having white in the left half was clearly recorded on the recording medium.

-Rewritability-

In the same manner as the above, characters were repeatedly recorded 30 times on the recording medium of Example 18 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 18 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). It was confirmed that the effect thereof was attained without operating a cooling unit.

Moreover, the recording medium of Example 18, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 18 had the density of 0.31 in a left half thereof, and the density of 0.90 in a right half thereof, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 19)

A rewritable recording medium of Example 19 was produced in the same manner as in Example 1, provided that the dispersion medium was changed to an isoparaffin-based hydrocarbon solvent (Isopar™ E, manufactured by ExxonMobil Chemical, initial boiling point: 115°C). The sol-gel transition temperature of the thermoreversible gelling agent was the same as that in Example 1.

-Image Quality-

In the same manner as in Example 1, an entire surface of the recording medium of Example 19 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 19 was 0.27.

Thereafter, in the same manner as in Example 1, an entire surface of the recording medium was negatively

charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 19 was 0.27 in a left half thereof, and 0.98 in a right half thereof. It was confirmed that a high contrast could be attained.

-Rewritability-

In the same manner as the above, characters were repeatedly recorded 30 times on the recording medium of Example 19 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 19 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low but the solation temperature was high, high image retentiveness could be attained once the recording medium was cooled and the dispersion medium was turned into a gel.

Moreover, the recording medium of Example 19, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 19 had the density of 0.29 in a left half thereof, and the density of 0.95 in a right half thereof, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 20)

A rewritable recording medium of Example 20 was produced in the same manner as in Example 1, provided that the dispersion medium was changed to a naphthene-based hydrocarbon solvent (EXXSOL™ DSP80/100, manufactured by ExxonMobil Chemical, initial boiling point: 85°C). The sol-gel transition temperature of the thermoreversible gelling agent was the same as that in Example 1.

-Image Quality-

In the same manner as in Example 1, an entire surface of the recording medium of Example 20 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 20 was 0.30.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 20 was 0.29 in a left half thereof, and 0.94 in a right half thereof. It was confirmed that a high contrast could be attained.

-Rewritability-

In the same manner as the above, characters were repeatedly recorded 30 times on the recording medium of Example 20 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 20 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics). The effect thereof was slightly lowered when the test for the external factors was performed immediately without operating a cooling unit. However, as the gelation temperature was relatively low but the solation temperature was high, high image retentiveness could be attained once the recording medium was cooled and the dispersion medium was turned into a gel.

Moreover, the recording medium of Example 20, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 20 had the density of 0.32 in a left half thereof, and the density of 0.90 in a right half thereof, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 21)

A rewritable recording medium of Example 21 was produced in the same manner as in Example 1, provided that the dispersion medium was changed to a naphthene-based hydrocarbon solvent (EXXSOL™ manufactured by ExxonMobil Chemical, initial boiling point: 66°C). The sol-gel transition temperature of the thermoreversible gelling agent was the same as that in Example 1.

-Image Quality-

In the same manner as in Example 1, an entire surface of the recording medium of Example 21 was positively charged, followed by heated to record a white solid image (erase an image). The density of the recording medium was measured by means of a portable spectrophotometer (X-RITE™ 939 manufactured by X-Rite, Inc.). As a result, the density of the recording medium of Example 21 was 0.32.

Thereafter, in the same manner as in Example 1, an entire surface of the recording medium was negatively charged, followed by heating only a right half of the recording medium to record a black solid image on the right half thereof. The density was measured by a portable spectrophotometer (X-RITE™ 939 manufactured by X-Rite, Inc.). As a result, the density of the recording medium of Example 21 was 0.33 in a left half thereof, and 0.89 in a right half thereof. It was confirmed that a high contrast could be attained.

-Rewritability-

In the same manner as the above, characters were repeatedly recorded 30 times on the recording medium of Example 21 by the thermal head by carrying out the image erasing process and image recording process. As a result, it was confirmed that the recording medium was rewritable even through the density of the black was slightly deteriorated, which was not particularly problematic. Moreover, it was confirmed that the density of the black, which had been slightly deteriorated, was recovered by leaving to stand for a few minutes.

-Image Retentiveness-

After recording an image on the recording medium of Example 21 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics).

Moreover, the recording medium of Example 21, in a right half of which a black solid image had been recorded, was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 21 had the density of 0.34 in a left half thereof, and the density of 0.85 in a right half thereof, and excellent image retentiveness was attained. Thereafter, the recording medium was brought into contact with an electrostatically charged object. As a result, no change was observed in image quality and image density, and

it was confirmed that the recording medium had excellent image retentiveness to external factors (electrostatics). Moreover, the recording medium after being stored for 2 months was again subjected to the image easing process and image recording process. As a result, the image density was slightly deteriorated compared to that of the recording medium before the storage, but it was confirmed that the color was desirably reversed.

(Example 22)

An image was recorded and erased on the recording medium of Example 1 using the following image recording device.

<Evaluation by Image Recording Device>

As for an image recording device, a modified electrophotographic device was used. As for an electrophotographic photoconductor, a single layer photoconductor, which could be charged both positively and negatively, and contained a charge generating material, a hole transporting material, and an electron transporting material. Moreover, a heating unit composed of a sheet-shape heater configured to heat an entire surface of the recording medium was mounted inside a drum of the photoconductor, and an applied system was a system where heating and application of an electric field were performed at the same time by bringing the recording medium into contact with the electrophotographic photoconductor. Further, a cooling unit composed of a brass roller was provided. The heating unit was set so that surface temperature of the recording medium would become equal to or higher than the solation temperature of the dispersion medium containing the thermoreversible gelling agent. To the electrophotographic photoconductor, a scorotron configured to charge the electrophotographic photoconductor, an exposing unit configured to form a latent electrostatic image, and a diselectrification unit configured to erase the latent electrostatic image were provided in this order. Moreover, a roller-shape counter electrode was provided at the position facing the electrophotographic photoconductor via the recording medium.

-Image Quality-

The recording medium was set in the image recording device, and heated by the heating unit to heat the recording medium to temperature higher than the solation temperature of the dispersion medium, to thereby liquidize the dispersion medium. At the same time, an entire surface of the recording medium was positively charged by the charging unit, followed by cooling the entire image recording area to temperature equal to or lower than the gelation temperature of the dispersion medium by means of the cooling unit. The density of the recording medium was measured by means of a portable spectrophotometer (X-RITE™ 939 manufactured by X-Rite, Inc.). As a result, the density of the recording medium of Example 22 was 0.24.

Next, the recording medium was set in the image recording device again, and heated to the temperature higher than the solation temperature of the dispersion medium by the heating unit to liquidize the dispersion medium. At the same time, the photoconductor was negatively charged by the charging unit to form a latent electrostatic image having a checker pattern. In this state, the recording medium was brought into contact with the photoconductor, followed by cooling the entire image recording area to the temperature equal to or lower than the gelation temperature of the dispersion medium by means of the cooling unit. The density of the image recording area was measured by means of a portable spectrophotometer (X-RITE™ 939 manufactured by X-Rite, Inc.). As a result, the density thereof was 0.86. It was confirmed that a high contrast was attained.

-Rewritability-

In the same manner as the above, characters were repeatedly recorded 30 times on the recording medium by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics).

-Moreover, the recorded recording medium was left to stand for 2 months at 23°C and 55%RH. The recording

medium after being left to stand was subjected to the measurement of the density by means of the portable spectrophotometer (X-RITE™ 939 manufactured by X-Rite, Inc.). As a result, the density of the recording medium was 0.85, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

(Example 23)

<Production of Rewritable Recording Medium Using Microcapsules>

To the microcapsule slurry obtained in Example 1, a water-soluble urethane resin liquid was added, followed by stirring. Thereafter, the resultant was applied, by blade coating, onto an indium tin oxide (ITO) film provided on one surface of a polyester base having a thickness of 50 μm, followed by drying at 70°C for 30 minutes, to thereby form a microcapsule layer having a thickness of about 50 μm. Since the microcapsules were projected from the water-soluble urethane resin, an insulating thermoset resin was further applied, by blade coating, onto the microcapsule layer to give the substantially same height as the microcapsule layer, to thereby form an image recording layer. Thereafter, another polyester base provided with an ITO film, and having a thickness of 50 μm was bonded onto the image recording layer so that the ITO film faced the image recording layer, and the resultant was pressed by a roller, followed by drying at 80°C for 30 minutes, to thereby cure the resins. A metal foil tape was adhered to an edge where the ITO surface was exposed and the image recording layer or binder resin was not applied, and the metal foil tape was bended in half, to thereby form an area, which was electrically connected with a surface of the polyester base. This was used as an electrode. Another electrode was formed on the side of the back surface in the same manner. Finally, an insulating tape was adhered so that the ITO or the metal foil tapes were not electrically connected between the surface side and the back surface side, to thereby form a rewritable recording medium of Example 23 having the structure illustrated in FIG. 11.

<Evaluation by Image Recording Device>

An image recording device having the structure illustrated FIGs. 20 and 21 was experimentally produced. Specifically, the image recording device was designed so that the recording medium could be linearly transported, and a heating unit composed of a thermal heat, and a roller-shape electric field applying unit configured to electrically connect to the electrode of the recording medium and apply an electric field, were provided at the side of the recording medium to be viewed. At the opposite side of the recording medium to the side to be viewed, a platen capable of applying an electric field was provided.

The heating unit was set so that the surface temperature of the recording medium would be equal to or higher than at least the solation temperature of the thermoreversible gelling agent contained in the recording medium, using the thermal head.

-Image Quality-

The image recording device was set so that the electric field applying unit provided at the surface side of the recording medium of Example 23 was to be 50 V, and the electric field applying unit provided at the back surface side was to be 0 V, and an entire surface solid image pattern was input in the heating unit composed of the thermal head. In this state, printing was performed on the recording medium. As a result, the electric field of +50 V was applied to the entire surface of the image recording layer through the electrode of the recording medium, and by heating the entire surface of the recording medium, the white particles were migrated to the surface side (the black particles were migrated to the back surface side), to thereby record a white solid image (erase the image) on the entire surface of the recording medium. Within a few seconds from the completion of the image recording to the time when the recording medium was taken out in hands, gelation of the dispersion medium could be observed. The density of the recording medium was measured by means of the portable spectrophotometer (X-RITE™ 939 manufactured by X-Rite, Inc.). As a result, the density thereof was 0.18.

Next, the image recording device was set so that the electric field applying unit provided at the surface side of the recording medium was to be 0 V, and the electric field applying unit provided at the back surface side was to be 50 V, and a checker pattern was input in the heating unit composed of the thermal head. In this state, printing was performed on the recording medium. As a result, the electric field of -50 V was applied to the entire surface of the image recording layer through the electrode of the recording medium. In addition, only the checker pattern area of the recording medium was heated. As a result, it was confirmed that the black image pattern with the white background was clearly recorded.

The density of the black area was 1.25. A photograph of the obtained image was depicted in FIG. 23.

-Rewritability-

In the same manner as the above, characters were repeatedly recorded 200 times on the recording medium of Example 23 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 23 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics).

Moreover, the recorded recording medium of Example 23 was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 23 was 0.19 in the white area, and was 1.25 in the black area, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

As described above, the recording medium and image recording device of Example 23 did not require the image recording device of Example 1, having a charging unit using a corontron, which required high voltage. It was found that the recording medium and image recording device of Example 23 could achieve high contrast with low voltage, i.e., 50V, and were extremely effective.

(Example 24)

<Production of Rewritable Recording Medium Using Microcapsules>

To the microcapsule slurry obtained in Example 1, a water-soluble urethane resin liquid was added, followed by stirring. Thereafter, the resultant was applied, by blade coating, onto an indium tin oxide (ITO) film provided on one surface of a polyester base having a thickness of 50 μm, followed by drying at 70°C for 30 minutes, to thereby form a microcapsule layer having a thickness of about 50 μm. Since the microcapsules were projected from the water-soluble urethane resin, an insulating thermoset resin was further applied, by blade coating, onto the microcapsule layer to give the substantially same height as the microcapsule layer, to thereby form an image recording layer. Thereafter, the resultant was adhered to an aluminum plate having a thickness of 0.5 mm to laminate together, and a roller was pressed against the resultant to remove the air therein and level, followed by drying at 80°C for 30 minutes, to thereby cure the resins. A metal foil tape was adhered to an edge where the ITO surface was exposed and the image recording layer or binder resin was not applied, and the metal foil tape was bended in half, to thereby form an area, which was electrically connected with a surface of the polyester base. This was used as an electrode. Finally, insulating tapes were adhered to the areas of the ITO surface and the metal foil tape, to thereby insulated from the aluminum plate. In this manner, a rewritable recording medium of Example 24 having the structure depicted in FIG. 13 was produced.

<Evaluation by Image Recording Device>

The same image recording device to that produced in Example 23 was used.

-Image Quality-

The image recording device was set so that the electric field applying unit provided at the surface side of the recording medium of Example 24 was to be 50 V, and the electric field applying unit provided at the back surface side was to be 0 V, and an entire surface solid image pattern was input in the heating unit composed of the thermal head. In this state, printing was performed on the recording medium. As a result, the electric field of +50 V was applied to the entire surface of the image recording layer through the electrode of the recording medium, and by heating the entire

surface of the recording medium, the white particles were migrated to the surface side (the black particles were migrated to the back surface side), to thereby record a white solid image (erase the image) on the entire surface of the recording medium. Within a few seconds from the completion of the image recording to the time when the recording medium was taken out in hands, gelation of the dispersion medium could be observed. The density of the recording medium was measured by means of the portable spectrophotometer (X-RITE™ 939 manufactured by X-Rite, Inc.). As a result, the density thereof was 0.19.

Next, the image recording device was set so that the electric field applying unit provided at the surface side of the recording medium was to be 0 V, and the electric field applying unit provided at the back surface side was to be 50 V, and a checker pattern was input in the heating unit composed of the thermal head. In this state, printing was performed on the recording medium. As a result, the electric field of -50 V was applied to the entire surface of the image recording layer through the electrode of the recording medium. In addition, only the checker pattern area of the recording medium was heated. As a result, it was confirmed that the black image pattern with the white background was clearly recorded. The density of the black area was 1.24.

-Rewritability-

In the same manner as the above, characters were repeatedly recorded 200 times on the recording medium of Example 24 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 24 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics).

Moreover, the recorded recording medium of Example 24 was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 24 was 0.20 in the white area, and was 1.23 in the black area, and very excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

As described above, the recording medium and image recording device of Example 24 did not require the image recording device of Example 1, having a charging unit using a corontron, which required high voltage. It was found that the recording medium and image recording device of Example 24 could achieve high contrast with low voltage, i.e., 50V, and were extremely effective.

(Example 25)

A rewritable recording medium of Example 25 having the structure illustrated in FIG. 8 was produced in the same manner as in Example 23, provided that the polyester base having the ITO film provided at the back surface side was not provided, instead, the thermoset resin applied on the microcapsule layer was applied so that a thickness thereof was thicker than the thickness of the microcapsule layer by about 10 μm, and was used as a second base.

-Image Quality-

The image recording device was set so that the electric field applying unit provided at the surface side of the recording medium of Example 25 was to be -100 V, and the electric field applying unit provided at the back surface side was to be 0 V, and an entire surface solid image pattern was input in the heating unit composed of the thermal head. In this state, printing was performed on the recording medium. As a result, the electric field of +100 V was applied to the entire surface of the image recording layer through the electrode of the recording medium, and by heating the entire surface of the recording medium, the white particles were migrated to the surface side (the black particles were migrated to the back surface side), to thereby record a white solid image (erase the image) on the entire surface of the recording medium. Within a few seconds from the completion of the image recording to the time when the recording medium was

taken out in hands, gelation of the dispersion medium could be observed. The density of the recording medium was measured by means of the portable spectrophotometer (X-RITE™ 939 manufactured by X-Rite, Inc.). As a result, the density thereof was 0.22.

Next, the image recording device was set so that the electric field applying unit provided at the surface side of the recording medium was to be 0 V, and the electric field applying unit provided at the back surface side was to be 100 V, and a checker pattern was input in the heating unit composed of the thermal head. In this state, printing was performed on the recording medium. As a result, the electric field of -100 V was applied to the entire surface of the image recording layer through the electrode of the recording medium. In addition, only the checker pattern area of the recording medium was heated. As a result, it was confirmed that the black image pattern with the white background was clearly recorded. The density of the black area was 0.94.

-Rewritability-

In the same manner as the above, characters were repeatedly recorded 200 times on the recording medium of Example 25 by the thermal head by carrying out the image erasing process and image recording process as one set. As a result, no deterioration was observed during both erasing and recording of an image, and it was confirmed that the recording medium was rewritable.

-Image Retentiveness-

After recording an image on the recording medium of Example 25 in the same manner as the above, the recording medium was brought into contact with a finger, metal, and an electrostatically-charged object. As a result, no change was observed in image quality and image density, and it was confirmed that the recording mediums had excellent image retentiveness to external factors (electrostatics).

Moreover, the recorded recording medium of Example 25 was left to stand for 2 months at 23°C and 55%RH. The recording medium after being left to stand was subjected to the measurement of the density by means of the portable spectrophotometer (X-RITE™ 939 manufactured by X-Rite, Inc.). The recording medium of Example 25 had the density of 0.22 in the white area, and had the density of 0.93 in the black area, and excellent image retentiveness was attained. Thereafter, the recording medium was brought into contact with an electrostatically-charged object. As a result, no change was observed in image quality and image density, and it was confirmed that the recording medium had excellent image retentiveness to external factors (electrostatics). Moreover, the recording medium after being stored for 2 months was again subjected to the image easing process and image recording process. As a result, it was confirmed that the color of the image was desirably reversed.

As described above, the recording medium and image recording device of Example 25 did not require the image recording device of Example 1, having a charging unit using a corontron, which required high voltage. It was found that the recording medium and image recording device of Example 25 could achieve high contrast with low voltage, i.e., 100V, and were extremely effective.

[246-2]

(Comparative Example 7)

A rewritable recording medium of Comparative Example 7 was produced in the same manner as in Example 24, provided that the thermoreversible gelling agent was not added.

-Image Quality-

The image recording device was set so that the electric field applying unit provided at the surface side of the recording medium of Comparative Example 7 was to be 50 V, and the electric field applying unit provided at the back surface side was to be 0 V, and an entire surface solid image pattern was input in the heating unit composed of the thermal head. In this state, printing was performed on the recording medium. As a result, the electric field of +50 V was applied to the entire surface of the image recording layer through the electrode of the recording medium, and by heating the entire surface of the recording medium, the white particles were migrated to the surface side (the black particles were migrated to the back surface side), to thereby record a white solid image (erase the image) on the entire surface of the recording medium. The density of the recording medium was measured by means of the portable spectrophotometer (X-RITE™ 939 manufactured by X-Rite, Inc.). As a result, the density thereof was 0.20.

Next, the image recording device was set so that the electric field applying unit provided at the surface side of the recording medium was to be 0 V, and the electric field applying unit provided at the back surface side was to be 50

V, and a checker pattern was input in the heating unit composed of the thermal head. In this state, printing was performed on the recording medium. As a result, the electric field of -50 V was applied to the entire surface of the image recording layer through the electrode of the recording medium. In addition, only the checker pattern area of the recording medium was heated. As a result, the entire surface was turned in black and the checker pattern was not recorded. The density of the black area was 1.22.

-Rewritability-

In the same manner as the above, characters were repeatedly recorded 30 times on the recording medium of Comparative Example 7 by the thermal head by carrying out the image erasing process and image recording process as one set. As a result, no character was printed, and a white solid image was recorded on the entire surface during image erasing, and a solid black image was recorded on the entire surface during image recording.

-Image Retentiveness-

After turning the color of the recording medium of Comparative Example 7 into black in the same manner as in the above, the recording medium was brought into contact with a finger, a metal, and an electrostatically-charged object. As a result, a slight change was observed in image quality and image density.

Moreover, this recording medium was left to stand for 2 months at 23°C and 55%RH. Thereafter, the recording medium was subjected to the measurement of the density by means of the portable spectrophotometer (X-RITE™ 939 manufactured by X-Rite, Inc.). The recording medium had the density of 0.41 in the white area, and the density of 0.78 in the black area, and image retentiveness was low. hereafter, the recording medium was brought into contact with an electrostatically-charged object. As a result, no change was observed in image quality and image density, but a noise appeared on the image, as the recording medium was bent. Moreover, the recording medium after being stored for 2 months was again subjected to the image easing process and image recording process. As a result, a white solid image and a black solid image were recorded again.

(Comparative Example 8)

A rewritable recording medium of Comparative Example 8 was produced in the same manner as in Example 24, provided that the dispersion medium was changed to 1,1,1,2-tetrafluoro-2,2-dibromoethane (boiling point: 46.5°C).

-Image Quality-

The image recording device was set so that the electric field applying unit provided at the surface side of the recording medium of Comparative Example 8 was to be 40 V, and the electric field applying unit provided at the back surface side was to be 0 V, and an entire surface solid image pattern was input in the heating unit composed of the thermal head. In this state, printing was performed on the recording medium. As a result, the electric field of +40 V was applied to the entire surface of the image recording layer through the electrode of the recording medium, and by heating the entire surface of the recording medium, the white particles were migrated to the surface side (the black particles were migrated to the back surface side), to thereby record a white solid image (erase the image) on the entire surface of the recording medium. The density of the recording medium was measured by means of the portable spectrophotometer (X-RITE™ 939 manufactured by X-Rite, Inc.). As a result, the density thereof was 0.30.

Next, the image recording device was set so that the electric field applying unit provided at the surface side of the recording medium was to be 0 V, and the electric field applying unit provided at the back surface side was to be 40 V, and a checker pattern was input in the heating unit composed of the thermal head. In this state, printing was performed on the recording medium. As a result, the electric field of -40 V was applied to the entire surface of the image recording layer through the electrode of the recording medium. In addition, only the checker pattern area of the recording medium was heated. As a result, it was confirmed that the black image pattern with the white background was recorded. The density of the black area was 0.72.

-Rewritability-

In the same manner as the above, characters were repeatedly recorded 30 times on the recording medium of Comparative Example 8 by the thermal head by carrying out the image erasing process and image recording process as one set. As a result, it was possible to record and erase characters a few times, but the contrast decreased as the number of rewriting increased. Eventually, the recording medium could not be rewritten.

-Image Retentiveness-

After recording an image on the recording medium of Comparative Example 8 in the same manner as the above, the recording medium was brought into contact with a finger, metal, and an electrostatically-charged object. As a result, no change was observed in image quality and image density. However, the image could not be rewritten even when an image erasing process and image recording process were again performed on the recording medium.

It was clear from the results above that the recording medium of the present invention gave high contrast, had excellent image quality, and also had excellent rewritability (tolerance of repetitive use) and image retentiveness. As the thermoreversible gelling agent for use in the present invention had very high response to gelation or solation temperature, it was possible to perform printing by the thermal head, and high image quality could be achieved. The recording medium of the present invention can be used not only in an image forming system using heat with a thermal head, but also in an image forming system using an electric field. Particularly, in the image forming system using heat, an expensive pixel electrode is not required in the recording medium, and a complicated and expensive electric field applying unit is not required in the image recording device. Therefore, the image forming system using heat is effective in cost saving, and reducing a weight and size of the device.

Moreover, the thermoreversible gelling agent for use in the present invention can directly convert the dispersion medium, which is suitably for dispersing electrophoretic particles or magnetophoretic particles therein, into sol or gel, and therefore high dispersibility of the particles can be maintained when the dispersion medium is turned into a gel. When the electrophoretic particles or magnetophoretic particles are aggregated, electrophoresis thereof is impaired, and responsiveness thereof to heat become low, which are factors for largely deteriorating resistance to repetitive use, as well as initial image properties. The recording medium of the present invention has an effect of enhancing image retentiveness utilizing sol-gel transition of the dispersion medium, and also can cause the sol-gel transition thereof while aggregation of the particles are further prevented and high dispersibility thereof are maintained by using a most suitable dispersion medium. Accordingly, it was considered that the recording medium of the present invention could attain high effects in initial image properties and resistance to repetitive use.

Moreover, the resistance of the recording medium of the present invention to repetitive use could be improved by using the dispersion medium having a boiling point of 50°C or higher. The recording medium of the present invention is heated every time an image is recorded on or erased from the recording medium. Therefore, the recording medium cannot be rewritten, if the dispersion medium is easily vaporized, and the service life of the recording medium is ended. It has been found out that an effect of improving resistance to repetitive use can be significantly improved in the present invention by using the dispersion medium having a boiling point of 50°C or higher.

Furthermore, the recording medium of the present invention can have a structure where electric conductive layers or electric conductive bases are provided above and below the image recording layer, and the electric conductive layers or electric conductive bases are electrically connected with an external electrode of the recording medium. By electrically connecting the recording medium to the electric field applying unit of a printer, an image of high contrast can be attained with extremely low driving voltage, and initial image properties or resistance to repetitive use can be further improved. It is considered that these effects can be attained because it is possible to apply an electric field directly to the image recording layer. Moreover, the recording medium and image recording device are extremely effective for improving resistance of the recording medium to repetitive use. Even when the base is electrically charged by repeating the printing process, it does not affect the image recording layer. Therefore, a high quality image can be repeatedly and stably output.

The embodiments of the present invention are, as defined in the claims.

Reference Signs List

1 first base
2 second base
3 dispersion medium
4 white electrophoretic particles
5 black electrophoretic particles
6 microcapsules
7 image recording layer
8 cell
9 sealant
10 binder resin
11 first electric conductive layer

12 second electric conductive layer
13 first electrode
14 second electrode
15 electric conductive base
30 recording medium of the present invention
31 heat source
32 heat roller
33 pressure roller
34 high speed response thermistor
35 thermostat
36 temperature sensor
37 roller
38 roller
39 belt-shaped film roll
40 image bearing member
41 charger
42 exposing unit
43 diselectrification unit
44 counter electrode
45 ion irradiation head
46 image erasing unit
47 thermal head
48 electric field applying unit
49 electric field applying unit
50 platen
51 electric field and/or magnetic field applying unit
52 electric field and/or magnetic field applying unit

## Claims

**1.** A recording medium comprising:

a first base (1);
a second base (2); and
an image recording layer (7) disposed between the first base (1) and the second base (2),

wherein the image recording layer (7) has insulating properties, and the image recording layer (7) contains a plurality of microcapsules (6) or cells (8), each of which encapsulates:

electrophoretic particles (4, 5), or magnetophoretic particles, or a combination thereof;
a dispersion medium (3) having a boiling point of 50°C or higher; and
a thermoreversible gelling agent containing an amide bond (-NHCO-) in a molecule thereof,

wherein the thermoreversible gelling agent contains a C8-C20 alkyl group in a molecule thereof.

**2.** The recording medium according to claim 1, wherein the thermoreversible gelling agent further contains an urethane bond (-NHCOO-) in a molecule thereof.

**3.** The recording medium according to claim 1 or 2, wherein the thermoreversible gelling agent further contains a siloxane bond in a molecule thereof.

**4.** The recording medium according to any one of claims 1 to 3, wherein the dispersion medium (3) is an aliphatic hydrocarbon-based solvent, or silicone oil.

**5.** The recording medium according to any one of claims 1 to 4, wherein solation temperature of the dispersion medium (3) containing the thermoreversible gelling agent is higher than gelation temperature thereof.

**6.** The recording medium according to any one of claims 1 to 5, wherein either the first base (1) or the second base (2) is an electric conductive base (15).

**7.** The recording medium according to any one of claims 1 to 6, further comprising:

an electric conductive layer (11, 12) provided between the first base (1) and the image recording layer (7), or between the second base (2) and the image recording layer (7); and
an electrode (13, 14) provided in an external part of the recording medium,

wherein the electric conductive layer (11, 12) and the electrode (13, 14) are electrically connected.

**8.** The recording medium according to any one of claims 1 to 5, further comprising:

a first electric conductive layer (11) between the first base (1) and the image recording layer (7); and
a first electrode (13) provided in an external part of the recording medium,

wherein the second base (2) is an electric conductive base (15), and the first electric conductive layer (11) and the first electrode (13) are electrically connected.

**9.** The recording medium according to any one of claims 1 to 5, further comprising:

a first electric conductive layer (11) between the first base (1) and the image recording layer (7);
a second electric conductive layer (12) between the second base (2) and the image recording layer (7); and
a first electrode (13) and a second electrode (14) provided in an external part of the recording medium,

wherein the first electric conductive layer (11) and the first electrode (13) are electrically connected, and the second electric conductive layer (12) and the second electrode (14) are electrically connected.

**10.** Combination of an image recording medium as defined in any of claims 1 to 9 and an image recording device, comprising:

a heating unit; and
an electric field or magnetic field applying unit (48, 49, 51),

wherein the image recording device is configured to record an image on the recording medium according any one of claims 1 to 9, the heating unit is configured to heat the image recording layer (7), and the electric field or magnetic field applying unit (48, 49, 51, 52) is configured to apply an electric field or magnetic field to the image recording layer (7).

**11.** The combination according to claim 10, wherein the heating unit is a thermal head (47).

**12.** The combination according to claim 10 or 11, wherein the electric field applying unit (47, 48) is electrically connected to the electric conductive base (15), or the electrode (13, 14), or both formed in the recording medium according to any one of claims 6 to 9, to thereby generate an electric field in the image recording layer.

**13.** An image recording set, comprising:

the recording medium according to any one of claims 1 to 9; and
an image recording device,

wherein the image recording device contains:

a heating unit configured to heat the recording medium; and
an electric field or magnetic field applying unit (48, 49, 51, 52) configured to apply electric field or magnetic field to the recording medium.

**14.** The image recording set according to claim 13, wherein the image recording device further contains an image erasing unit (46) configured to heat and apply electric field or magnetic field to the recording medium to erase an

image recorded in the recording medium.

## Patentansprüche

1. Aufzeichnungsmedium, umfassend:

eine erste Basis (1);
eine zweite Basis (2); und
eine Bildaufzeichnungsschicht (7), die zwischen der ersten Basis (1) und der zweiten Basis (2) angeordnet ist,

worin die Bildaufzeichnungsschicht (7) isolierende Eigenschaften hat und die Bildaufzeichnungsschicht (7) eine Vielzahl von Mikrokapseln (6) oder Zellen (8) enthält, deren jede Folgendes einkapselt:

elektrophoretische Partikel (4, 5) oder magnetophoretische Partikel oder eine Kombination daraus;
ein Dispersionsmedium (3) mit einem Siedepunkt von 50 °C oder höher; und
ein thermoreversibles Geliermittel, das in einem Molekül desselben eine Amidbindung (-NHCO-) enthält;

worin das thermoreversible Geliermittel in einem Molekül desselben eine C8- bis C20-Alkylgruppe enthält.

2. Aufzeichnungsmedium nach Anspruch 1, worin das thermoreversible Geliermittel ferner in einem Molekül desselben eine Urethanbindung (-NHCOO-) enthält.

3. Aufzeichnungsmedium nach Anspruch 1 oder 2, worin das thermoreversible Geliermittel ferner in einem Molekül desselben eine Siloxanbindung enthält.

4. Aufzeichnungsmedium nach einem der Ansprüche 1 bis 3, worin das Dispersionsmedium (3) ein auf aliphatischen Kohlenwasserstoffen basierendes Lösungsmittel oder Silikonöl ist.

5. Aufzeichnungsmedium nach einem der Ansprüche 1 bis 4, worin die Gel-Sol-Übergangstemperatur des Dispersionsmediums (3), welches das thermoreversible Geliermittel enthält, höher als dessen Sol-Gel-Übergangstemperatur ist.

6. Aufzeichnungsmedium nach einem der Ansprüche 1 bis 5, worin entweder die erste Basis (1) oder die zweite Basis (2) eine elektrisch leitfähige Basis (15) ist.

7. Aufzeichnungsmedium nach einem der Ansprüche 1 bis 6, ferner umfassend:

eine elektrisch leitfähige Schicht (11, 12), die zwischen der ersten Basis (1) und der Bildaufzeichnungsschicht (7) oder zwischen der zweiten Basis (2) und der Bildaufzeichnungsschicht (7) bereitgestellt ist; und
eine Elektrode (13, 14), die in einem äußeren Teil des Aufzeichnungsmediums bereitgestellt ist,

worin die elektrisch leitfähige Schicht (11, 12) und die Elektrode (13, 14) elektrisch verbunden sind.

8. Aufzeichnungsmedium nach einem der Ansprüche 1 bis 5, ferner umfassend:

eine erste elektrisch leitfähige Schicht (11), die zwischen der ersten Basis (1) und der Bildaufzeichnungsschicht (7) angeordnet ist; und
eine erste Elektrode (13), die in einem äußeren Teil des Aufzeichnungsmediums bereitgestellt ist,

worin die zweite Basis (2) eine elektrisch leitfähige Basis (15) ist und die erste elektrisch leitfähige Schicht (11) und die erste Elektrode (13) elektrisch verbunden sind.

9. Aufzeichnungsmedium nach einem der Ansprüche 1 bis 5, ferner umfassend:

eine erste elektrisch leitfähige Schicht (11) zwischen der ersten Basis (1) und der Bildaufzeichnungsschicht (7);
eine zweite elektrisch leitfähige Schicht (12) zwischen der zweiten Basis (2) und der Bildaufzeichnungsschicht (7); und

eine erste Elektrode (13) und eine zweite Elektrode (14), die in einem äußeren Teil des Aufzeichnungsmediums bereitgestellt sind,

worin die erste elektrisch leitfähige Schicht (11) und die erste Elektrode (13) elektrisch verbunden sind und die zweite elektrisch leitfähige Schicht (12) und die zweite Elektrode (14) elektrisch verbunden sind.

**10.** Kombination aus einem Aufzeichnungsmedium, wie in einem der Ansprüche 1 bis 9 definiert, und einer Bildaufzeichnungsvorrichtung, umfassend:

eine Erwärmungseinheit; und
eine Einheit zum Anlegen eines elektrischen Feldes oder magnetischen Feldes (48, 49, 51),

worin die Bildaufzeichnungsvorrichtung dafür konfiguriert ist, ein Bild auf dem Aufzeichnungsmedium nach einem der Ansprüche 1 bis 9 aufzuzeichnen, die Erwärmungseinheit dafür konfiguriert ist, die Bildaufzeichnungsschicht (7) zu erwärmen, und die Einheit zum Anlegen eines elektrischen Feldes oder magnetischen Feldes (48, 49, 51, 52) dafür konfiguriert ist, ein elektrisches Feld oder magnetisches Feld an die Bildaufzeichnungsschicht (7) anzulegen.

**11.** Kombination nach Anspruch 10, worin die Erwärmungseinheit ein Thermokopf (47) ist.

**12.** Kombination nach Anspruch 10 oder 11, worin die Einheit zum Anlegen eines elektrischen Feldes (47, 48) mit der elektrisch leitfähigen Basis (15) oder der Elektrode (13, 14) oder beiden, die im Aufzeichnungsmedium nach einem der Ansprüche 6 bis 9 ausgebildet sind, elektrisch verbunden ist, um dadurch in der Bildaufzeichnungsschicht ein elektrisches Feld zu erzeugen.

**13.** Bildaufzeichnungsanlage, umfassend:

das Aufzeichnungsmedium nach einem der Ansprüche 1 bis 9; und
eine Bildaufzeichnungsvorrichtung,

worin die Bildaufzeichnungsvorrichtung umfasst:

eine Erwärmungseinheit, die dafür konfiguriert ist, das Aufzeichnungsmedium zu erwärmen; und
eine Einheit zum Anlegen eines elektrischen Feldes oder magnetischen Feldes (48, 49, 51, 52), die dafür konfiguriert ist, ein elektrisches Feld oder magnetisches Feld an das Aufzeichnungsmedium anzulegen.

**14.** Bildaufzeichnungsanlage nach Anspruch 13, worin die Bildaufzeichnungsvorrichtung ferner eine Bildlöscheinheit (46) umfasst, die dafür konfiguriert ist, das Aufzeichnungsmedium zu erwärmen und ein elektrisches Feld oder magnetisches Feld daran anzulegen, um ein in dem Aufzeichnungsmedium aufgezeichnetes Bild zu löschen.

## Revendications

**1.** Support d'enregistrement comprenant :

une première base (1) ;
une deuxième base (2) ; et
une couche d'enregistrement d'image (7) agencée entre la première base (1) et la deuxième base (2),

dans lequel la couche d'enregistrement d'image (7) présente des propriétés d'isolation, et la couche d'enregistrement d'image (7) contient une pluralité de microcapsules (6) ou de cellules (8), chacune d'entre elles encapsulant :

des particules électrophorétiques (4, 5), ou des particules magnétophorétiques, ou une combinaison de celles-ci ;
un milieu de dispersion (3) présentant un point d'ébullition supérieur ou égal à 50°C ; et
un agent gélifiant thermoréversible contenant une liaison amide (-NHCO-) dans une molécule de celui-ci,

dans lequel l'agent gélifiant thermoréversible contient un groupe alkyle en C8-C20 dans une molécule de celui-ci.

2. Support d'enregistrement selon la revendication 1, dans lequel l'agent gélifiant thermoréversible contient en outre une liaison uréthane (-NHCOO-) dans une molécule de celui-ci.

3. Support d'enregistrement selon la revendication 1 ou 2, dans lequel l'agent gélifiant thermoréversible contient en outre une liaison siloxane dans une molécule de celui-ci.

4. Support d'enregistrement selon l'une quelconque des revendications 1 à 3, dans lequel le milieu de dispersion (3) est un solvant à base d'hydrocarbure aliphatique, ou une huile de silicone.

5. Support d'enregistrement selon l'une quelconque des revendications 1 à 4, dans lequel la température de solation du milieu de dispersion (3) contenant l'agent gélifiant thermoréversible est supérieure à la température de gélification de celui-ci.

6. Support d'enregistrement selon l'une quelconque des revendications 1 à 5, dans lequel soit la première base (1), soit la deuxième base (2) est une base électriquement conductrice (15).

7. Support d'enregistrement selon l'une quelconque des revendications 1 à 6, comprenant en outre :

une couche électriquement conductrice (11, 12) fournie entre la première base (1) et la couche d'enregistrement d'image (7), ou entre la deuxième base (2) et la couche d'enregistrement d'image (7) ; et
une électrode (13, 14) fournie dans une partie externe du support d'enregistrement,

dans lequel la couche électriquement conductrice (11, 12) et l'électrode (13, 14) sont électriquement raccordées.

8. Support d'enregistrement selon l'une quelconque des revendications 1 à 5, comprenant en outre :

une première couche électriquement conductrice (11) entre la première base (1) et la couche d'enregistrement d'image (7) ; et
une première électrode (13) fournie dans une partie externe du support d'enregistrement,

dans lequel la deuxième base (2) est une base électriquement conductrice (15), et la première couche électriquement conductrice (11) et la première électrode (13) sont électriquement raccordées.

9. Support d'enregistrement selon l'une quelconque des revendications 1 à 5, comprenant en outre :

une première couche électriquement conductrice (11) entre la première base (1) et la couche d'enregistrement d'image (7) ;
une deuxième couche électriquement conductrice (12) entre la deuxième base (2) et la couche d'enregistrement d'image (7) ;
une première électrode (13) et une deuxième électrode (14) fournies dans une partie externe du support d'enregistrement,

dans lequel la première couche électriquement conductrice (11) et la première électrode (13) sont électriquement raccordées, et la deuxième couche électriquement conductrice (12) et la deuxième électrode (14) sont électriquement raccordées.

10. Combinaison d'un support d'enregistrement d'image selon l'une quelconque des revendications 1 à 9 et d'un dispositif d'enregistrement d'image, comprenant :

une unité de chauffage ; et
une unité d'application de champ électrique ou de champ magnétique (48, 49, 51),

dans lequel le dispositif d'enregistrement d'image est configuré pour enregistrer une image sur le support d'enregistrement selon l'une quelconque des revendications 1 à 9, l'unité de chauffage est configurée pour chauffer la couche d'enregistrement d'image (7), et l'unité d'application de champ électrique ou de champ magnétique (48, 49, 51, 52) est configurée pour appliquer un champ électrique ou un champ magnétique à la couche d'enregistrement d'image (7).

**11.** Combinaison selon la revendication 10, dans laquelle l'unité de chauffage est une tête thermique (47).

**12.** Combinaison selon la revendication 10 ou 11, dans laquelle l'unité d'application de champ électrique (47, 48) est électriquement raccordée à la base électriquement conductrice (15), ou à l'électrode (13, 14), ou aux deux formées dans le support d'enregistrement selon l'une quelconque des revendications 6 à 9, afin de générer ainsi un champ électrique dans la couche d'enregistrement d'image.

**13.** Ensemble d'enregistrement d'image, comprenant :

le support d'enregistrement selon l'une quelconque des revendications 1 à 9 ; et
un dispositif d'enregistrement d'image,

dans lequel le dispositif d'enregistrement d'image contient :

une unité de chauffage configurée pour chauffer le support d'enregistrement ; et
une unité d'application d'un champ électrique ou d'un champ magnétique (48, 49, 51, 52) configurée pour appliquer un champ électrique ou un champ magnétique au support d'enregistrement.

**14.** Ensemble d'enregistrement d'image selon la revendication 13, dans lequel le dispositif d'enregistrement d'image contient en outre une unité d'effacement d'image (46) configurée pour chauffer et appliquer un champ électrique ou un champ magnétique au support d'enregistrement afin d'effacer une image enregistrée dans le support d'enregistrement.

FIG. 1A

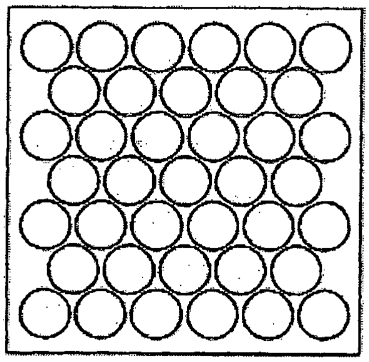

FIG. 1B

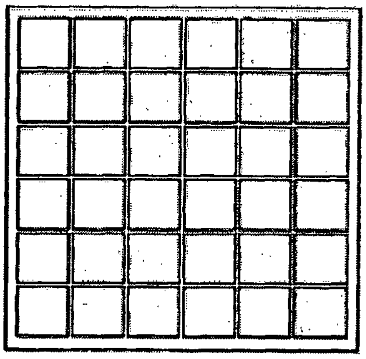

FIG. 1C

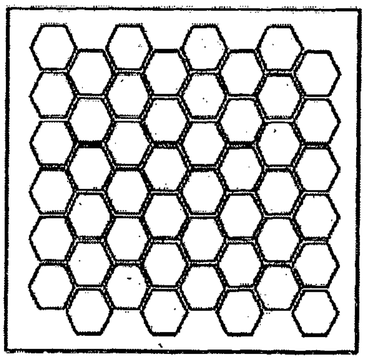

FIG. 2

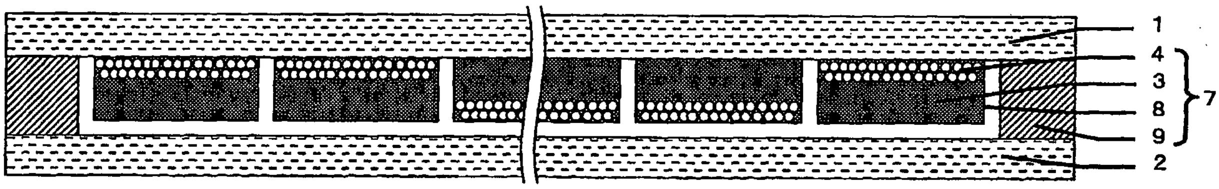

FIG. 3

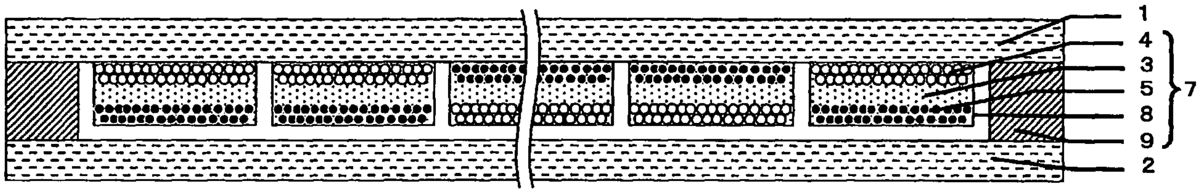


FIG. 4

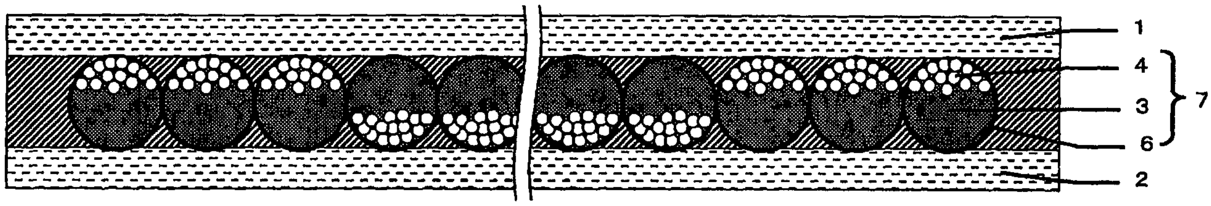


FIG. 5

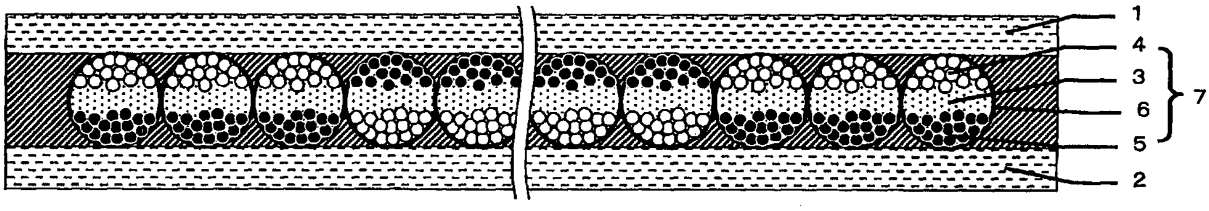


FIG. 6

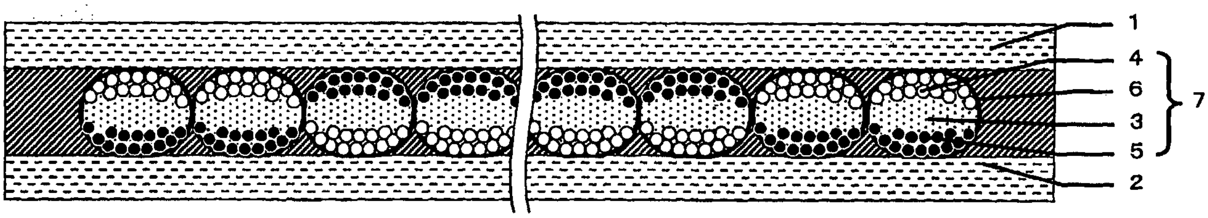


FIG. 7

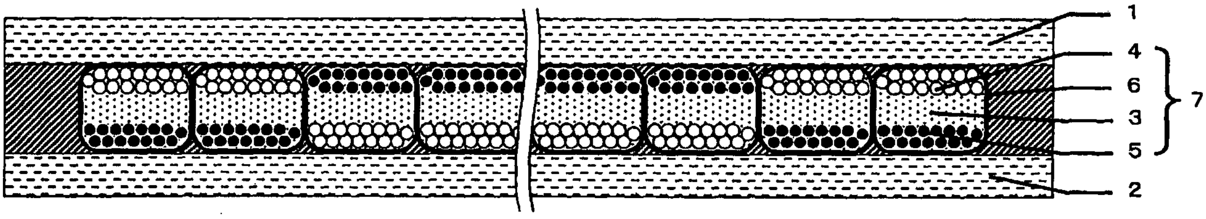

FIG. 8

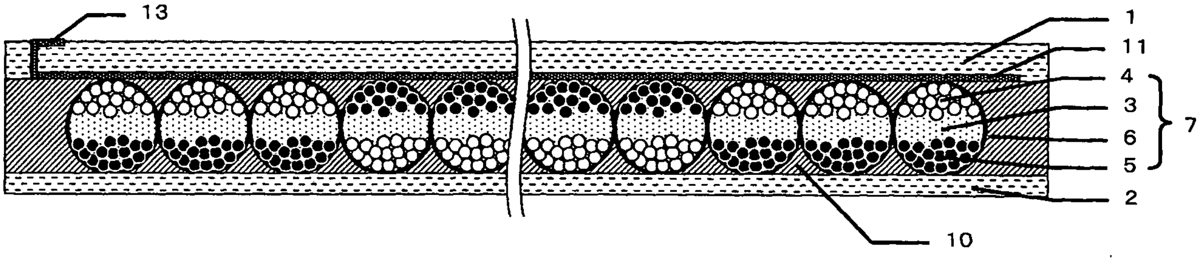


FIG. 9

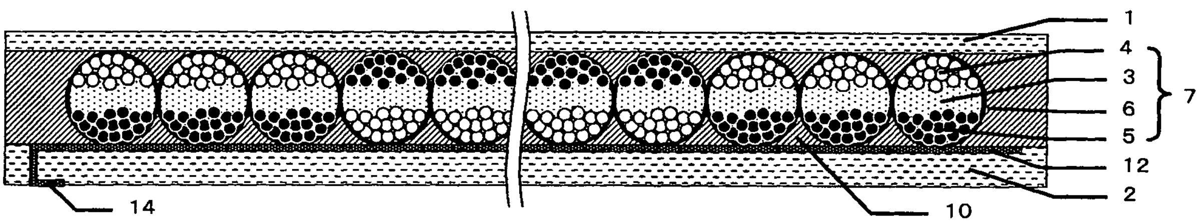


FIG. 10

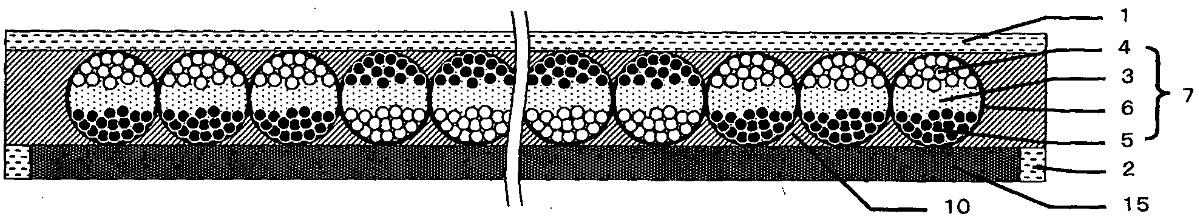


FIG. 11

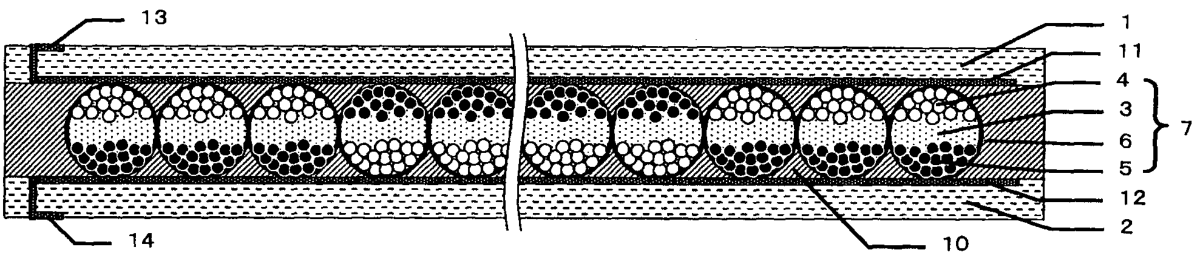

FIG. 12

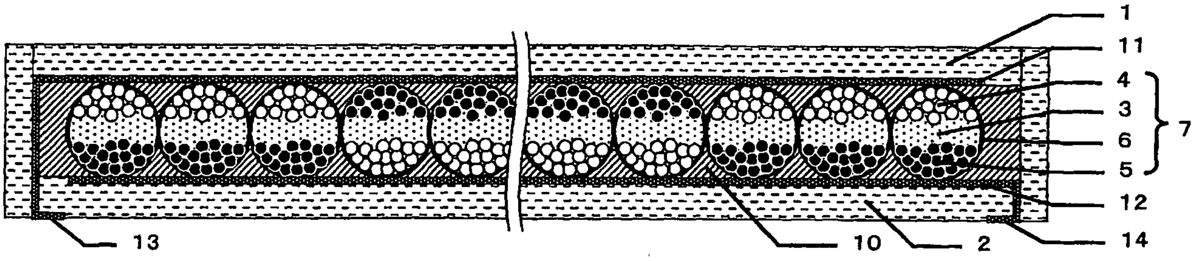


FIG. 13

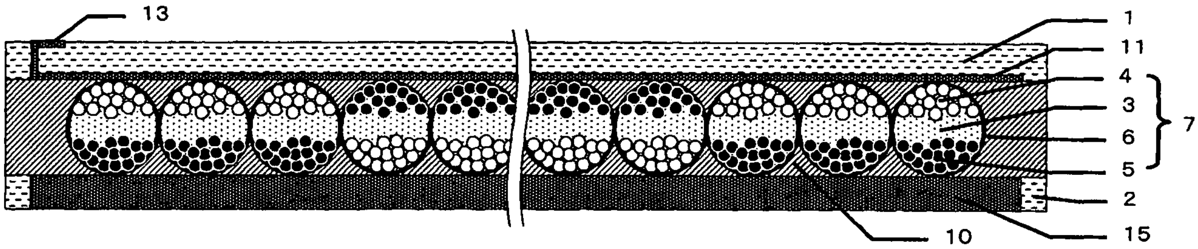


FIG. 14

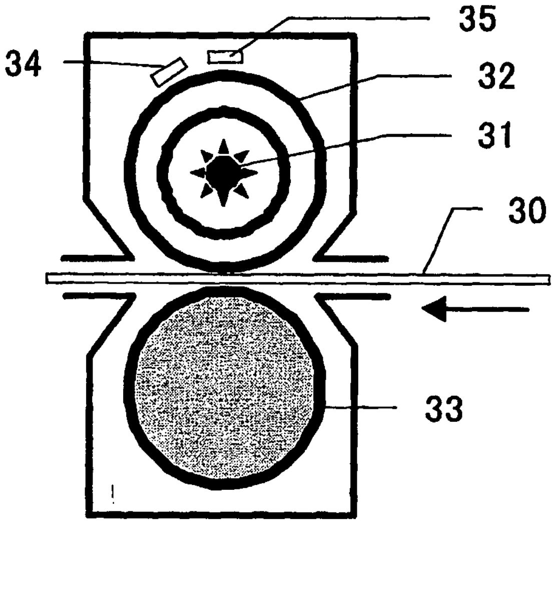

FIG. 15

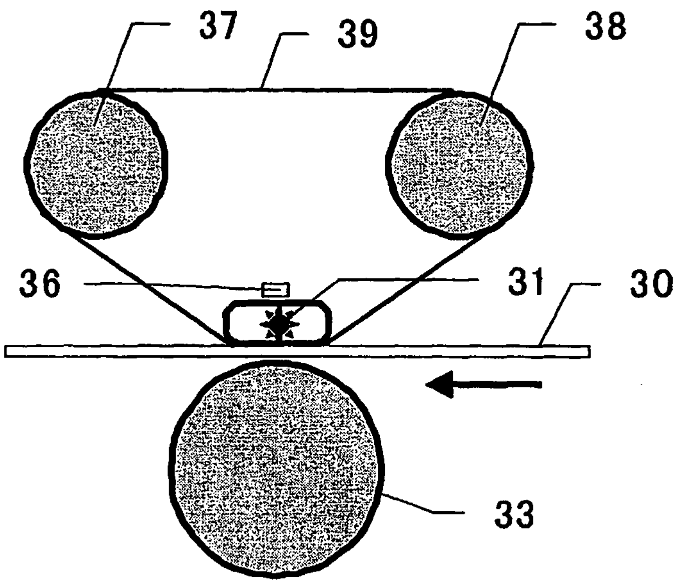


FIG. 16

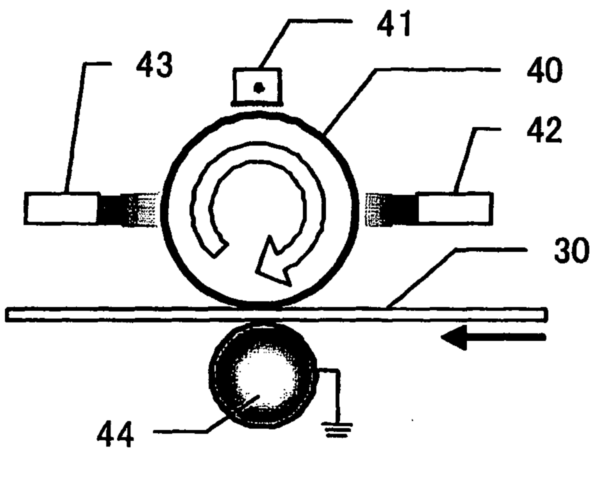

FIG. 17

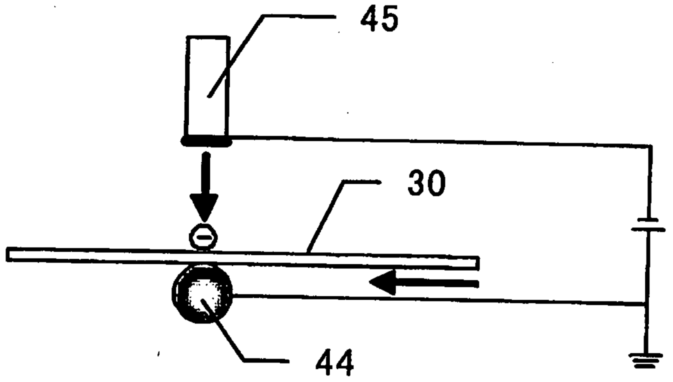


FIG. 18

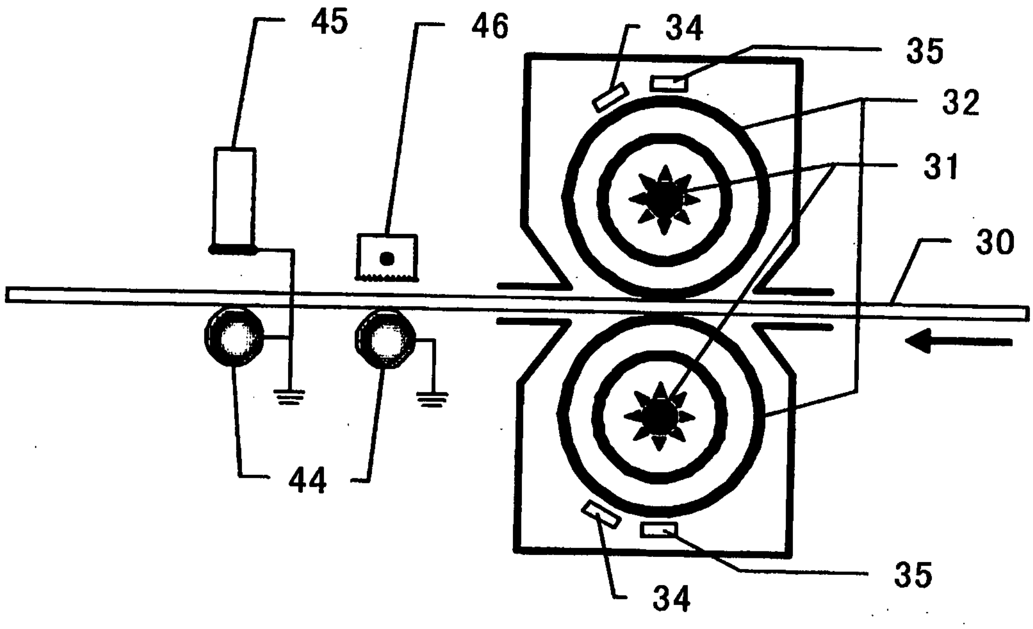

FIG. 19

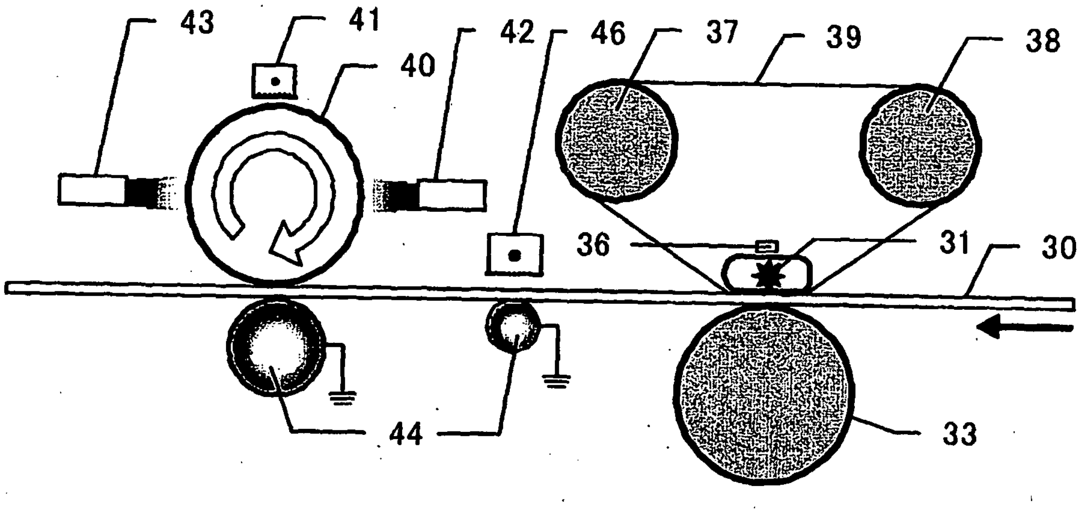


FIG. 20

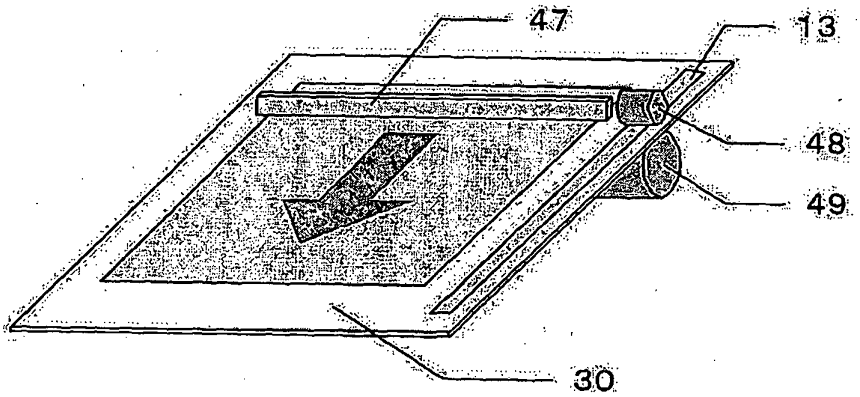


FIG. 21

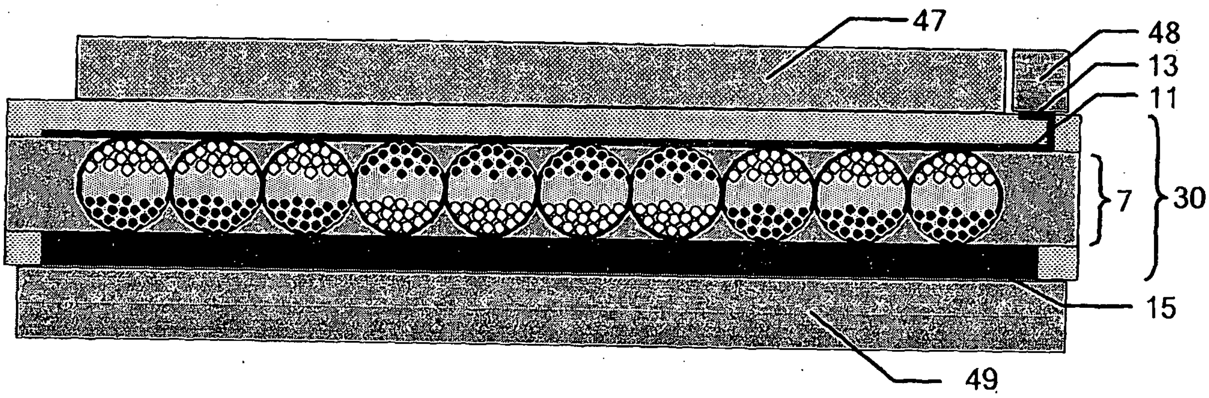

FIG. 22

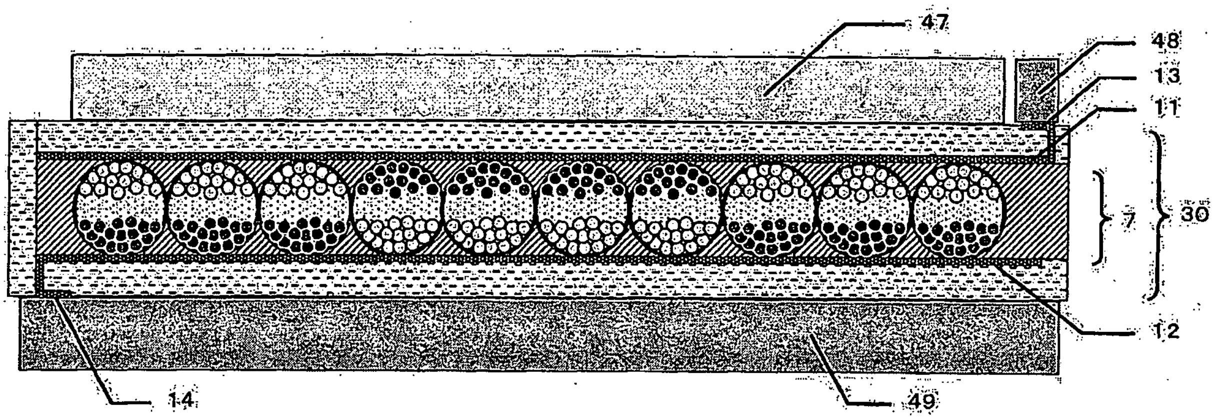


FIG. 23

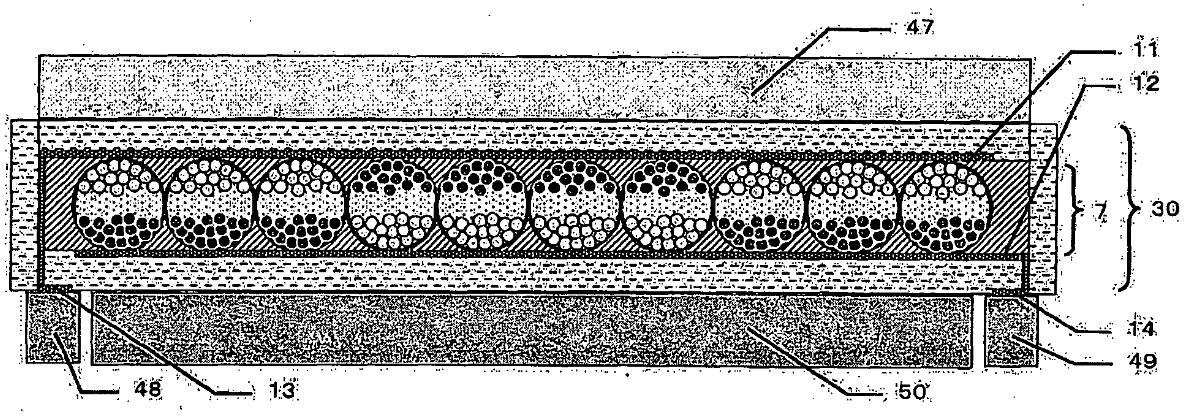

FIG. 24

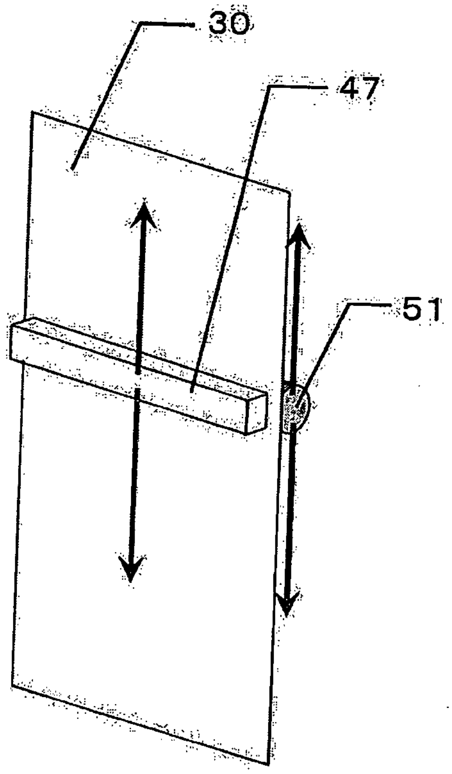

FIG. 25

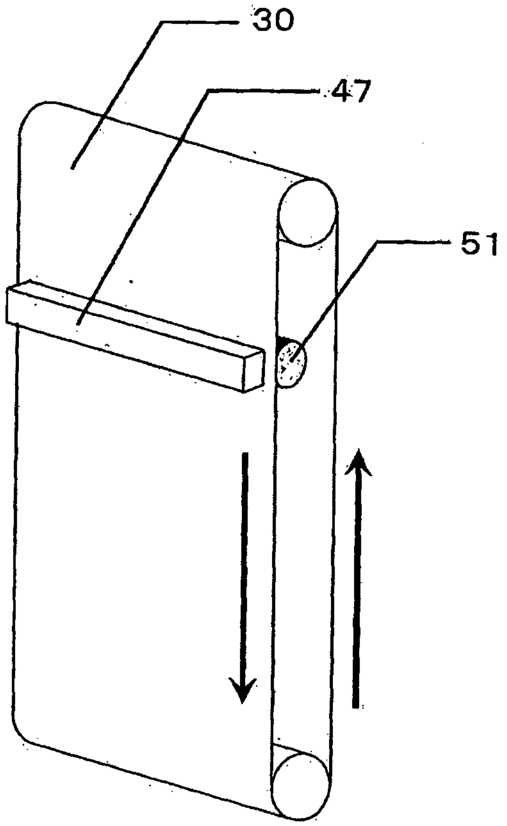


FIG. 26

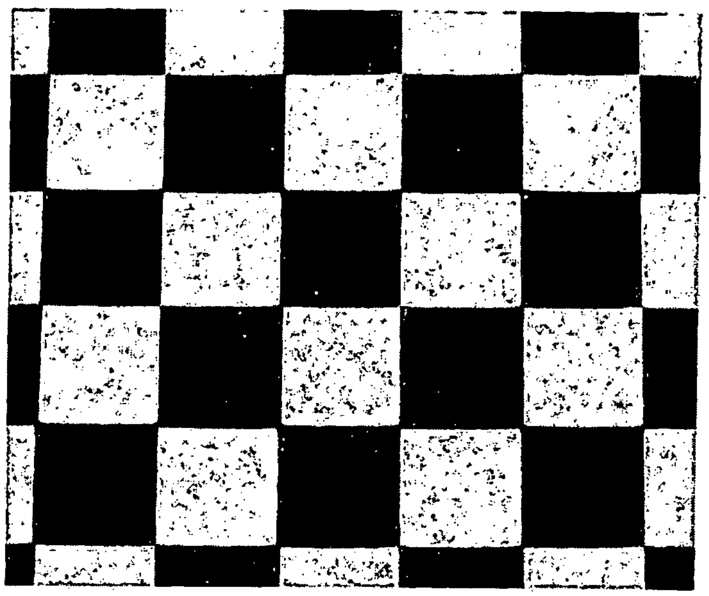

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 50015115 B
- JP 2551783 B
- JP 4410135 B
- JP 3680996 B
- JP 2007286124 A
- JP 2010002933 A
- JP 4168556 B
- JP 2001301325 A
- JP 4114374 B
- JP 2003091022 A
- JP 2007140367 A
- JP 2196227 A
- JP 2003149691 A
- JP 2007011342 A
- JP 3725092 B